# EUROPÄISCHE PATENTSCHRIFT

(11) **EP 1 957 610 B1**
(45) Veröffentlichungstag und Bekanntmachung des Hinweises auf die Patenterteilung: **02.03.2011**
(21) Anmeldenummer: 06829401.6
(22) Anmeldetag: 08.12.2006
(51) Int. Cl.: C09K 19/30, C09K 19/42

(54) **FLÜSSIGKRISTALLINES MEDIUM**
LIQUID-CRYSTALLINE MEDIUM
MILIEU CRISTALLIN LIQUIDE

(30) Priorität: 08.12.2005 DE 102005058541
(43) Veröffentlichungstag der Anmeldung: 20.08.2008
(73) Patentinhaber: Merck Patent GmbH, 64293 Darmstadt (DE)
(72) Erfinder: KLASEN-MEMMER, Melanie, 67259 Heuchelheim (DE); REIFFENRATH, Volker, 64380 Roßdorf (DE)
(86) Internationale Anmeldenummer: PCT/EP2006/011789
(87) Internationale Veröffentlichungsnummer: WO 2007/065693

(56) Entgegenhaltungen:
- EP-A1- 0 747 336
- EP-A1- 0 949 232
- WO-A-95/30723
- WO-A-98/13321
- DE-A1-102004 003 508

## Beschreibung

Die Erfindung betrifft ein flüssigkristallines Medium auf der Basis eines Gemisches von polaren Verbindungen mit einer negativen dielektrischen Anisotropie, welches mindestens eine Verbindung der Formel I, 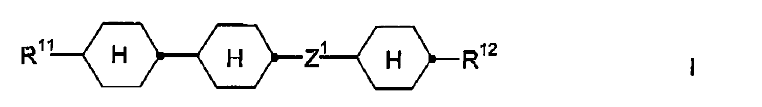 worin
- R¹¹ und R¹²: jeweils unabhängig voneinander einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 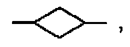 -C≡C-, -OC-O- oder -O-CO- so ersetzt sein können, dass O-Atome nicht direkt miteinander verknüpft sind, mit der Maßgabe, dass mindestens einer der Reste R¹¹ und R¹² Alkenyl mit 2 bis 6 C-Atomen bedeutet, und
- Z¹: -CH=CH- oder eine Einfachbindung
bedeuten,
und
eine oder mehrere Verbindungen der Formeln IIA und/oder IIB, 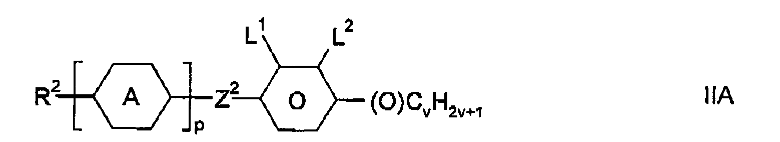 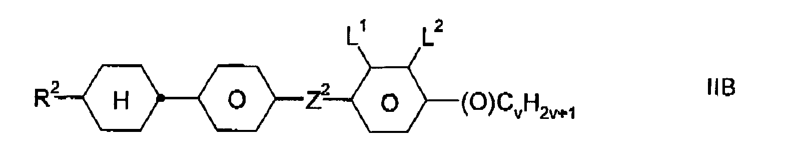 worin 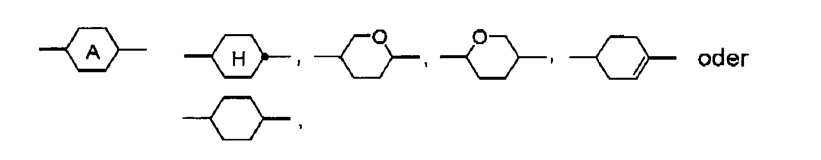
- R²: einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 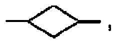 -C≡C-, -OC-O- oder -O-CO- so ersetzt sein können, dass O-Atome nicht direkt miteinander verknüpft sind,
- Z²: Einfachbindung, -CH=CH- oder -CH₂CH₂-,
- p: 1 oder 2, und
- L¹ und L²: jeweils unabhängig voneinander F, Cl, OCF₃, CF₃, CH₃, CH₂F, CHF₂,
- v: 1 bis 6
bedeuten,
enthält.

Derartige Medien sind insbesondere für elektrooptische Anzeigen mit einer Aktivmatrix-Addressierung basierend auf dem ECB-Effekt sowie für IPS-Anzeigen (In plane switching) zu verwenden. Das erfindungsgemäße Medium besitzt eine negative dielektrische Anisotropie.

Der Einsatz von Verbindungen der Formel I in TN-TFT-Mischungen und STN-Mischungen, die eine positive dielektrischen Anisotropie aufweisen und keine Verbindungen der Formeln IIA und/oder IIB enthalten, ist beispielsweise aus der DE 10 2004 003508, WO 95/30723 A, EP 0 747 336 A1, WO 98/13321 A und EP 0 949232 A1 bekannt.

Anzeigen, die den ECB-Effekt verwenden haben sich als sogenannte VAN- (Vertically Aligned Nematic) Anzeigen in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch 1, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753) und PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763) neben ASV- (Avanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen und IPS- (In Plane Switching) Anzeigen (z.B.: Yeo, S.D., Vortrag 15.3: "A LC Display for the TV Application", SID 2004 International Symposium, Digest of Technical Papers, XXXV, Buch II, S. 758 & 759), neben den lange bekannten neben TN- (Twisted Nematic) Anzeigen, als eine der drei zur Zeit wichtigsten neueren Typen von Flüssigkristallanzeigen insbesondere für Femsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, lan, SIDSeminar 2004, Seminar M-7: "LCD-Tetevision", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten insbesondere beim Schalten von Graustufen immer noch ein noch nicht zufriedenstellend gelöstes Problem.

ECB-Anzeigen verwenden wie ASV-Anzeigen flüssigkristalline Medien mit negativer dielektrischer Anisotropie (Δε), wohingegen TN- und bislang alle gebräuchlichen IPS-Anzeigen flüssigkristalline Medien mit positiver dielektrischer Anisotropie verwenden.

In derartigen Flüssigkristallanzeigen werden die Flüssigkristalle als Dielektrika verwendet, deren optische Eigenschaften sich bei Anlegen einer elektrischen Spannung reversibel ändern.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner- wird von technisch verwendbaren FK-Phasen eine flüssigkristalline Mesophase in einem geeigneten Temperaturbereich und eine niedrige Viskosität gefordert.

Insbesondere müssen die Schaltzeiten der Flüssigkristallmedien in den Anzeigen verbessert, also verringert, werden. Dies ist besonders für Anzeigen für Femseh- oder Multi-Media Anwendungen wichtig. Zur Verbesserung der Schaltzeiten ist in der Vergangenheit wiederholt vorgeschlagen worden, die Rotationsviskosität der Flüssigkristallmedien (γ₁) zu optimieren, also Medien mit einer möglichst geringen Rötatiönsviskosität zu realisieren. Die dabei erzielten Ergebnisse sind jedoch nicht ausreichend für viele Anwendungen und lassen es daher wünschenswert erscheinen, weitere Optimierungsansätze aufzufinden.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Da bei Anzeigen im allgemeinen, also auch bei Anzeigen nach diesen erwähnten Effekten, die Betriebsspannung möglichst gering sein soll, werden Flüssigkristallmedien eingesetzt, die in der Regel überwiegend aus Flüssigkristallverbindungen zusammengesetzt sind, die alle das gleiche Vorzeichen der dielektrischen Anisotropie aufweisen und einen möglichst großen Betrag der dielektrischen Anisotropie haben. Es werden in der Regel allenfalls geringere Anteile an neutralen Verbindungen und möglichst keine Verbindungen dem Medium entgegengesetzten Vorzeichen der dielektrischen Anisotropie eingesetzt. Bei den Flüssigkristallmedien mit negativer dielektrischer Anisotropie für ECB-Anzeigen werden somit überwiegend Verbindungen mit negativer dielektrischer Anisotropie eingesetzt. Die eingesetzten Flüssigkristallmedien bestehen in der Regel überwiegend und meist sogar weitestgehend aus Flüssigkristallverbindungen mit negativer dielektrischer Anisotropie.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die bisher bekannten TFT-Anzeigen arbeiten üblicherweise als TN-Zellen mit gekreuzten Polaristoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfemseher) oder für hochinformative Displays in Automobil- oder Flugzeugbau. Neben Problemen hinsichtlich der Winketabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Der Erfindung liegt die Aufgabe zugrunde MFK-Anzeigen, nicht nur für Monitor- und TV-Anwendungen sondern auch für Mobiltelefone und Navigationssysteme, welche auf dem ECB- oder auf dem IPS-Effekt beruhen, bereitzustellen, die die oben angegebenen Nachteile nicht oder nur in geringerem, Maße und gleichzeitig sehr hohe spezifische Widerstände aufweisen. Insbesondere muss für Mobiltelefone und Navigationssysteme gewährleistet sein, dass diese auch bei extrem höhlen und extrem niedrigen Temperaturen arbeiten.

Überraschenderweise wurde nun gefunden, dass diese Aufgabe gelöst werden kann, wenn man in diesen Anzeigeelementen nematische Flüssigkristatimischungen verwendet, die mindestens eine Verbindung der Formel I und enthalten. Diese Flüssigkristallmischungen zeichnen sich durch kleine Werte für die Doppelbrechung (Δn) aus und sind daher u.a. hervorragend geeignet für Bildschirme von Fernsehgeräten, Computern, wie z.B. Notebooks oder Desktops, Schaltzentralen, aber auch von Glückspielgeräten, elektrooptischen Anzeigen, wie z.B. von Uhren, Taschenrechnem, elektronischen Taschenspielen, Schachcomputem, tragbaren Datenspeichern, wie PDAs (Personal Digital Assistants) oder von Mobiltelefonen und Navigationsgeräten.

Gegenstand der Erfindung ist somit ein flüssigkristallines Medium auf der Basis eines Gemisches von polaren Verbindungen mit einer negativen dielektrischen Anisotropie, welches mindestens eine Verbindung der Formel I und eine oder mehrere Verbindungen der Formeln IIA und/oder IIB 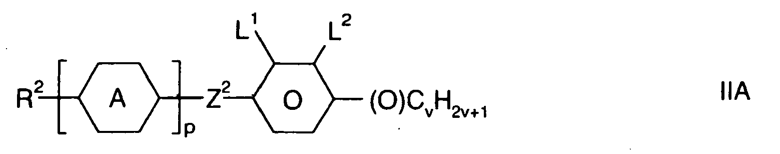 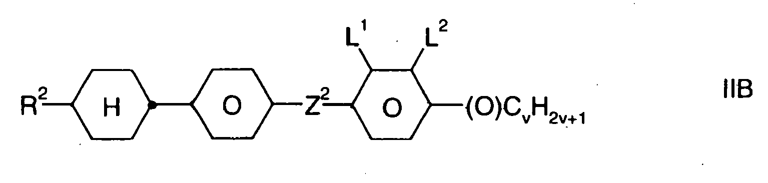 worin 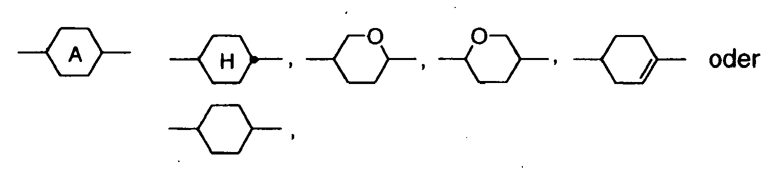
- R²: die Bedeutung von R¹¹ hat,
- Z²: Einfachbindung, -CH=CH- oder -CH₂CH₂-,
- p: 1 oder 2, und
- L¹ und L²: jeweils unabhängig voneinander F, Cl, OCF₃, CF₃, CH₃, CH₂F, CHF₂, vorzugsweise L¹ = L² = F,
- v: 1 bis 6
bedeutetund enthält.

Die erfindungsgemäßen Mischungen zeigen sehr breite nematische Phasenbereiche mit Klärpunkten ≥ 70 °C, sehr günstige Werte für die kapazitive Schwelle, relativ hohe Werte für die Holding Ratio und gleichzeitig sehr gute Tieftemperaturstabilitäten bei -30 °C und -40 °C. Weiterhin zeichnen sich die erfindungsgemäßen Mischungen aufgrund der niedrigen Δn-Werte durch niedrige Rotationsviskositäten γ₁ aus.

Einige bevorzugte Ausführungsformen der erfindungsgemäßen Mischungen werden im folgenden genannt:
a) R¹¹ in den Verbindungen der Formel I bedeutet vorzugsweise Alkyl oder Alkenyl mit bis zu 6 C-Atomen, insbesondere geradkettiges Alkyl, Vinyl, 1 E-Alkenyl oder 3-Alkenyl.
b) Falls R¹¹ und/oder R¹² Alkenyl bedeuten, können die Alkenylreste gleich oder verschieden sein. Falls R¹¹ und/oder R¹² einen Alkenylrest bedeuten, so ist er vorzugsweise CH₂=CH, CH₃-CH=CH, C₃H₇-CH=CH, CH₂=CH-C₂H₅ oder CH₃-CH=CH-C₂H₅.
c) Flüssigkristallines Medium, welches ein, zwei, drei, vier oder mehr, vorzugsweise ein, zwei oder drei, Verbindungen der Formel I enthält.
d) Flüssigkristallines Medium, wobei der Anteil an Verbindungen der Formel I im Gesamtgemisch mindestens 2 Gew.%, vorzugsweise mindestens 4 Gew.%, besonders bevorzugt 2-20 %, beträgt
e) Besonders bevorzugte Verbindungen der Formel IIA sind die Verbindungen der Formeln IIA-1 bis IIA-18, 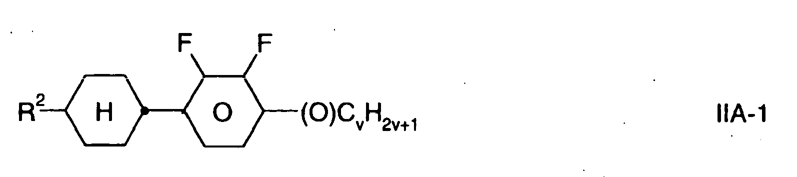 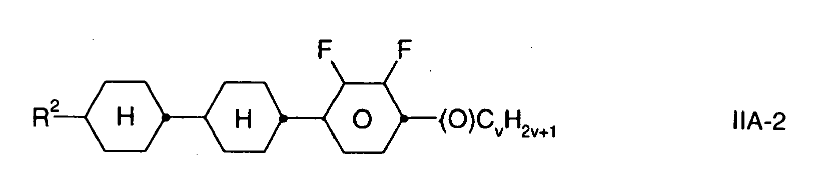 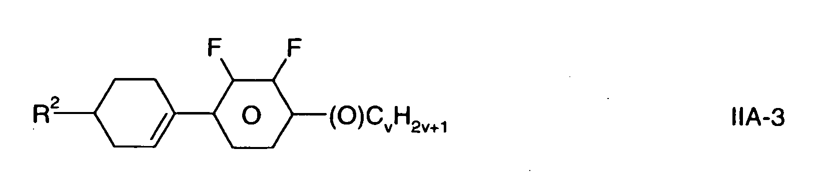 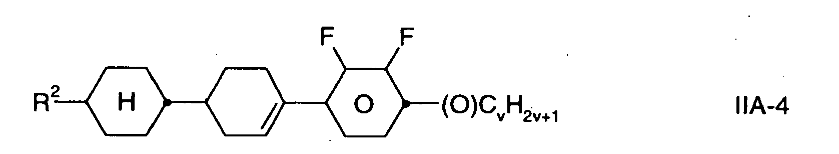 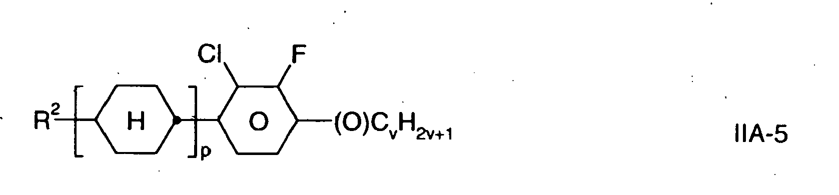 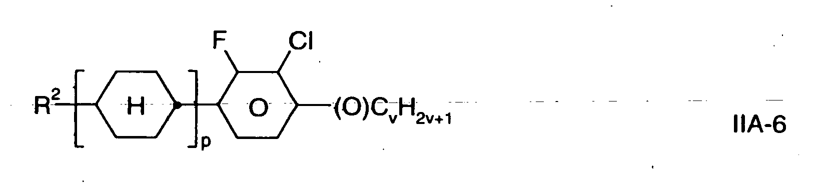 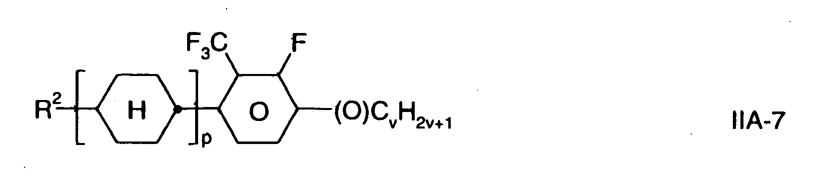 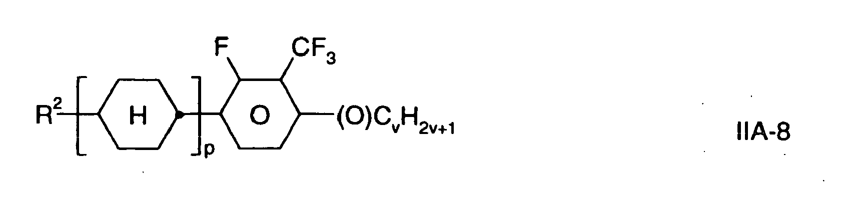 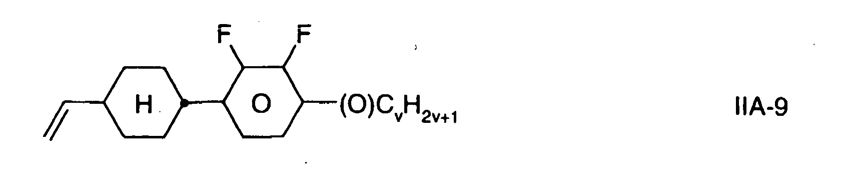 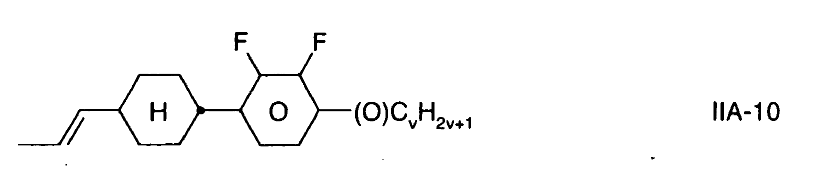 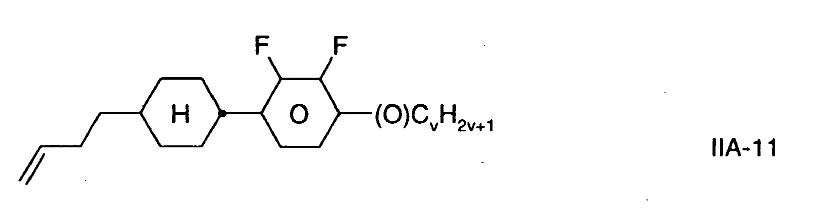 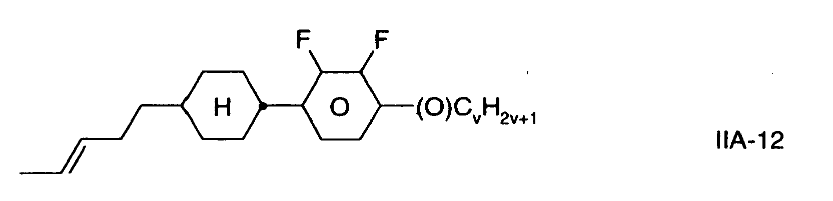 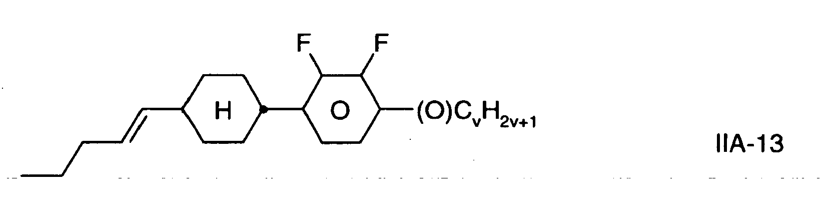 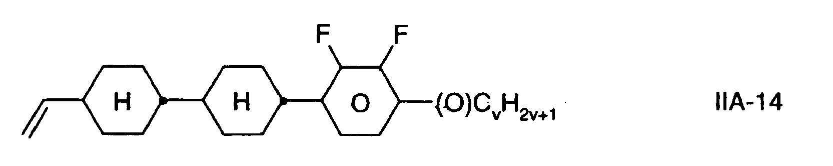 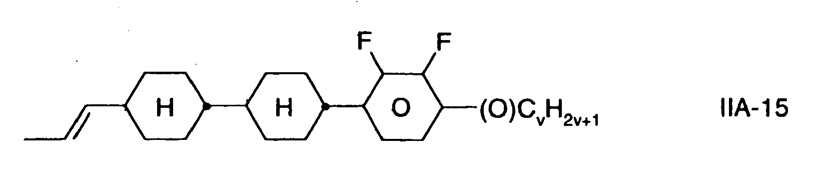 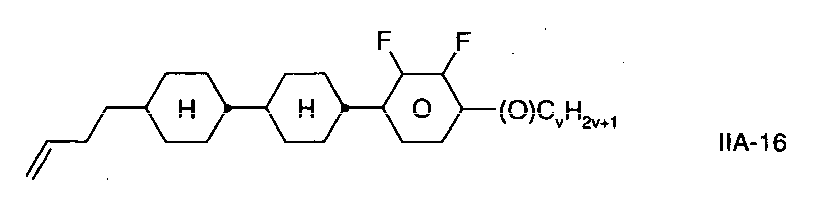 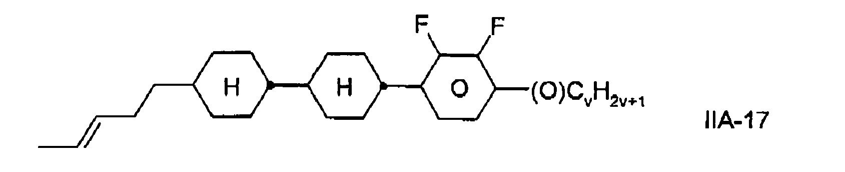 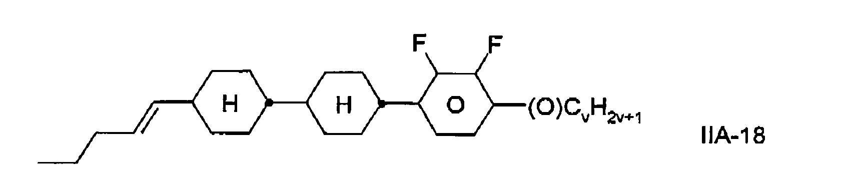
worin R² und v die oben angegebenen Bedeutungen haben.

Insbesondere bevorzugt sind die Verbindungen der Formeln IIA-1 und IIA-2, ferner IIA-3 und IIA-4. In den Verbindungen der Formel IIA bedeutet R² vorzugsweise geradkettiges Alkyl oder Alkenyl, vorzugsweise CH₂=CH, CH₃CH=CH, CH₂=CHCH₂CH₂, CH₃CH=CHC₂H₄, C₃H₇CH=CH, CH₃, C₂H₅, n-C₃H₇, n-C₄H₉, n-C₅H₁₁.

Besonders bevorzugte Verbindungen der Formel IIB sind die Verbindungen der Formeln IIB-1 bis IIB-7, 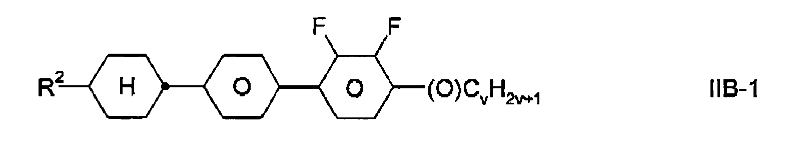 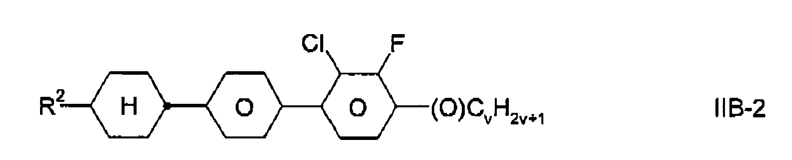 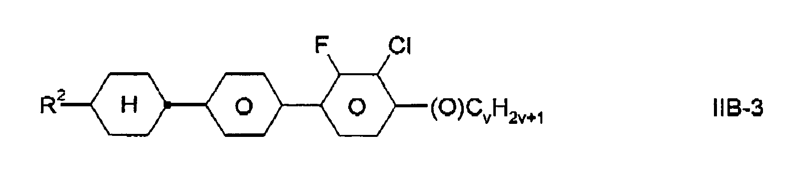 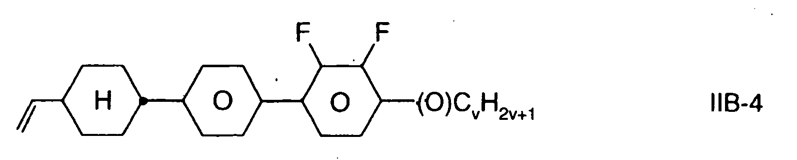 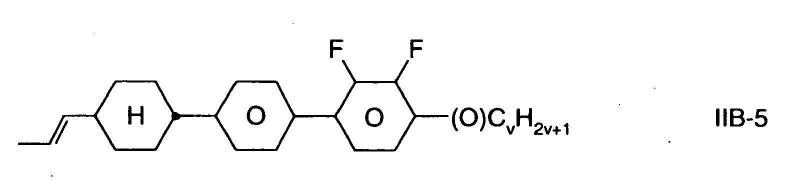 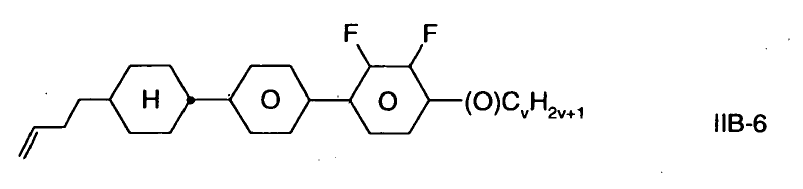 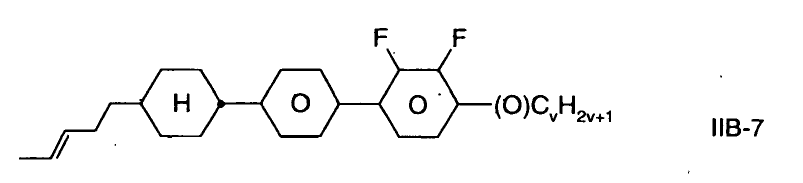 worin R² und v die oben angegebenen Bedeutungen haben.

Insbesondere bevorzugt sind die Verbindungen der Formel IIB-1. In den Verbindungen der Formel IIB-1 bedeutet R² vorzugsweise geradkettiges Alkyl. In den Verbindungen der Formel IIB bedeutet R² vorzugsweise geradkettiges Alkyl oder Alkenyl, vorzugsweise CH₂=CH, CH₃CH=CH, CH₂=CHCH₂CH₂, CH₃CH=CHC₂H₄, C₃H₇CH=CH, CH₃, C₂H₅, n-C₃H₇, n-C₄H₉, n-C₅H₁₁.

In den Verbindungen der Formeln IIA und IIB bedeutet Z² vorzugsweise eine Einfachbindung.
f) Flüssigkristallines Medium, welches zusätzlich eine oder mehrere Verbindungen der Formel iii, die nicht identisch ist mit den Verbindungen der Formel I, enthält, 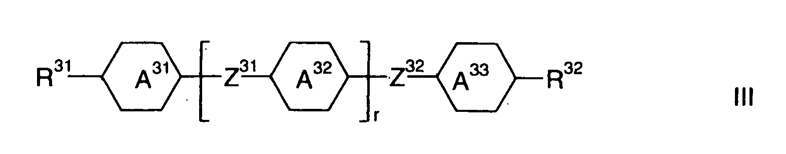 worin
   - R³¹ und R³²: jeweils unabhängig voneinander einen geradkettigen Alkylrest mit 1 bis 12 C-Atomen, worin eine oder mehrere CH₂-Gruppen durch jeweils unabhängig voneinander einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 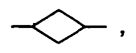 -C≡C-, -OC-O- oder -O-CO- so ersetzt sein können, dass O-Atome nicht direkt miteinander verknüpft sind, 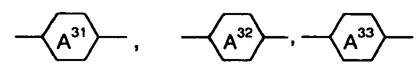 jeweils unabhängig voneinander, 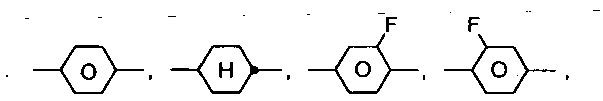 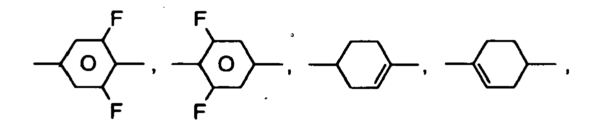 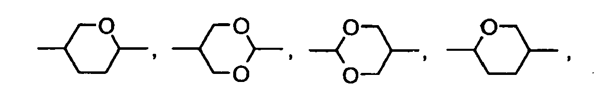 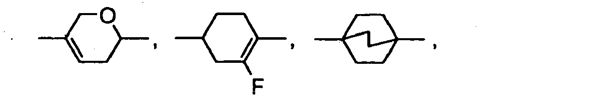
   - r: 0, 1 oder 2,
   - Z³¹ und Z³²: jeweils unabhängig voneinander eine Einfachbindung, -CH₂CH₂-, -C≡C-, -CH=CH-, -CF₂O-, -OCF₂-, -CF=CF-, -CF=CH-, -CH=CF-, -CH₂CF₂-, -CF₂CH₂-, -COO-, -OCO-, -CH₂O-, -OCH₂-, -(CH₂)₄-
   bedeuten.
g) Flüssigkristallines Medium, wobei der Anteil an Verbindungen der Formeln IIA und/oder IIB im Gesamtgemisch mindestens 20 Gew.% beträgt.
h) Flüssigkristallines Medium, wobei der Anteil der Verbindungen der Formel III im Gesamtgemisch mindestens 5 Gew.% beträgt.
i) Flüssigkristallines Medium, welches mindestens eine Verbindung ausgewählt aus den Teilformeln I1 und/oder I2 enthält: 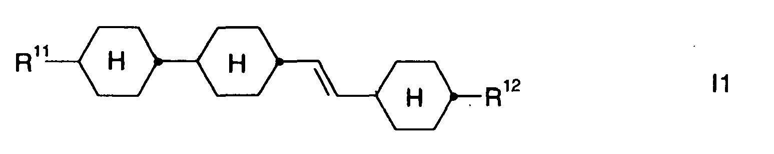 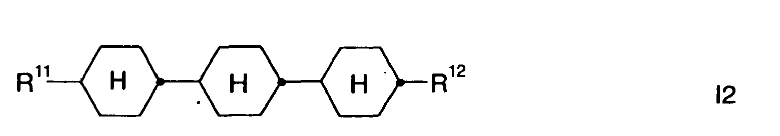 Besonders bevorzugte Medien enthalten eine oder mehrere Verbindungen ausgewählt aus der Gruppe der Verbindungen der Formeln 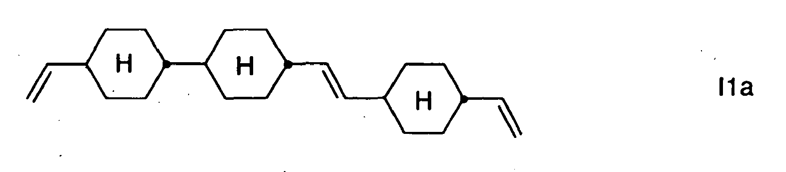 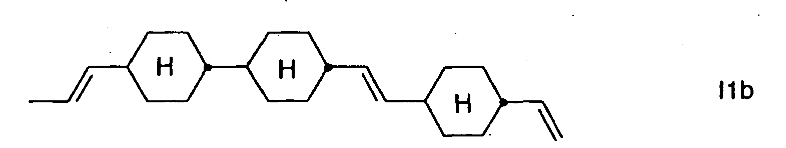 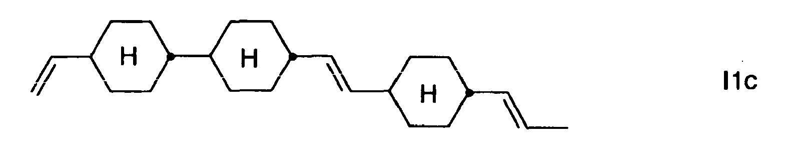 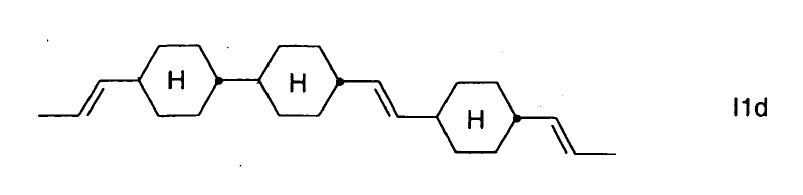 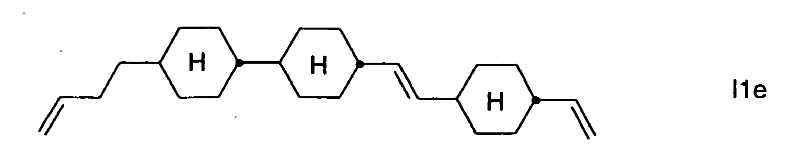 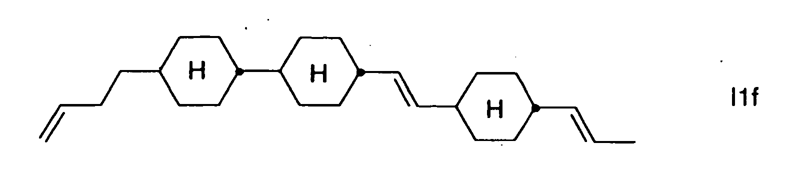 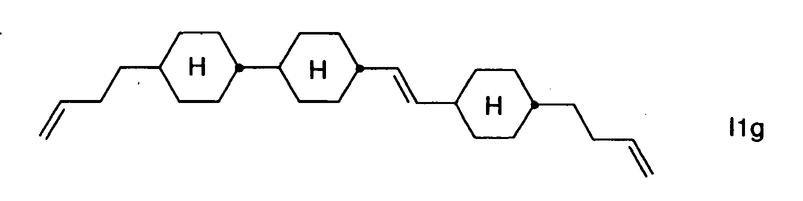 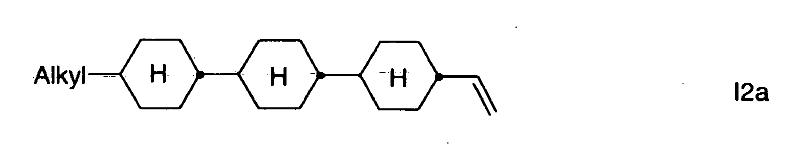 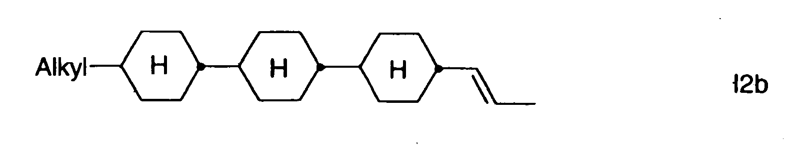 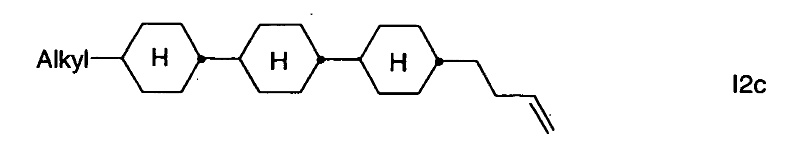 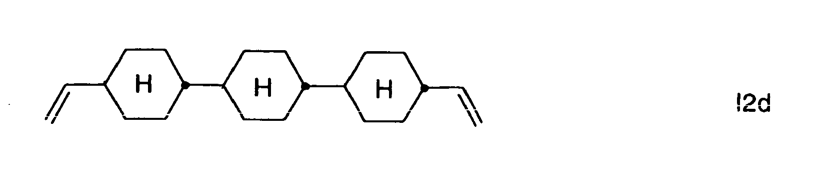 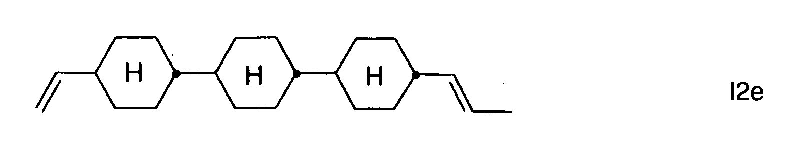 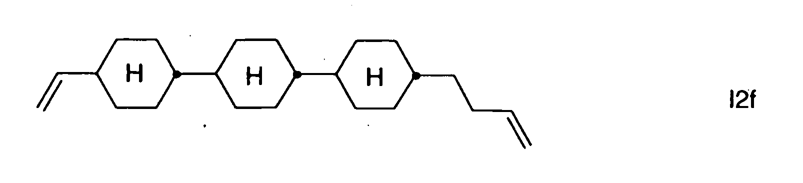 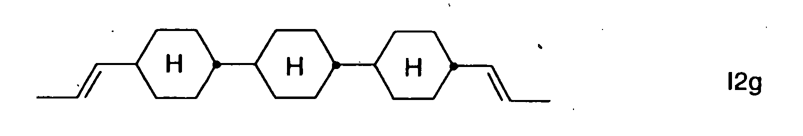 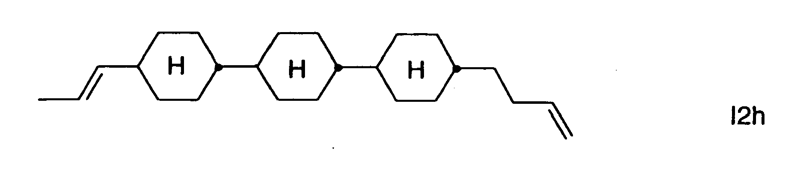 Besonders bevorzugt sind die Verbindungen der Formeln I1a, I2a, I2c.
j) Flüssigkristallines Medium, welches zusätzlich eine oder mehrere Verbindungen ausgewählt aus den Formeln IIIa bis IIIq enthält: 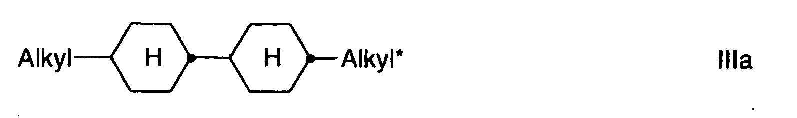 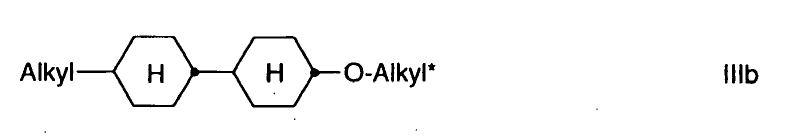 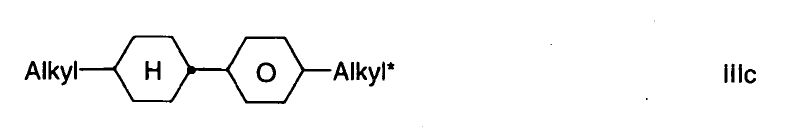 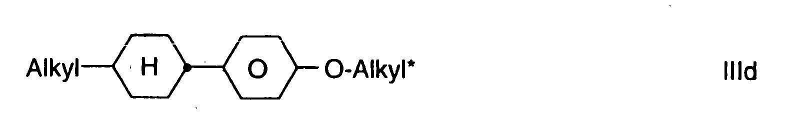 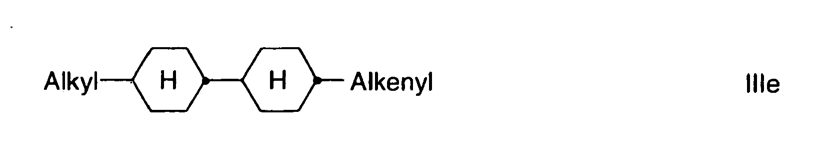 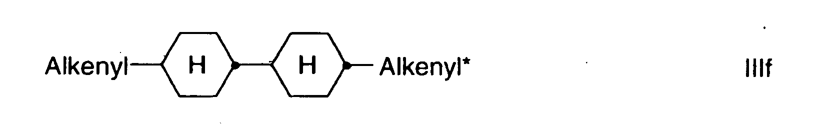 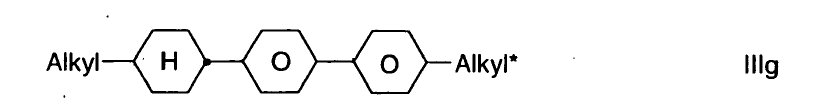 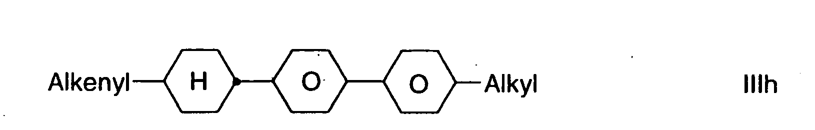 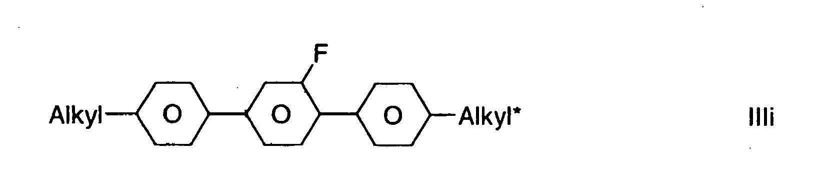 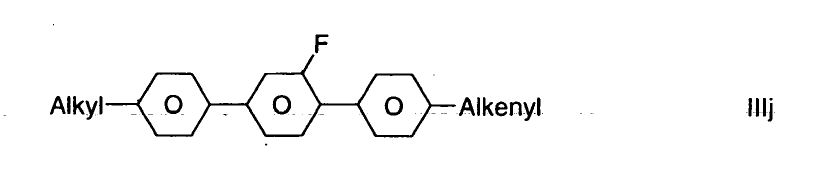 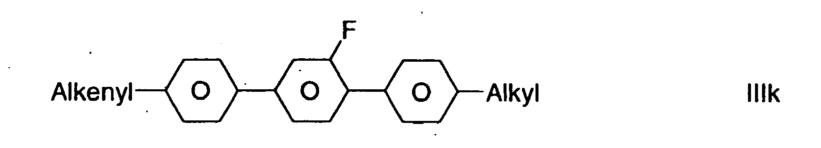 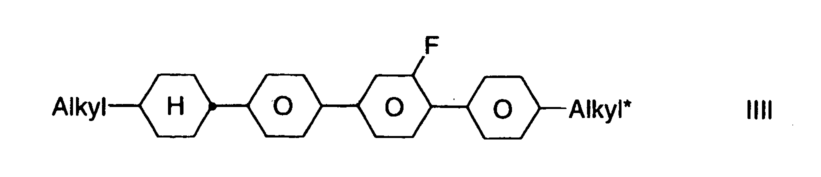 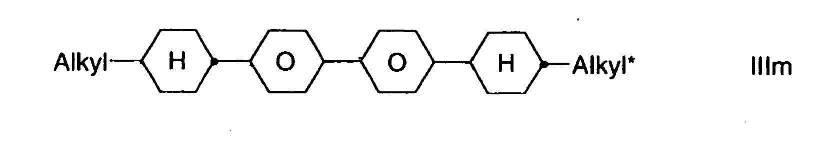 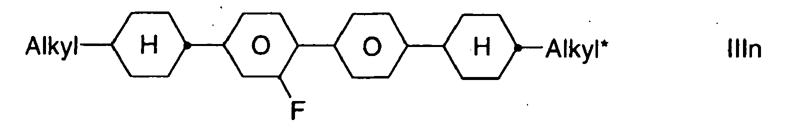 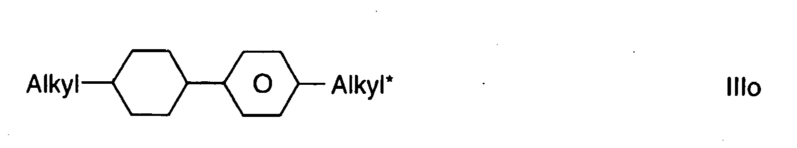 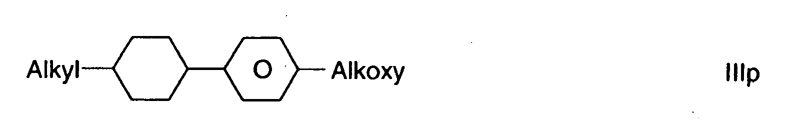 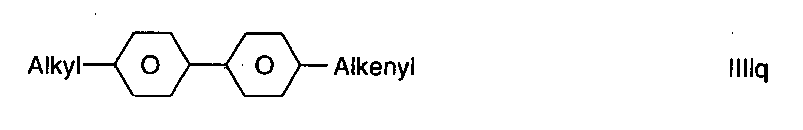 worin
   - Alkyl und Alkyl*: jeweils unabhängig voneinander einen geradkettigen Alkylrest mit 1-6 C-Atomen, und
   - Alkoxy: einen geradkettigen Alkoxyrest mit 1-6 C-Atomen
   - Alkenyl und Alkenyl*: jeweils unabhängig voneinander einen geradkettigen Alkenylrest mit 2-6 C-Atomen
   bedeuten.
   Besonders bevorzugt enthält das erfindungsgemäße Medium Verbindungen der Formel IIIe in Mengen von > 20 Gew.%, insbesondere > 25 Gew.%, ganz besonders bevorzugt ≥ 30 Gew.%, insbesondere Verbindungen ausgewählt aus den Verbindungen der Formel 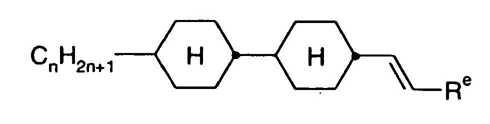 worin
   n = 3, 4, 5 und R^{e} H oder CH₃
   bedeuten.
   Vorzugsweise enthält das erfindungsgemäße Medium mindestens eine Verbindung der Formel IIIa, Formel IIIb und/oder Formel IIIe.
   Besonders bevorzugte Verbindungen der Formeln IIe und IIIf werden nachfolgend genannt: 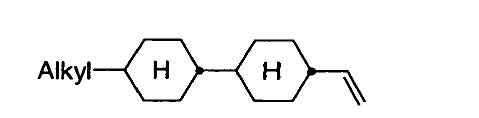 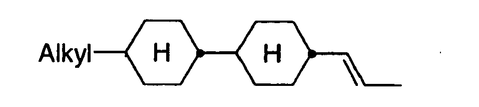 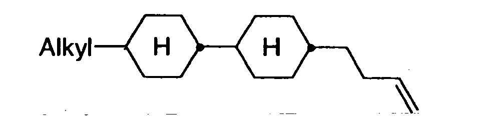 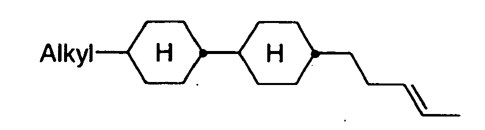 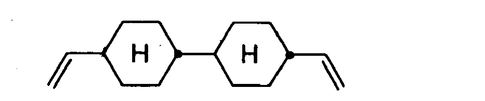 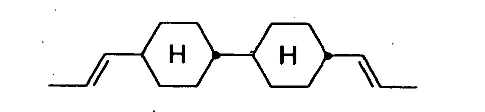 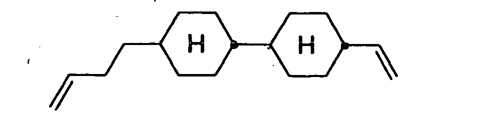 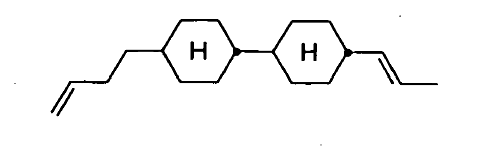 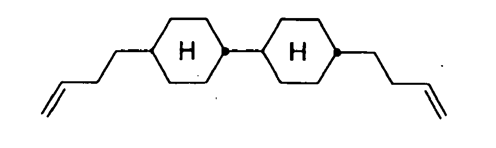
k) Flüssigkristallines Medium, welches
   - 2-20: Gew.% einer oder mehrerer Verbindungen der Formel I und
   - 20-80: Gew.% einer oder mehrerer Verbindungen der Formeln IIA und/oder IIB
   enthält bzw. daraus besteht.
I) Flüssigkristallines Medium, welches zusätzlich eine oder mehrere Vierkernverbindungen der Formeln, 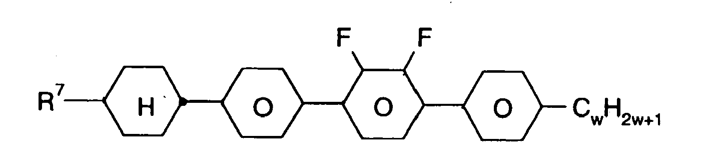 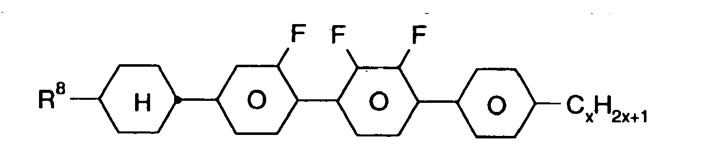 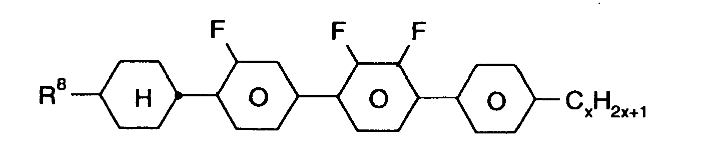 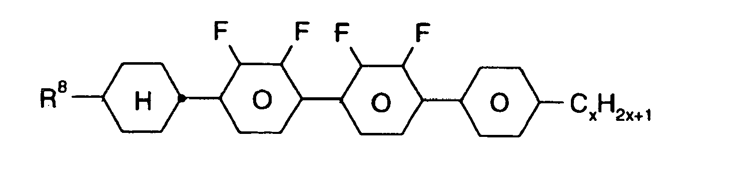 worin
   - R⁷ und R⁸: jeweils unabhängig voneinander eine der in Anspruch 1 für R¹¹ angegebenen Bedeutung haben, und
   - w und x: jeweils unabhängig voneinander 1 bis 6
   bedeuten,
   enthält.
m) Flüssigkristallines Medium, welches zusätzlich eine oder mehrere Verbindungen der Formeln 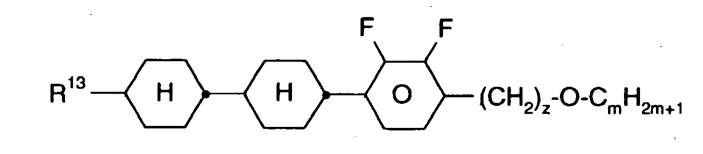 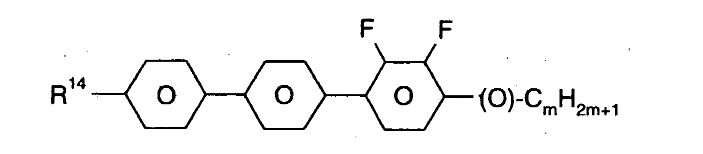 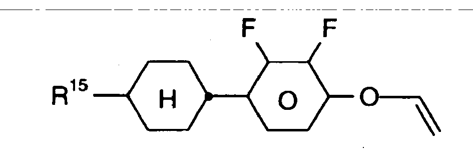 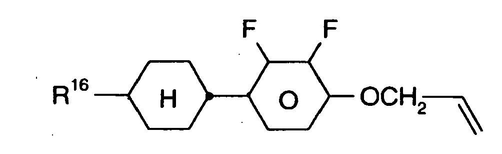 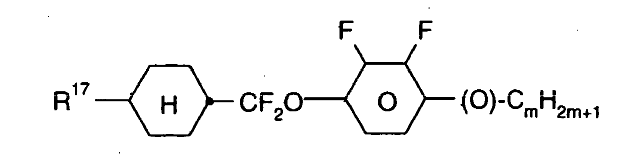 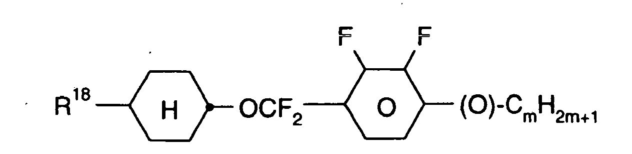 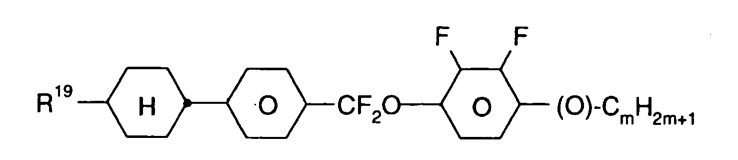 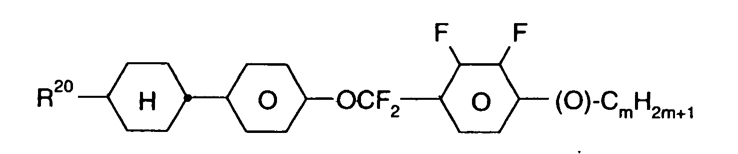 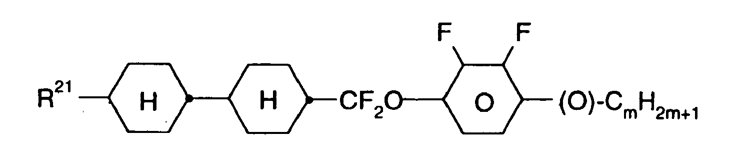 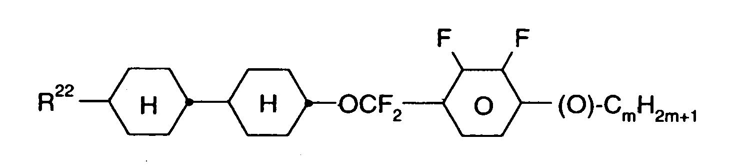 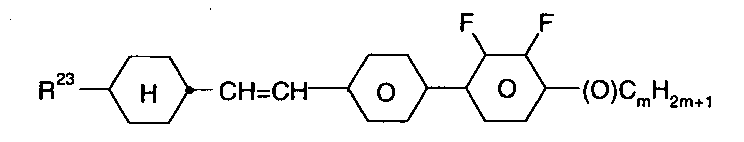 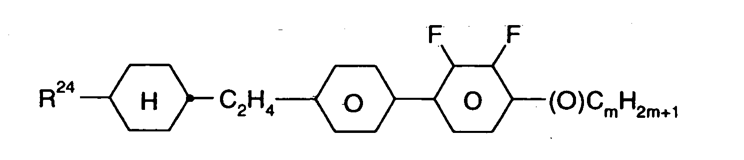 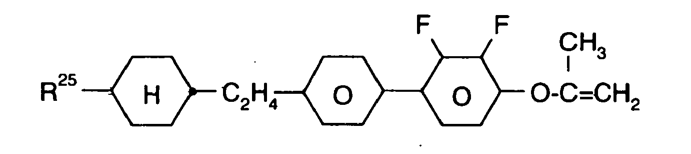 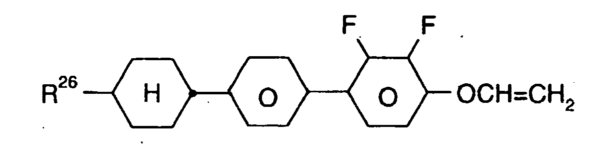 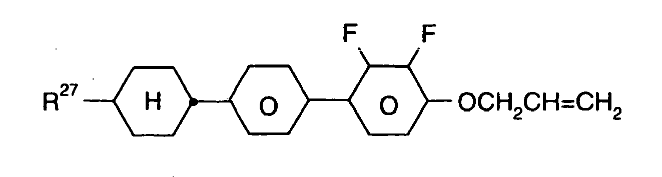 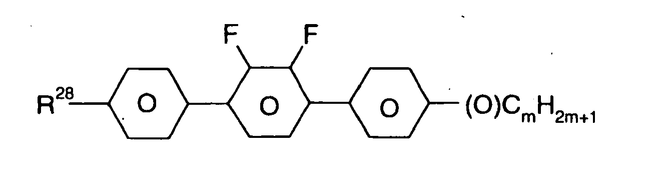 enthält,
   worin R¹³-R²⁸ jeweils unabhängig voneinander, die für R¹¹ angegebenen Bedeutungen haben, und z und m jeweils unabhängig voneinander 1-6 bedeuten.
n) Flüssigkristallines Medium, welches zusätzlich eine oder mehrere Verbindungen der Formel B-1 und/oder B-2, 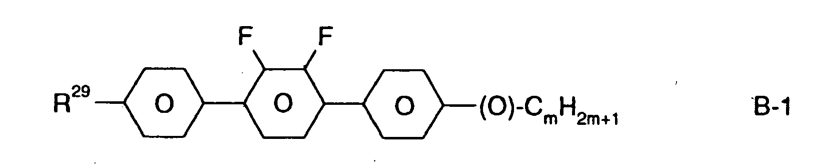 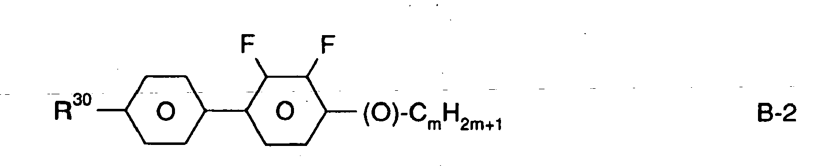 vorzugsweise in Mengen von > 3 Gew.%, insbesondere ≥ 5 Gew.%, und ganz besonders bevorzugt von 5-25 Gew.% enthält,
   wobei
   R²⁹⁻³⁰ die für R¹¹ angegebenen Bedeutungen hat und m 1-6 bedeutet.
o) Flüssigkristallines Medium enthaltend zusätzlich ein oder mehrere Verbindungen der Formel T-1 und/oder T-2, 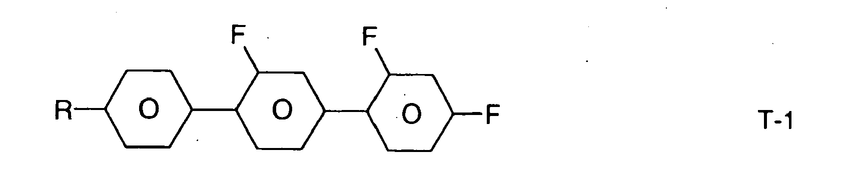 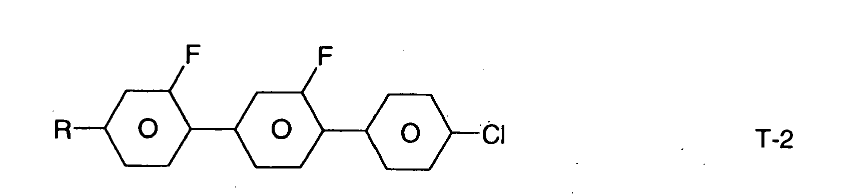 worin R Alkyl, Alkenyl, Alkoxy, Alkylalkoxy, Alkenyloxy mit 1 bzw. 2 bis 6 C-Atomen bedeutet.
p) Flüssigkristallines Medium, welches zusätzlich eine oder mehrere Verbindungen der Formeln 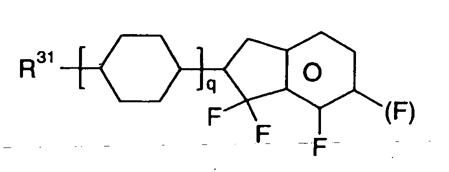 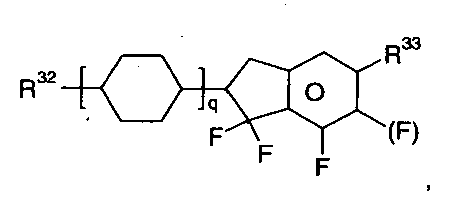 vorzugsweise in Mengen von > 3 Gew.%, insbesondere ≥ 5 Gew.%, und ganz besonders bevorzugt von 5-30 Gew.% enthält,
   wobei
   R³¹⁻³² die für R¹¹ angegebenen Bedeutungen haben und R³³ CH₃, C₂H₅ oder n-C₃H₇ und q 1 oder 2
   bedeutet.
q) Flüssigkristallines Medium, welches zusätzlich eine oder mehrere Verbindungen der Formeln 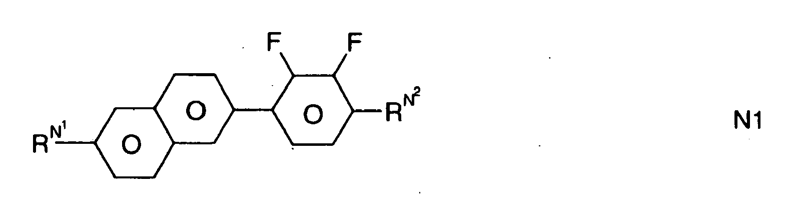 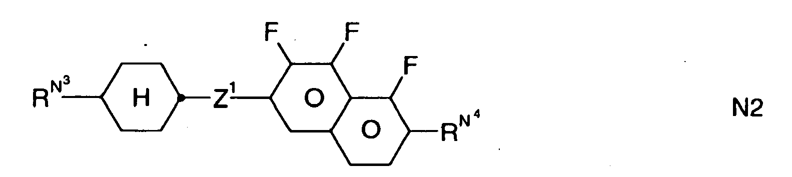 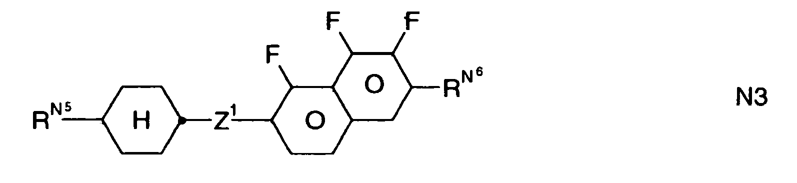 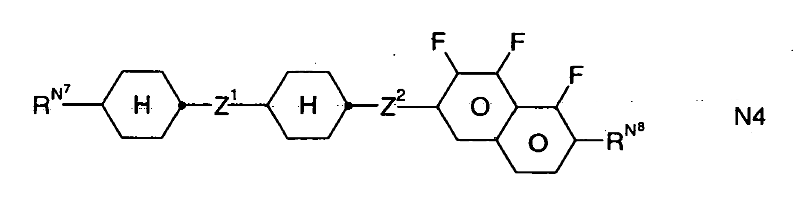 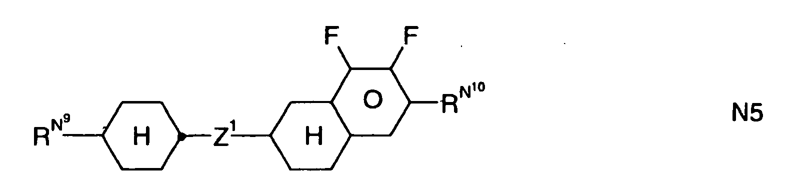 worin R^{N1} bis R^{N8} unabhängig voneinander die für R¹¹ angegebenen Bedeutungen haben und der Anteil der Naphthylenverbindungen in der Mischung 2-40 Gew.% bezogen auf die Mischung beträgt.
r) Flüssigkristallines Medium, welches zusätzlich eine oder mehrere Verbindungen der Formeln O1 und/oder O2, 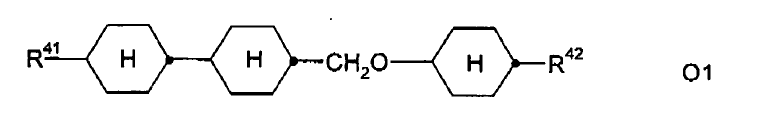 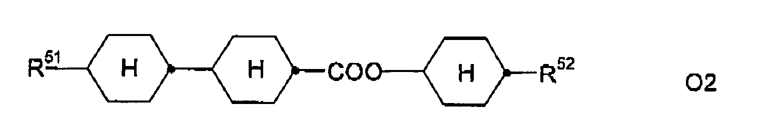 enthält,
   worin R⁴¹, R⁴², R⁵¹ und R⁵² die für R¹¹ angegebenen Bedeutungen haben. Der Anteil der Verbindungen O1 und/oder O2 bezogen auf die Mischungen beträgt vorzugsweise 5-40 Gew.%.

Ein weiterer Gegenstand der Erfindung ist eine elektrooptische Anzeige mit einer Aktivmatrix-Adressierung basierend auf dem ECB-Effekt, dadurch gekennzeichnet, dass sie als Dielektrikum ein flüssigkristallines Medium nach einem der Ansprüche 1 bis 10 enthält.

Vorzugsweise weist die Flüssigkristallmischung einen nematischen Phasenbereich von mindestens 60 K und eine Fließviskosität V₂₀ von maximal 30mm² · s⁻¹ bei 20° C auf.

Die erfindungsgemäße Flüssigkristallmischung weist ein Δε von etwa -0,5 bis -7,0, insbesondere von etwa -2,0 bis -4,0 auf, wobei Δε die dielektrische Anisotropie bedeutet. Die Rotationsviskosität γ₁ ist vorzugsweise < 180 mPa.s, insbesondere < 150 mPa·s.

Die Doppelbrechung Δn in der Flüssigkristallmischung ist in der Regel ≤ 0,11, vorzugsweise zwischen 0,06 und 0,10, und insbesondere zwischen 0,07 und 0,10.

Die erfindungsgemäßen Mischungen sind für alle VA-TFT-Anwendungen geeignet, wie z.B. VAN, MVA, (S)-PVA, ASV. Weiterhin sind sie für IPS (In plane switching)-, FFS (Fringe field switching)-Anwendungen mit negativem Δε geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,5. Sie enthält Verbindungen der Formeln I, und IIA und/oder IIB.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm^{2.} s⁻¹, vorzugsweise nicht mehr als 25 mm^{2.} s⁻¹, bei 20 °C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm^{2.} s⁻¹, bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel III. Daneben können diese Flüssigkristallphasen auch mehr als 18 Komponenten, vorzugsweise 18 bis 25 Komponenten, enthalten.

Vorzugsweise enthalten die Phasen 4 bis 15, insbesondere 5 bis 12, Verbindungen der Formeln I, IIA und/oder IIB und optional III.

Neben Verbindungen der Formeln I, IIA und/oder IIB und III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbene, Benzylphenylether, Tolane und substituierten Zimtsäureestem.

Die wichtigsten als Bestandteile derartiger Flüssigkristallphasen in Frage kommenden Verbindungen lassen sich durch die Formel IV charakterisieren,

R⁹-L-G-E-R¹⁰ IV

worin L und E je ein carbo- oder heterocyclisches Ringsystem aus der aus 1,4-disubstituierten Benzoyl- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| G | -CH=CH- | -N(O)=N- |
|---|---|---|
| | -CH-CQ- | -CH=N(O)- |
| | -C≡-C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor, oder -CN, und R⁹ und R¹⁰ jeweils Alkyl, Alkenyl, Alkoxy, Alkanoyloxy oder Alkoxycarbonyloxy mit bis zu 18, vorzugsweise bis zu 8 Kohlenstoffatomen, oder einer dieser Reste auch CN, NC, NO₂, NCS, CF₃, OCF₃, F, Cl oder Br bedeuten.

Bei den meisten dieser Verbindungen sind R⁹ und R¹⁰ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Die erfindungsgemäßen flüssigkristallinen Mischungen werden hergestellt, indem man eine oder mehrere Verbindungen der Formel I mit einer oder mehreren weiteren mesogenen Verbindungen mischt.

Es versteht sich für den Fachmann von selbst, dass die erfindungsgemäße VA-, IPS- oder FFS-Mischung auch Verbindungen enthalten kann, worin beispielsweise H, N, O Cl, F durch die entsprechenden Isotope ersetzt sind.

Der Aufbau der erfindungsgemäßen Flüssigkristallanzeigen entspricht der üblichen Geometrie, wie sie z.B. in EP-OS 0 240 379, beschrieben wird. Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Vorzugsweise enthalten die erfindungsgemäßen Mischungen neben den Verbindungen der Formeln I eine oder mehrere Verbindungen der nachfolgend genannten Verbindungen.

Folgende Abkürzungen werden verwendet:
(n, m = 1-6; z = 1-6)

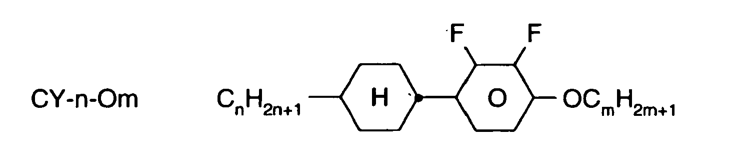

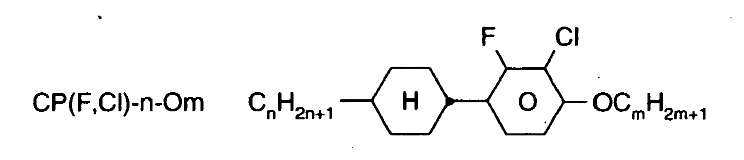

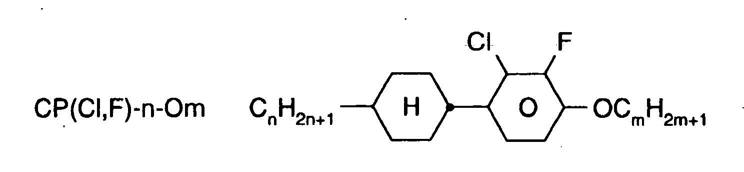

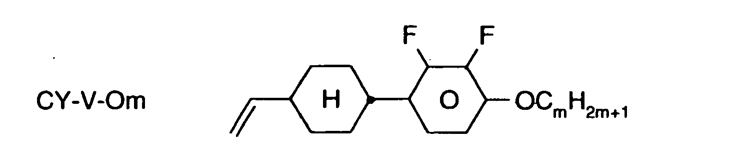

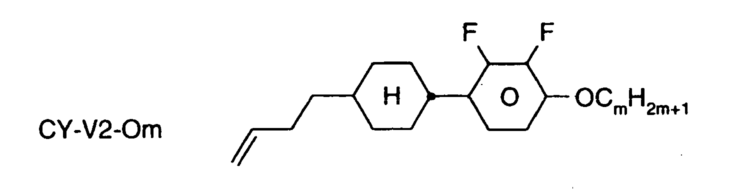

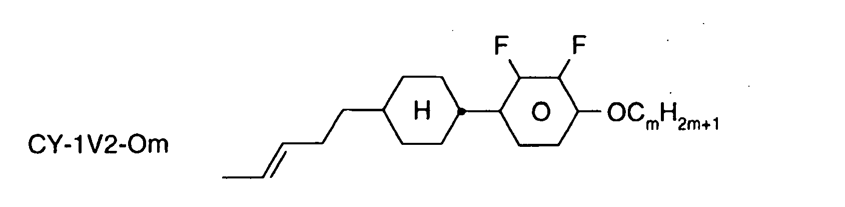

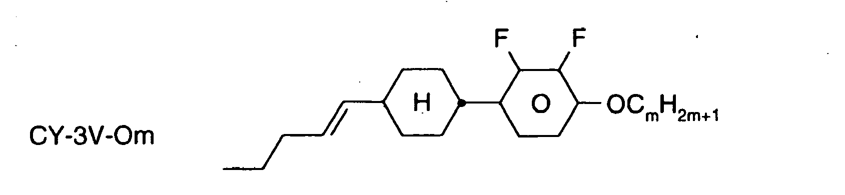

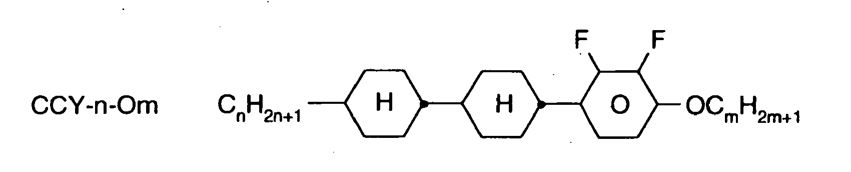

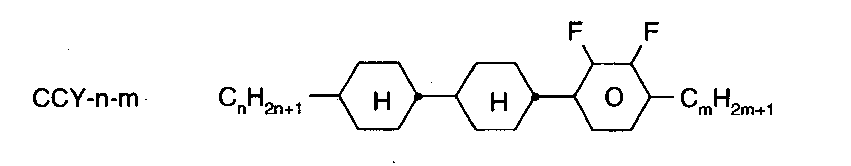

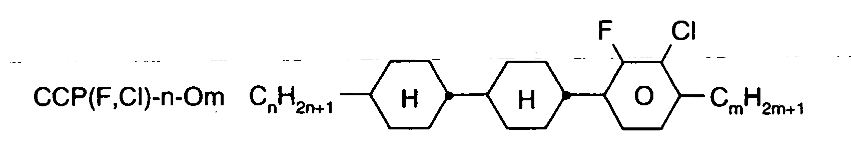

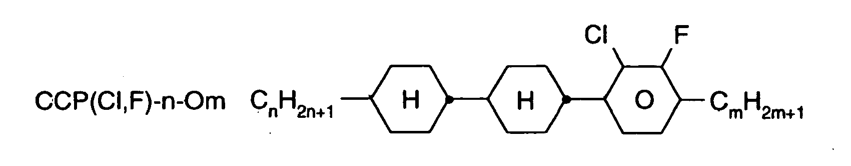

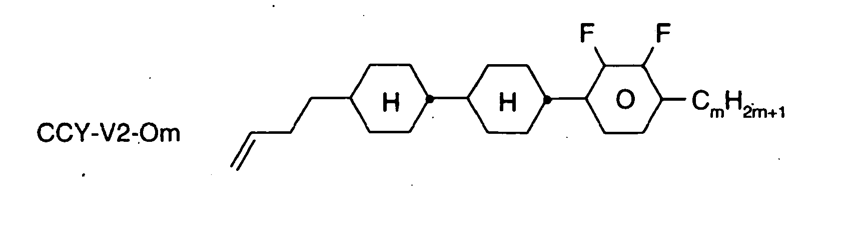

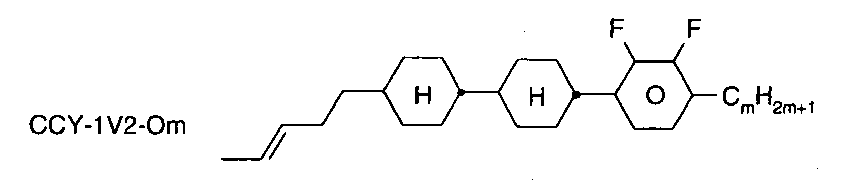

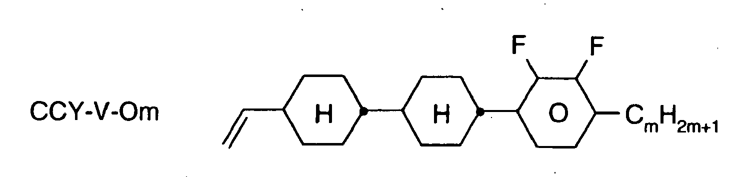

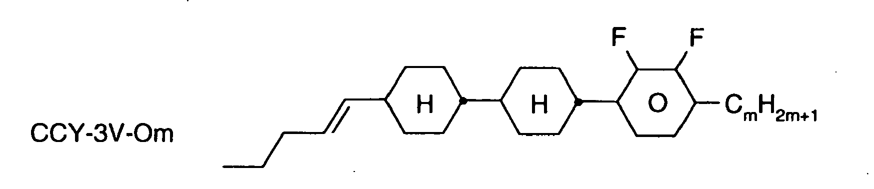

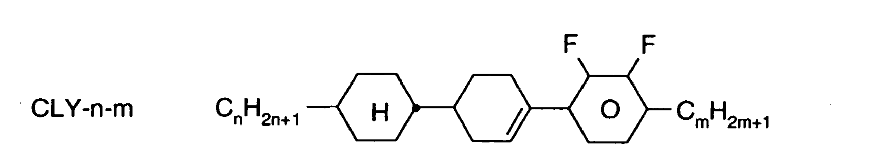

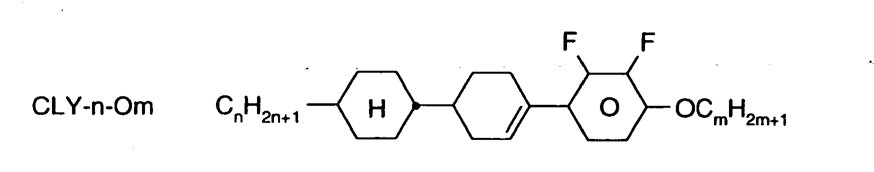

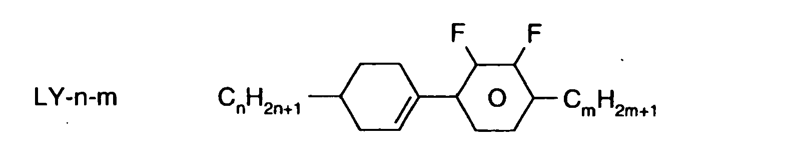

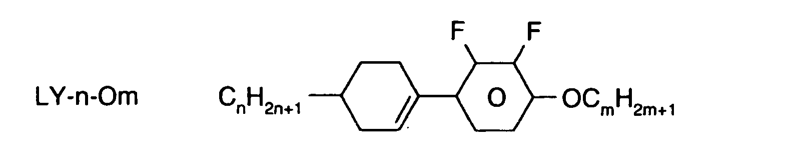

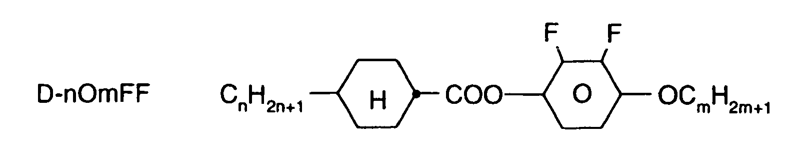

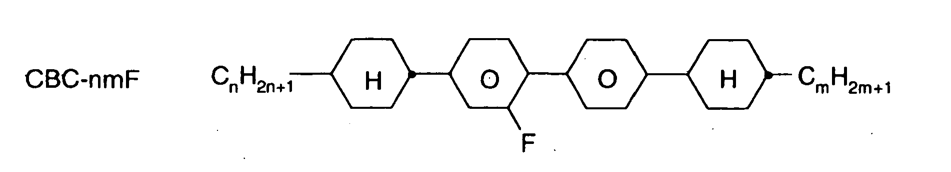

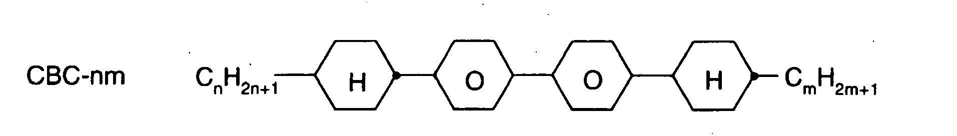

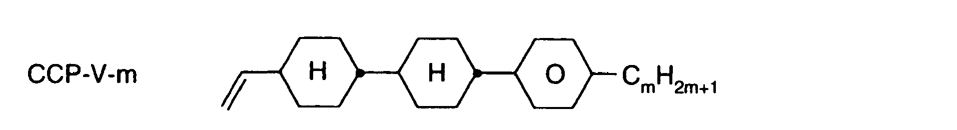

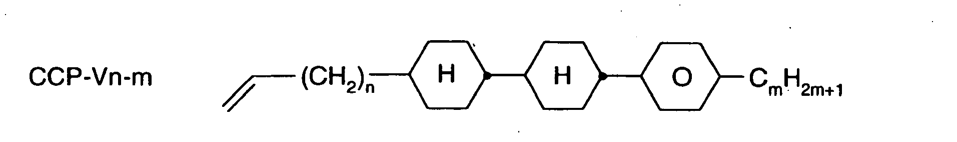

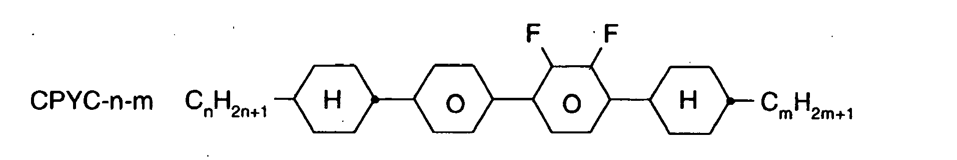

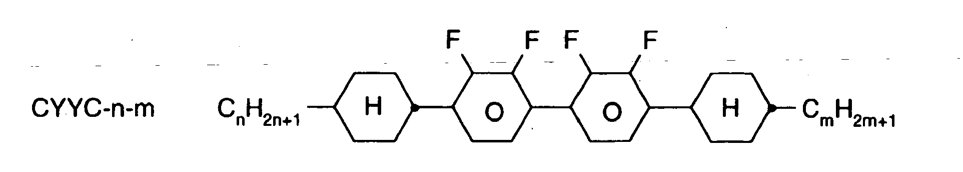

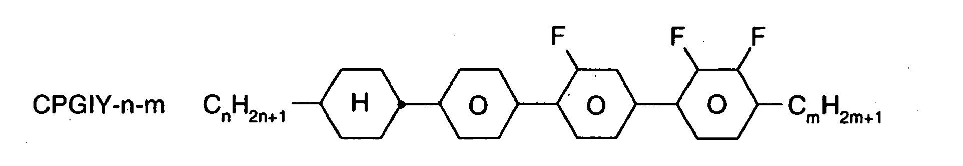

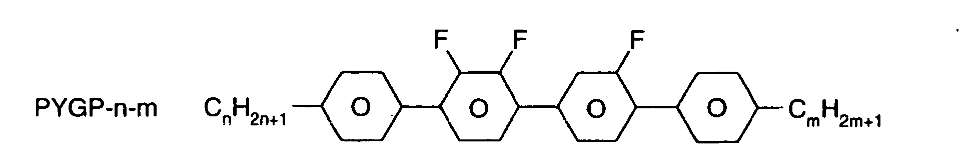

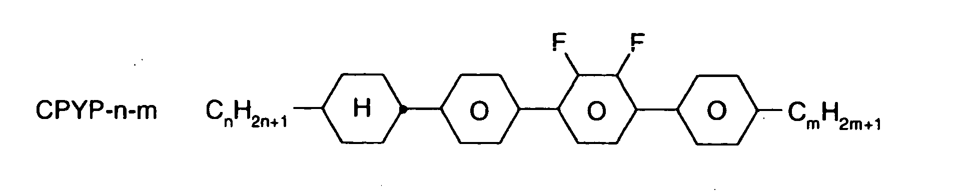

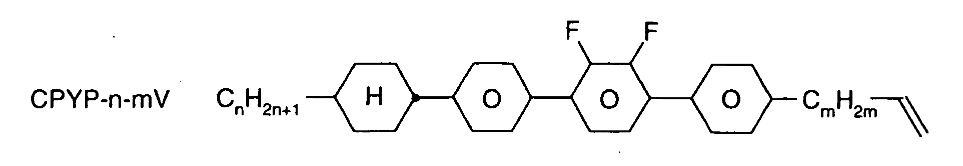

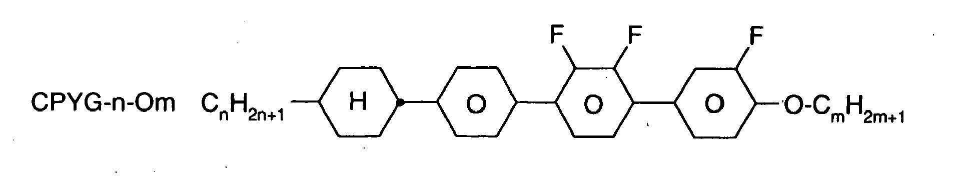

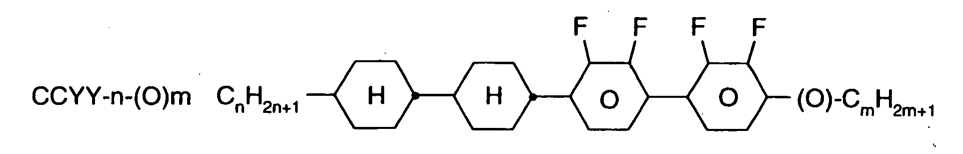

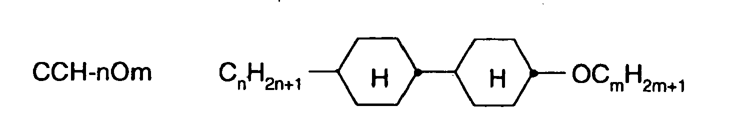

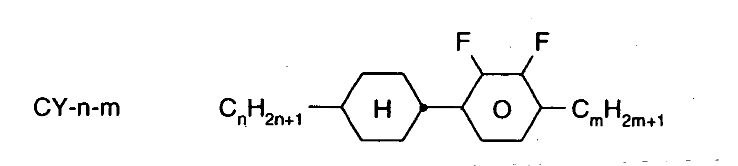

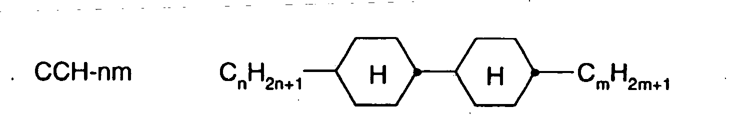

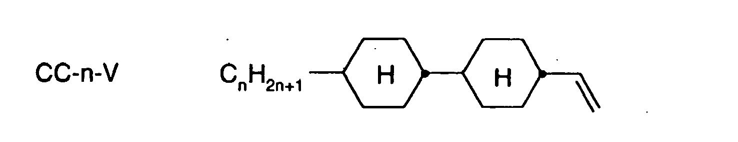

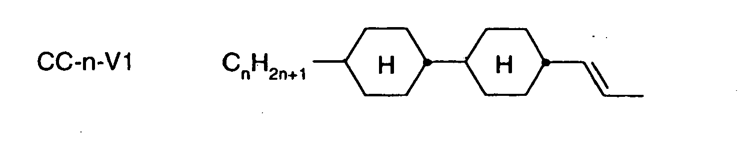

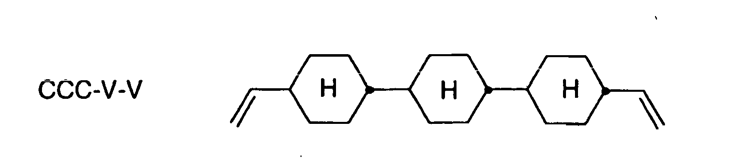

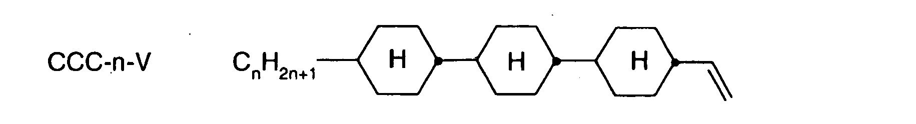

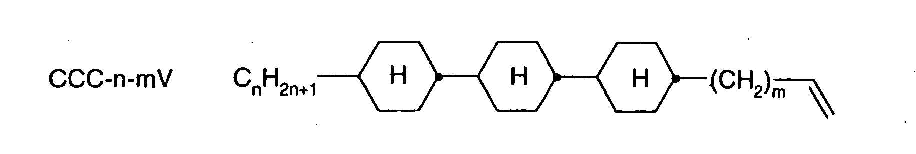

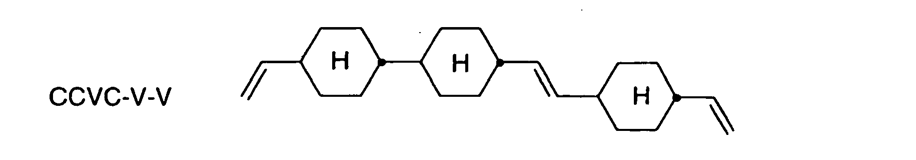

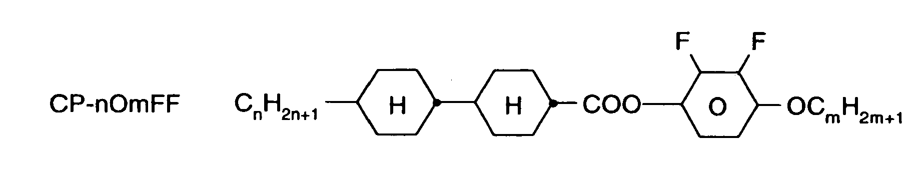

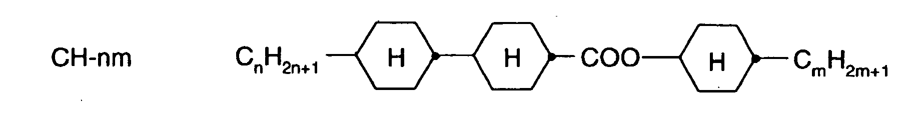

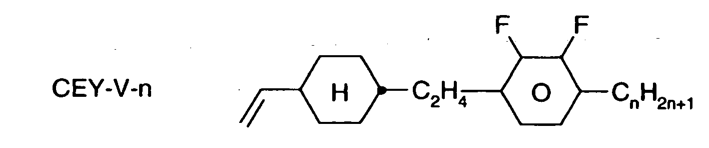

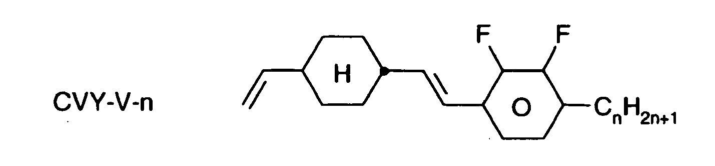

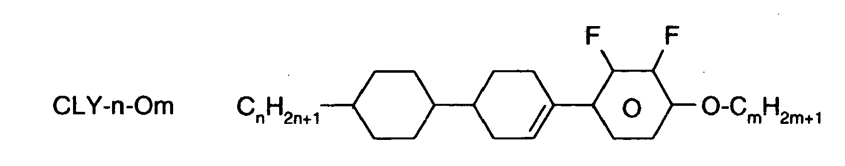

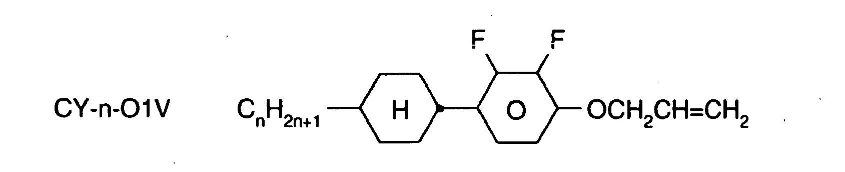

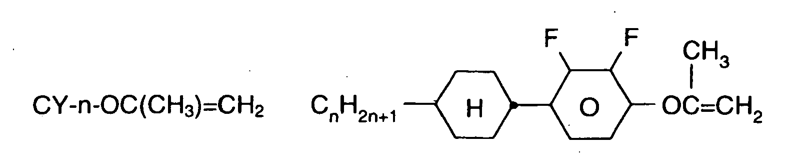

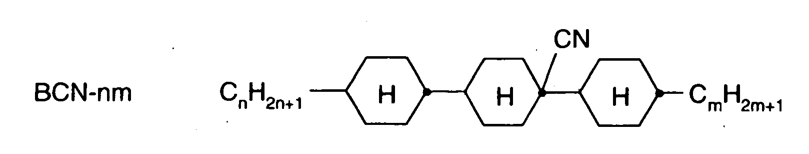

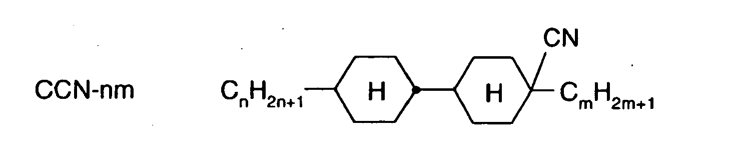

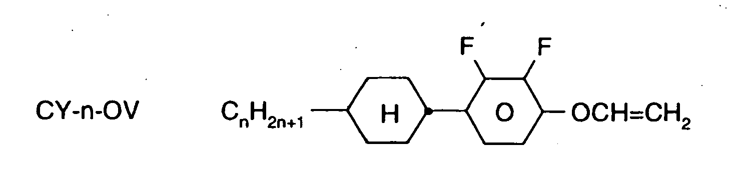

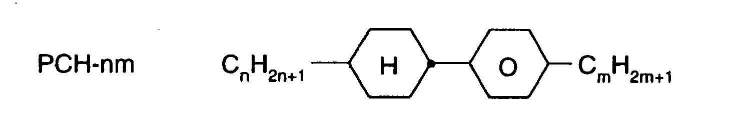

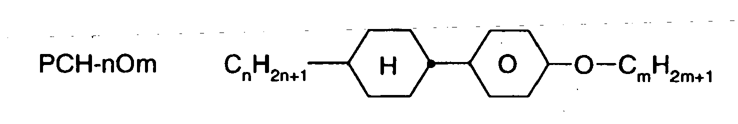

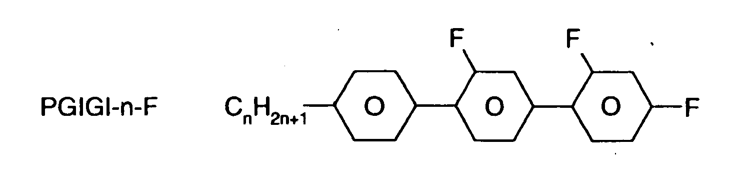

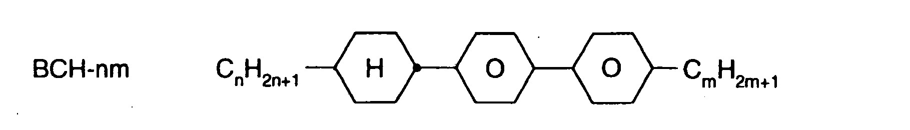

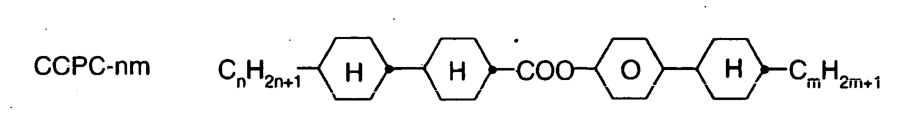

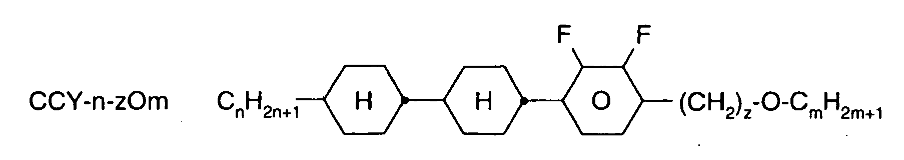

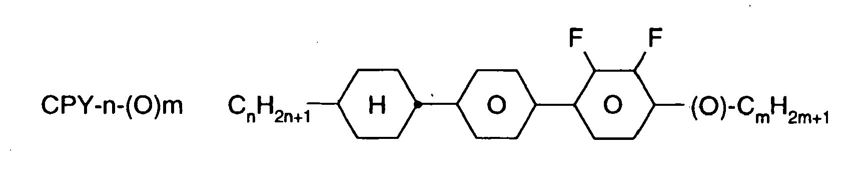

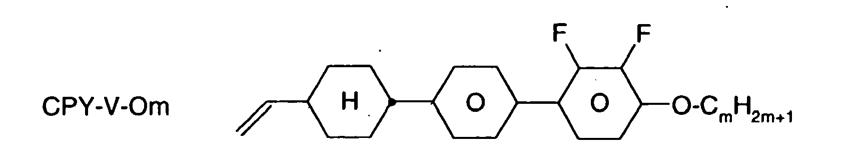

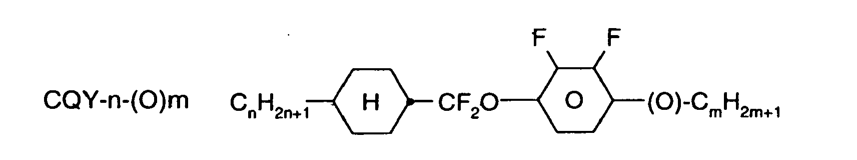

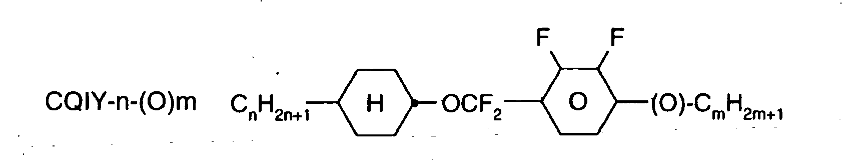

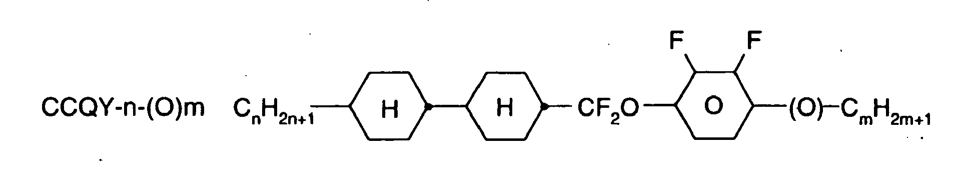

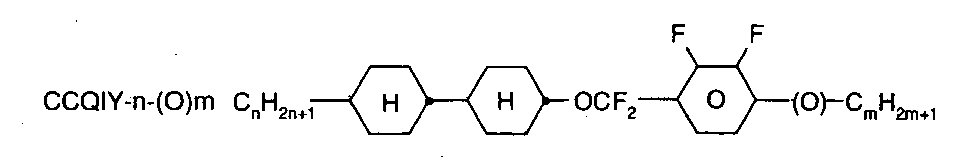

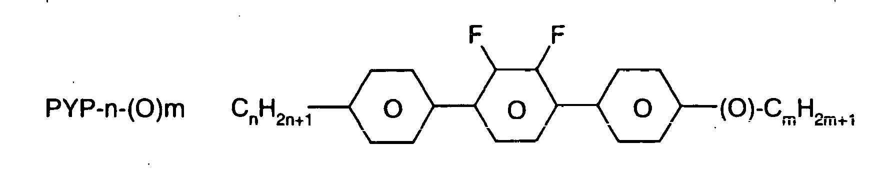

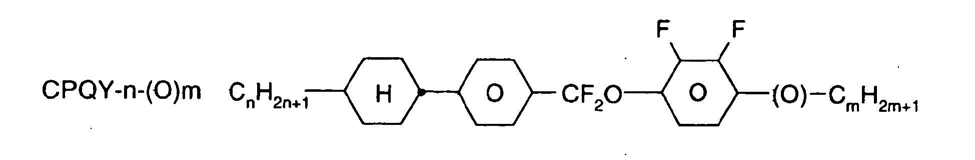

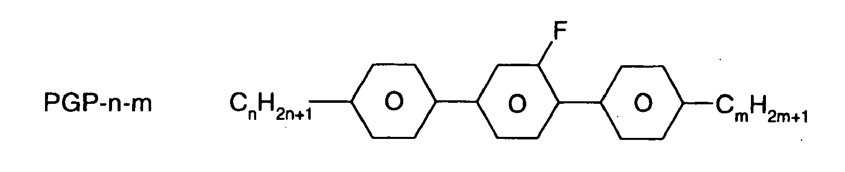

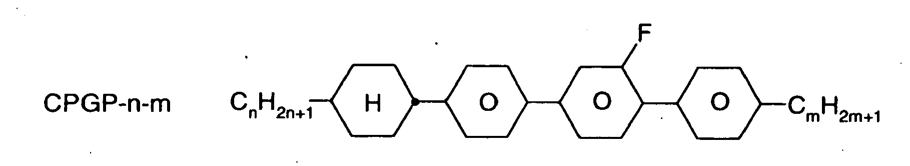

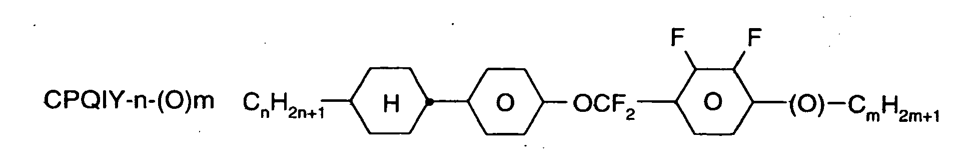

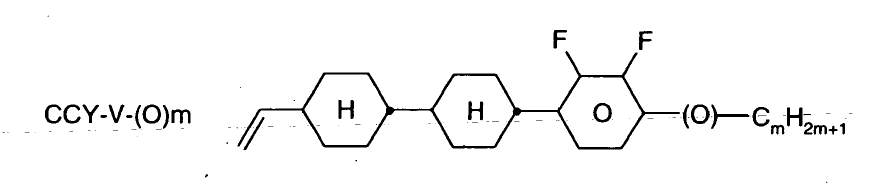

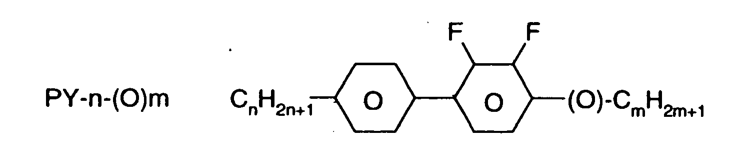

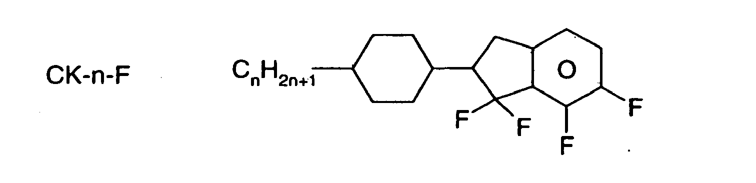

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. UV-Absorber, Antioxidantien, Radikalfänger, enthalten. Beispielsweise können 0-15 % pleochroitische Farbstoffe, Stabilisatoren oder chirale Dotierstoffe zugesetzt werden.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplex-salze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

In der Tabelle A werden mögliche Dotierstoffe angegeben, die den erfindungsgemäßen Mischungen zugesetzt werden können. Sofern die Mischungen einen Dotierstoff enthalten, wird er in Mengen von 0,01-4 Gew.%, vorzugsweise 0,1-1,0 Gew.%, eingesetzt.

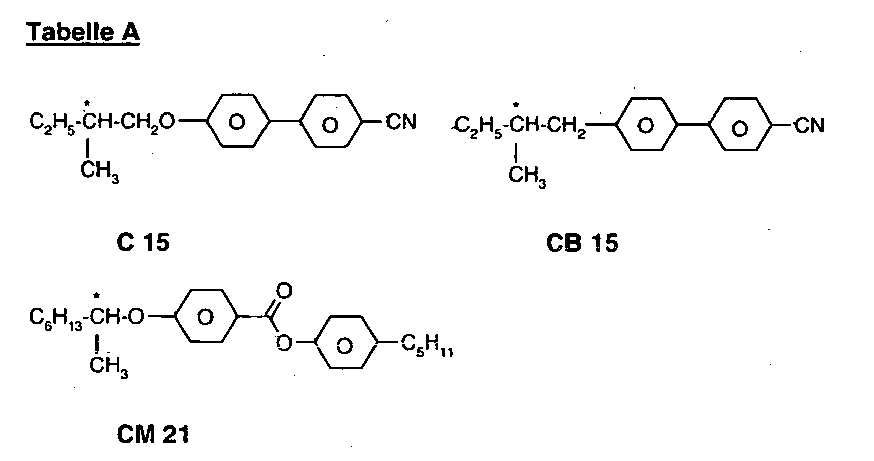

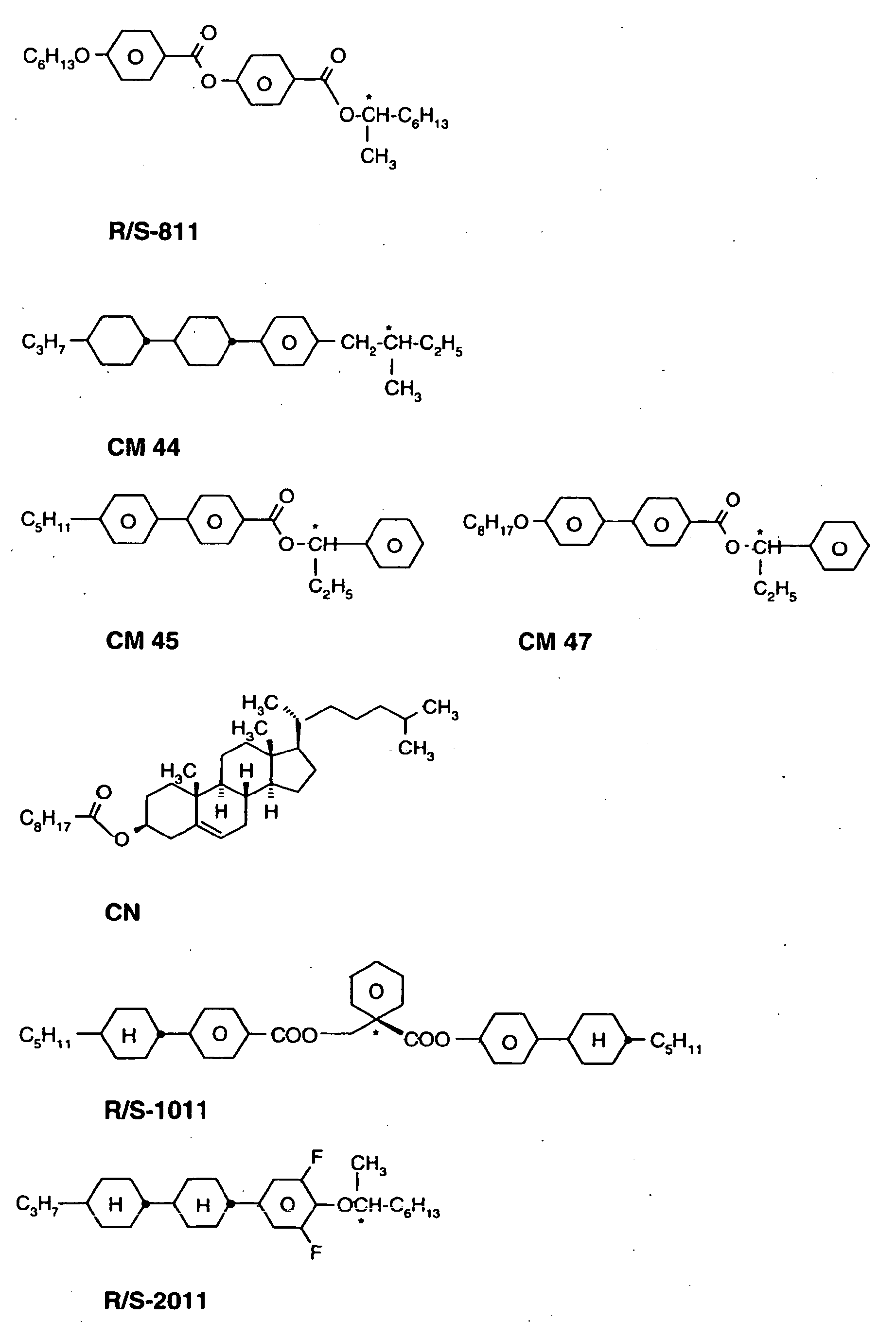

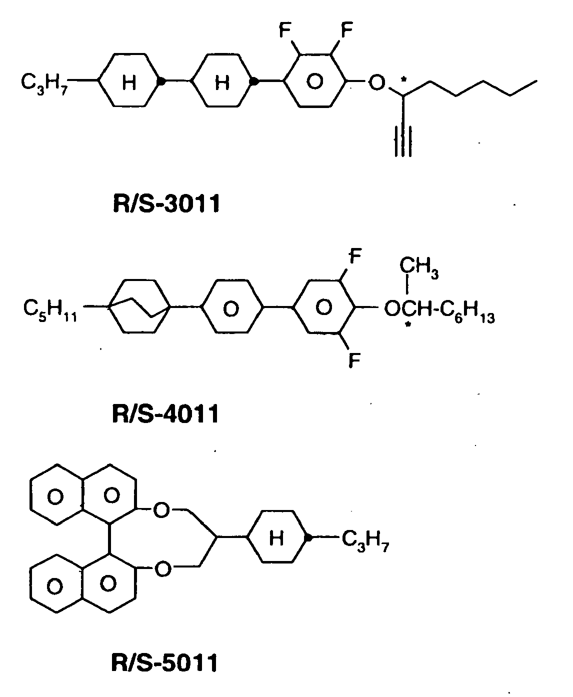

Stabilisatoren, die beispielsweise den erfindungsgemäßen Mischungen zugesetzt werden können, werden nachfolgend in Tabelle B genannt.

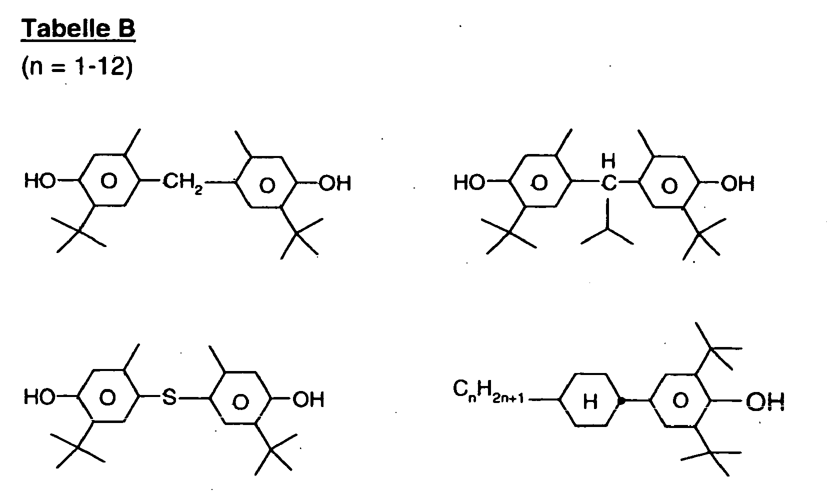

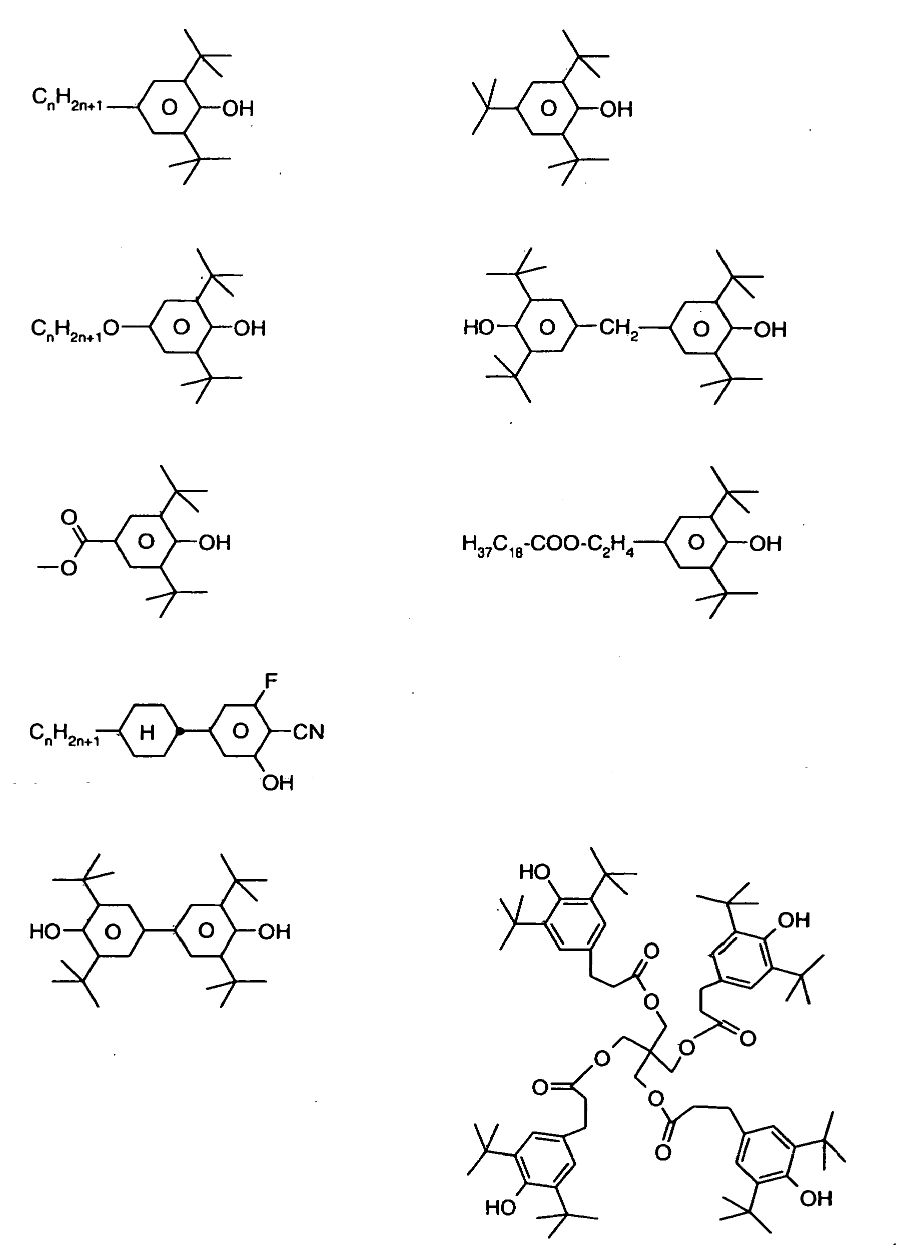

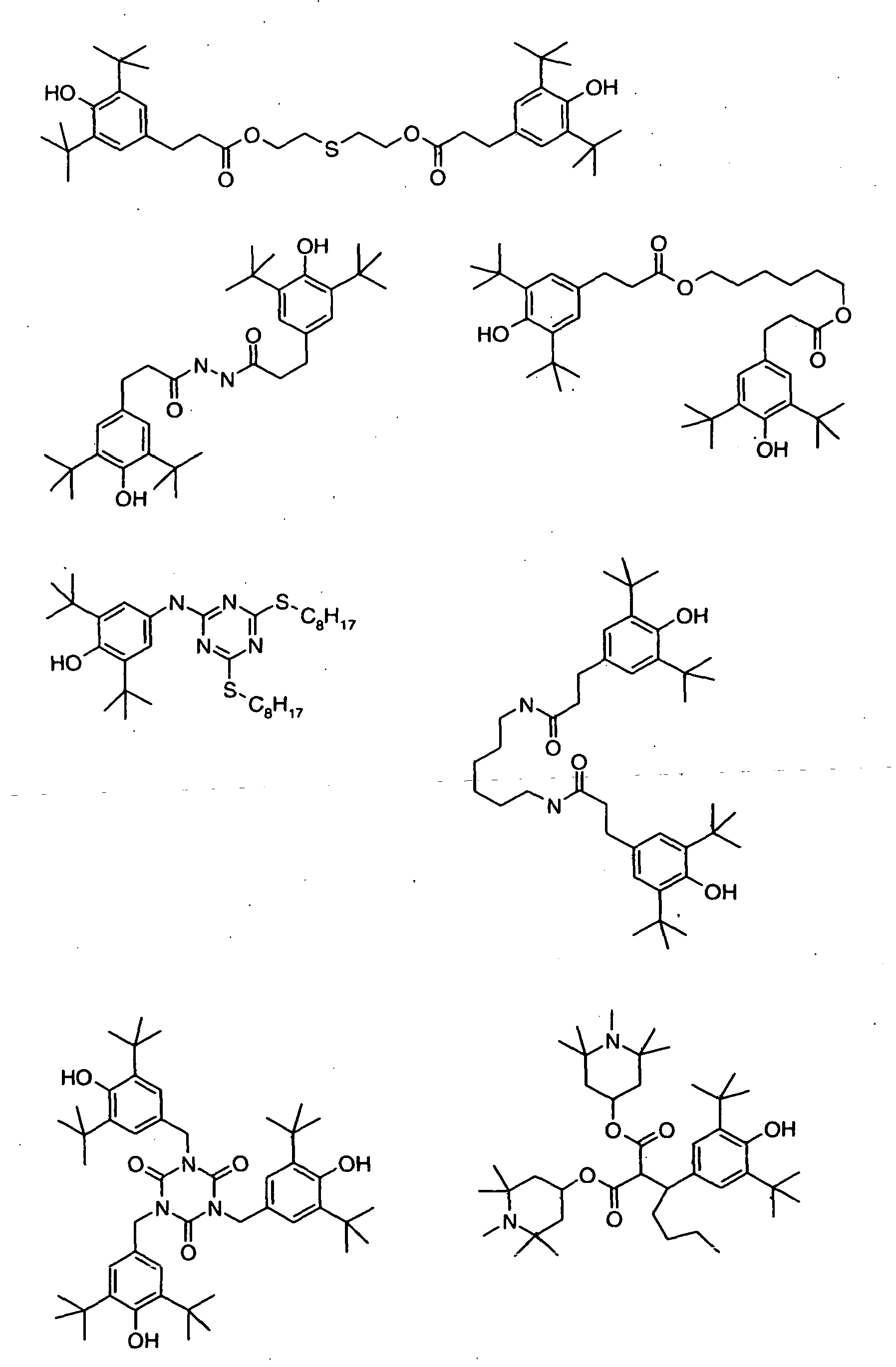

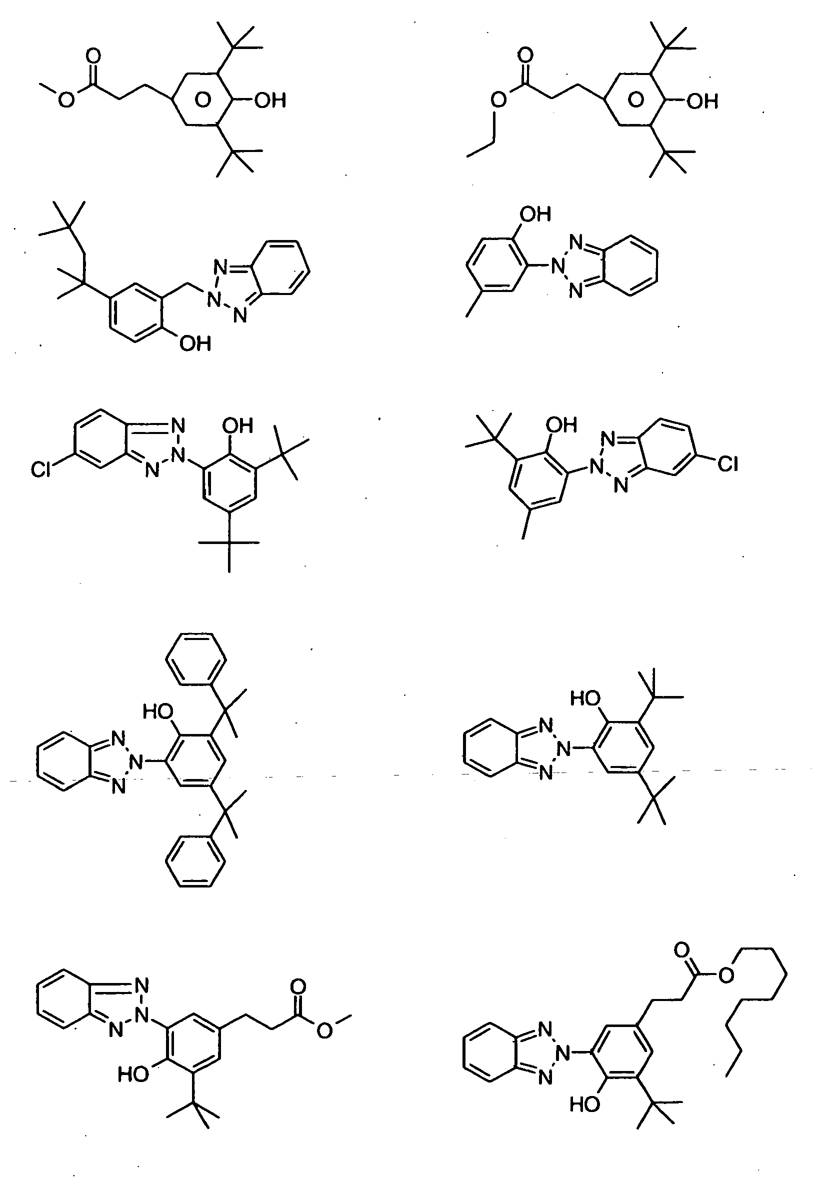

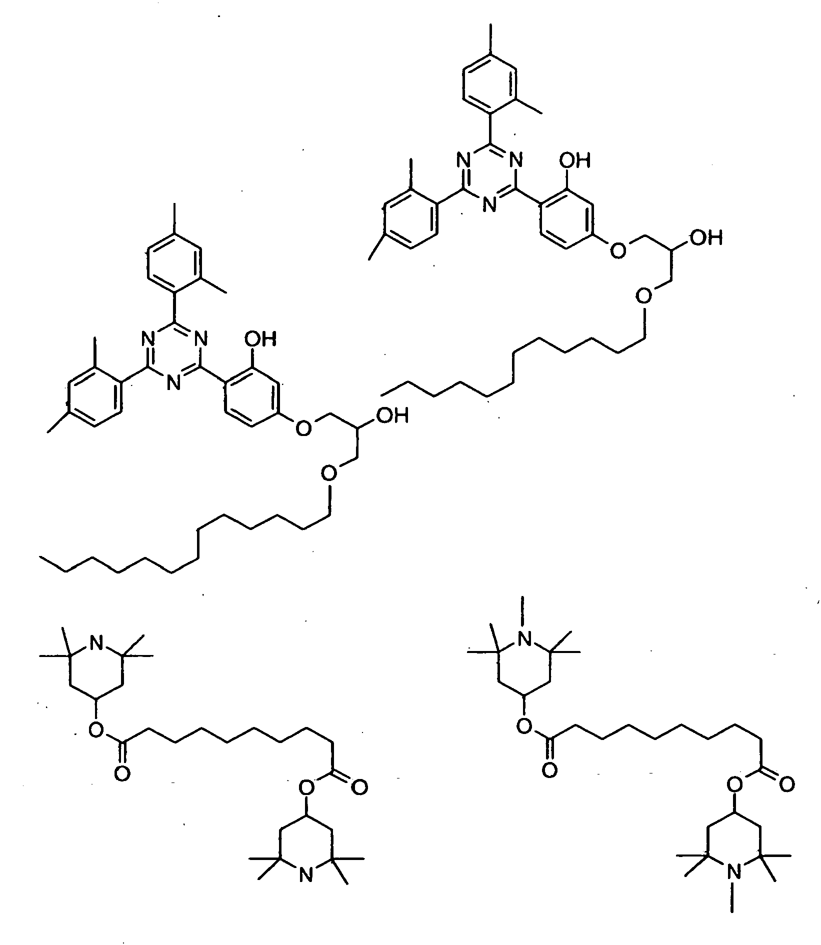

Die folgenden Beispiele sollen die Erfindung erläutem, ohne sie zu begrenzen. Vor- und nachstehend bedeuten
- Vₒ: Schwellenspannung, kapazitiv [V] bei 20 °C
- Δn: die optische Anisotropie gemessen bei 20°C und 589 nm
- Δε: die dielektrische Anisotropie bei 20 °C und 1 kHz
- cp.: Klärpunkt [°C]
- γ₁: Rotationsviskosität gemessen bei 20 °C [mPa·s]
- LTS: Low temperature stability (nematische Phase), bestimmt in Testzellen

Die zur Messung der Schwellenspannung verwendete Anzeige weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homöotrope Orientierung der Flüssigkristalle bewirken.

Alle physikalischen Eigenschaften werden und wurden nach "Merck Liquid Crystals, Physical Properties of Liquid Crystals", Status Nov. 1997, Merck KGaA, Deutschland bestimmt und gelten bei einer Temperatur von 20 °C, sofern nicht explizit anders angegeben.

Alle %-Angaben in dieser Anmeldung sind, sofern nicht anders angegeben, Gewichtsprozent.

### Mischungsbeispiele

### Beispiel 1

| | | | |
|---|---|---|---|
| CY-3-02 | 20.00% | Klärpunkt [°C]: | +89,5 |
| CY-5-02 | 3,00 % | Δn [589 nm, 20 °C]: | +0,0909 |
| CCY-3-O3 | 12,00 % | ε∥ [1 kHz, 20° C]: | 3,5 |
| CCY-4-O2 | 8,00 % | Δε [1 kHz, 20 °C]: | -3,5 |
| CPY-2-02 | 12,00 % | K₁ [pN, 20 °C]: | 13,8 |
| CPY-3-02 | 4,00 % | K₃ [pN, 20 °C]: | 15,0 |
| CC-4-V | 20,00 % | K₃/K₁ [pN, 20 °C]: | 1,09 |
| CC-3-V1 | 11,00 % | γ₁ [mPa·s, 20 °C]: | 120 |
| CCVC-V-V | 10,00 % | V₀ [V]: | 2,18 |

### Beispiel 2

| | | | |
|---|---|---|---|
| CY-3-02 | 20,00 % | Klärpunkt [°C]: | +78,5 |
| CY-5-02 | 4,00 % | Δn [589 nm, 20 °C]: | +0,0827 |
| CCY-3-O3 | 14,00 % | ε∥ [1 kHz, 20 °C]: | 3,6 |
| CCY-4-O2 | 13,00 % | Δε [1 kHz, 20 °C]: | -3,5 |
| CPY-2-O2 | 9,00 % | K₁ [pN, 20 °C]: | 12,3 |
| CC-3-V | 35,00 % | K₃ [pN, 20 °C]: | 14,3 |
| CCVC-V-V | 5,00 % | K₃/K₁ [pN, 20 °C]: | 1,16 |
| | | γ₁ [mPa·s, 20 °C]: | 92 |
| | | V₀ [V]: | 2,15 |
| | | LTS [-30 °C]: | nem. > 1000 h |

### Beispiel 3

| | | | |
|---|---|---|---|
| CY-5-O2 | 12,00 % | Klärpunkt [°C]: | +72,5 |
| CY-3-O4 | 14,00% | Δn [589 nm, 20 °C]: | +0,0762 |
| CY-5-O4 | 16,00 % | ε∥ [1 kHz, 20 °C]: | 3,5 |
| CCY-3-02 | 10,00 % | Δε [1 kHz, 20 °C]: | -3,6 |
| CCY-5-O2 | 11,00 % | K₁ [pN, 20 °C]: | 14,1 |
| CCH-35 | 8,00 % | K₃ [pN, 20°C]: | 14,8 |
| CC-5-V | 11,00 % | K₃/K₁ [pN, 20 °C]: | 1,05 |
| CC-3-V1 | 12,00 % | γ1 [mPa·s, 20 °Cj: | 114 |
| CCC-V-V | 6,00 % | V₀ [V]: | 2,14 |

### Beispiel 4

| | | | |
|---|---|---|---|
| CY-3-O2 | 18,00 % | Klärpunkt [°C]: | +79,5 |
| CY-3-O4 | 4,00 % | Δn [589 nm, 20 °C]: | +0,0806 |
| CY-5-02 | 11,00 % | ε∥ [1 kHz, 20 °C]: | 3,6 |
| CCY-3-O2 | 4,00 % | Δε [1 kHz, 20 °C]: | -3,8 |
| CCY-4-O2 | 10,00 % | K₁ [pN, 20 °C]: | 14,1 |
| CCY-3-O3 | 12,00 % | K₃ [pN, 20 °C]: | 15,3 |
| CPY-2-O2 | 4,00 % | K₃/K₁ [pN, 20°C]: | 1,09 |
| CC-5-V | 20,00 % | γ₁ [mPa-s, 20 °C]: | 116 |
| CC-3-V1 | 12,00% | V₀ [V]: | 2,13 |
| CCC-3-V | 5,00 % | | |

### Beispiel 5

| | | | |
|---|---|---|---|
| CY-3-O2 | 13,00 % | Klärpunkt [°C] | +74,5 |
| CY-3-O4 | 9,00 % | Δn [589 nm, 20 °C]: | +0,0834 |
| CY-5-02 | 12,00 % | ε∥ [1 kHz, 20 °C]: | 3,5 |
| CCY-3-O2 | 12,00 % | Δε [1 kHz, 20 °C]: | -3,5 |
| CCY-5-02 | 3,00% | K₁ [pN, 20 °C]: | 14,1 |
| CPY-2-02 | 11,00% | K₃ [pN, 20 °C]: | 14,7 |
| CCH-35 | 7,00 % | K₃/K₁ [pN, 20 °C]: | 1,04 |
| CC-5-V | 20,00 % | γ₁ ·[mPa·s, 20 °C]: | 106 |
| CC-3-V1 | 8,00 % | V₀ [V]: | 2,15 |
| CCC-3-V | 5,00 % | | |

### Beispiel 6

| | | | |
|---|---|---|---|
| CY-3-O2 | 20,00 % | Klärpunkt [°C]: | +80,0 |
| CY-3-O4 | 5,00 % | Δn [589 nm, 20 °C]: | +0,0823 |
| CY-5-02 | 6,00 % | ε∥ [1 kHz, 20 °C]: | 3,6 |
| CCY-3-02 | 3,00 % | Δε [1 kHz, 20 °C]: | -3,7 |
| CCY-4-02 | 10,00 % | K₁ [pN, 20 °C]: | 14,2 |
| CCY-3-O3 | 12,00 % | K₃ [pN, 20 °C]: | 15,4 |
| CPY-2-O2 | 6,00 % | K₃/K₁ [pN, 20 °C]: | 1,09 |
| CC-5-V | 20,00 % | γ₁ [mPa·s, 20 °C]: | 115 |
| CC-3-V1 | 13,00 % | V₀ [V]: | 2,15 |
| CCC-3-V | 5,00 % | | |

### Beispiel 7

| | | | |
|---|---|---|---|
| CY-3-02 | 20,00 % | Klärpunkt [°C]: | +80,0 |
| CY-5-02 | 13,00 % | Δn [589 nm, 20 °C]: | +0,0826 |
| CCY-4-O2 | 10,00 % | ε∥ [1 kHz, 20 °C]: | 3,5 |
| CCY-3-O3 | 11,00 % | Δε [1 kHz, 20 °C]: | -3,6 |
| CPY-2-O2 | 7,00 % | K₁ [pN, 20 °C]: | 14,3 |
| CC-5-V | 20,00 % | K₃ [pN, 20°C]: | 15,1 |
| CC-3-V1 | 12,00 % | K₃/K₁ [pN, 20 °C]: | 1,06 |
| CCC-3-V | 4,00 % | γ₁ [mPa·s, 20 °C]: | 114 |
| CCC-3-2V | 3,00 % | V₀ [V]: | 2,16 |

## Patentansprüche

1. Flüssigkristallines Medium auf der Basis eines Gemisches von polaren Verbindungen mit einer negativen dielektrischen Anisotropie, **dadurch gekennzeichnet, dass** es mindestens eine Verbindung der Formell, I, 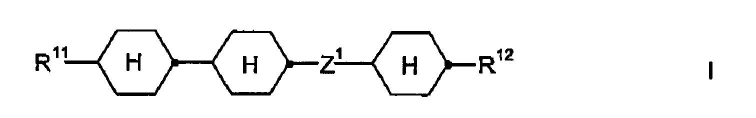 worin
R¹¹ und R¹² jeweils unabhängig voneinander einen unsubsti- tuierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 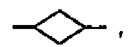 -C≡C-, -OC-O- oder -O-CO- so ersetzt sein können, dass O-Atome nicht direkt miteinander verknüpft sind, mit der Maßgabe, dass mindestens einer der Reste R¹¹ und R¹² Alkenyl mit 2 bis 6 C-Atomen bedeutet, und
Z¹ -CH=CH- oder eine Einfachbindung
bedeuten,
und
eine oder mehrere Verbindungen der Formeln IIA und/oder IIB, 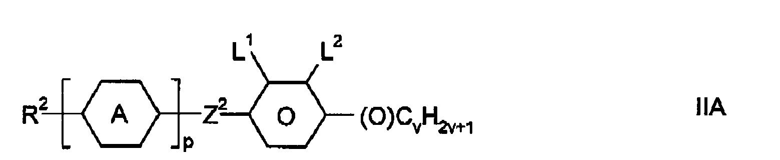 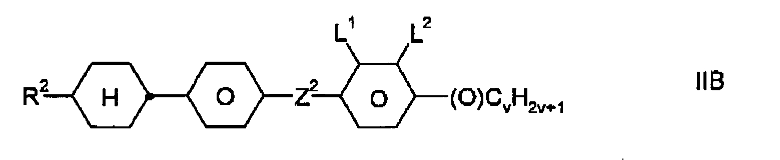 worin 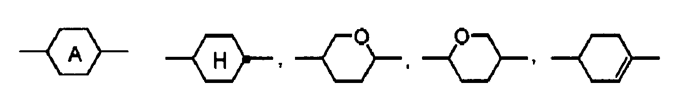 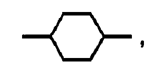 oder
R² einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 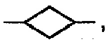 -C≡C-, -OC-O- oder -O-CO- so ersetzt sein können, dass O-Atome nicht direkt miteinander verknüpft sind,
Z² Einfachbindung, -CH=CH- oder -CH₂CH₂-,
p 1 oder 2, und
L¹ und L² jeweils unabhängig voneinander F, Cl, OCF₃, CF₃, CH₃, CH₂F, CHF₂,
v 1 bis 6
bedeuten,
enthält.

2. Flüssigkristallines Medium nach Anspruch 1, **dadurch gekennzeichnet, dass** es zusätzlich eine oder mehrere Verbindungen der Formel B-1 und/oder B-2, 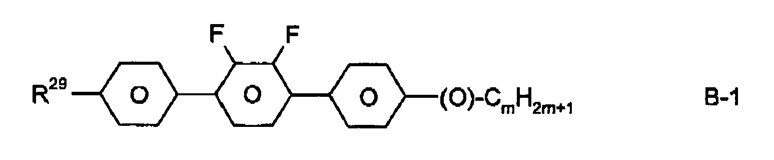 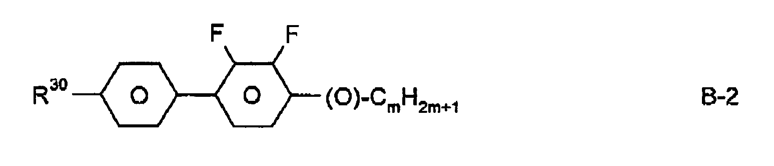 worin
R²⁹⁻³⁰ und die für R¹¹ in Anspruch 1 angegebenen Bedeutungen haben,
m 1-6
bedeuten,
enthält.

3. Flüssigkristallines Medium nach Anspruch 1 oder 2, **dadurch gekennzeichnet, dass** es zusätzlich eine oder mehrere Verbindungen der Formel III, 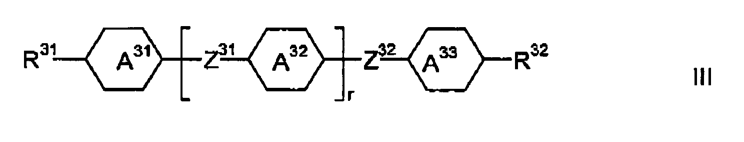 worin
R³¹ und R³² jeweils unabhängig voneinander einen unsubsti- tuierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 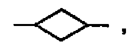 -C≡C-, -OC-O- oder -O-CO- so ersetzt sein können, dass O-Atome nicht direkt miteinander verknüpft sind, 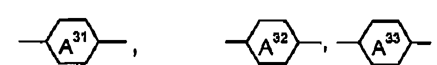
jeweils unabhängig voneinander, 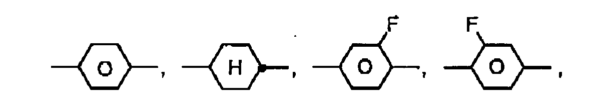 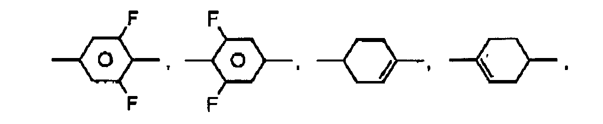 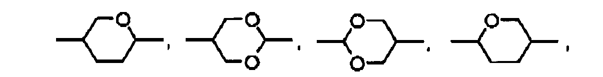 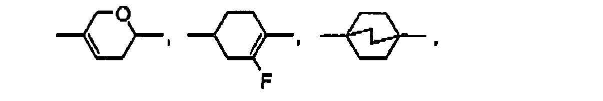
r 0, 1 oder 2,
Z³¹ und Z³² jeweils unabhängig voneinander eine Einfachbindung, -CH₂CH₂--, -C≡C-, -CH=CH-, -CF₂O-, -OCF₂-, -CF=CF-, -CF=CH-, -CH=CF-, -CH₂CF₂-, -CF₂CH₂-, -COO-, -OCO-, -CH₂O-, -OCH₂-; -(CH₂)₄-,
bedeuten,
enthält,
wobei die Verbindungen der Formel III nicht identisch sind mit den Verbindungen der Formel I.

4. Flüssigkristallines Medium nach einem oder mehreren der Anspruche 1 bis 3, **dadurch gekennzeichnet, dass** es ein, zwei, drei, vier oder mehr Verbindungen der Formel I enthält.

5. Flüssigkristallines Medium nach einem oder mehreren der Ansprüche 1 bis 4, **dadurch gekennzeichnet, dass** der Anteil an Verbindungen der Formel I im Gesamtgemisch mindestens 2 Gew.% beträgt.

6. Flüssigkristallines Medium nach einem oder mehreren der Ansprüche 1 bis 5, **dadurch gekennzeichnet, dass** der Anteil an Verbindungen der Formeln IIA und/oder IIB im Gesamtgemisch mindestens 20 Gew.% beträgt.

7. Flüssigkristallines Medium nach einem oder mehreren der Ansprüche 1 bis 6, **dadurch gekennzeichnet, dass** der Anteil an Verbindungen der Formel III im Gesamtgemisch mindestens 3 Gew.% beträgt.

8. Flüssigkristallines Medium nach einem oder mehreren der Ansprüche 1 bis 7, **dadurch gekennzeichnet, dass** es mindestens eine Verbindung ausgewählt aus der Gruppe der Verbindungen der Formeln I1a bis I1g und I2a bis I2h, 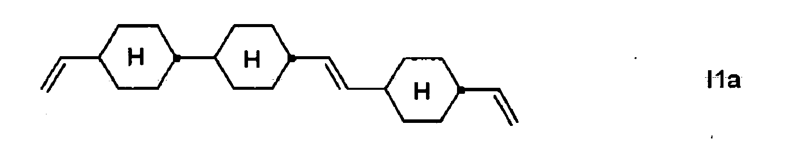 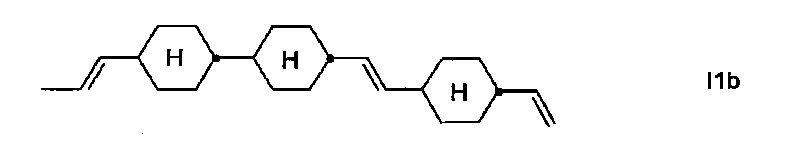 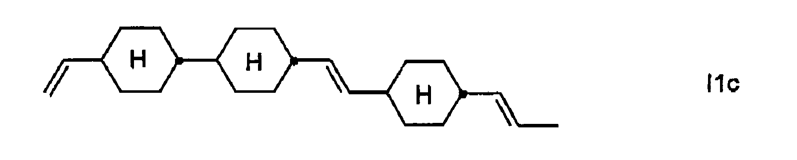 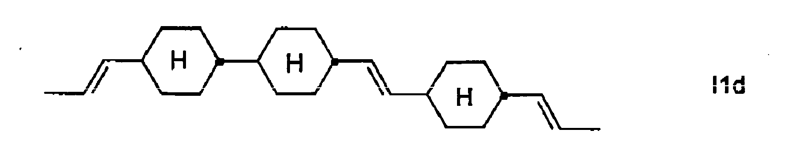 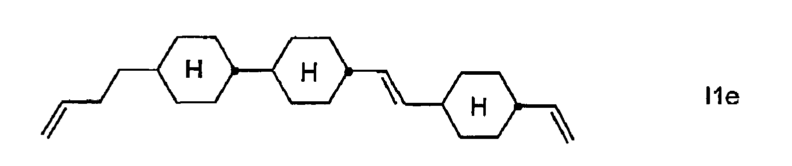 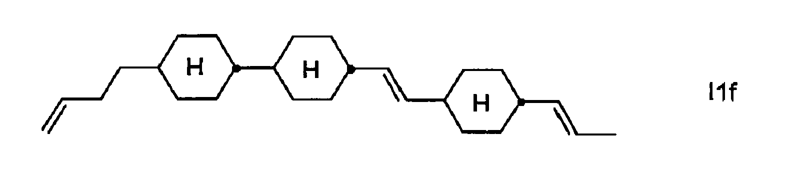 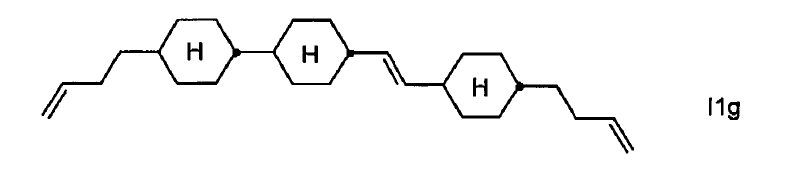 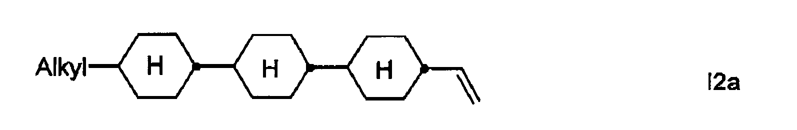 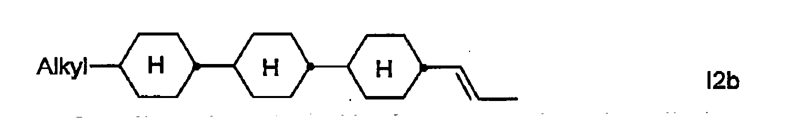 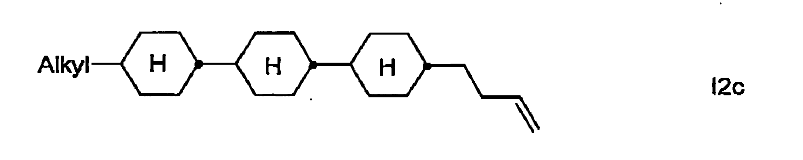 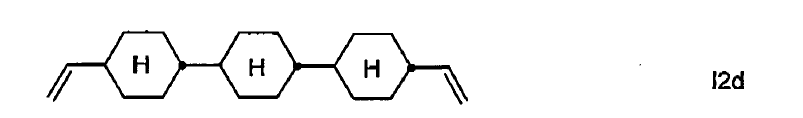 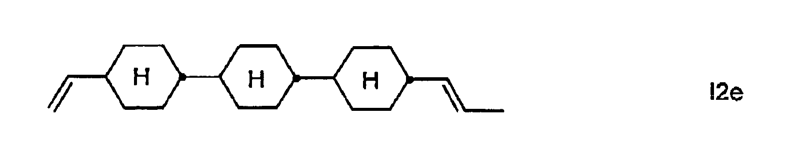 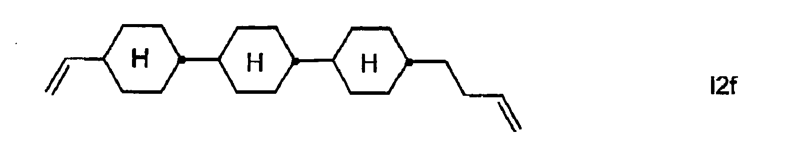 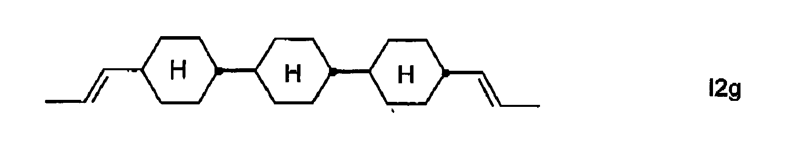 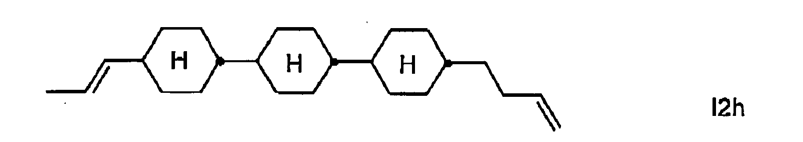 enthält.

9. Flüssigkristallines Medium nach einem oder mehreren der Ansprüche 1 bis 8, **dadurch gekennzeichnet, dass** es eine oder mehrere Verbindungen der Formeln IIA-1 bis IIA-18, 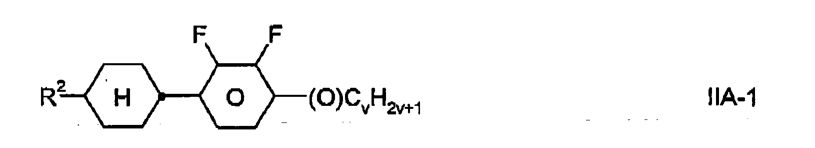 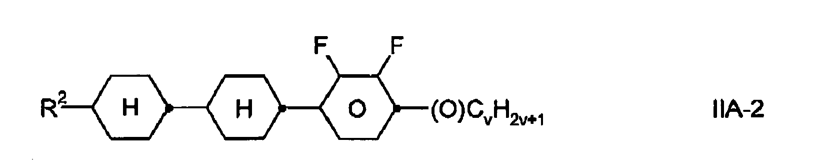 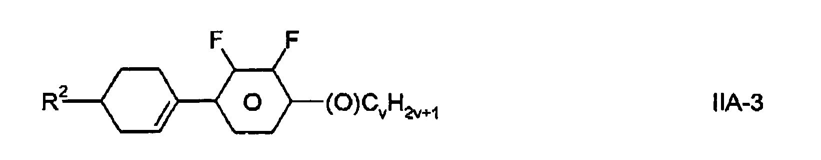 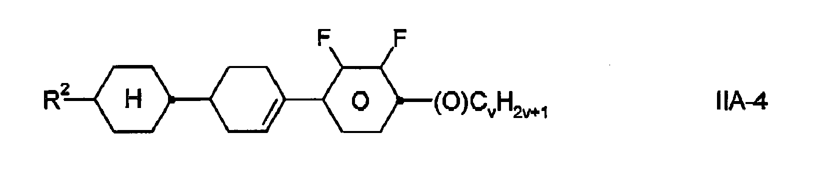 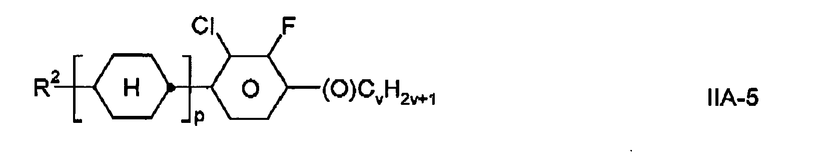 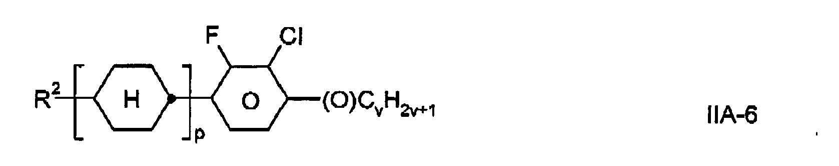 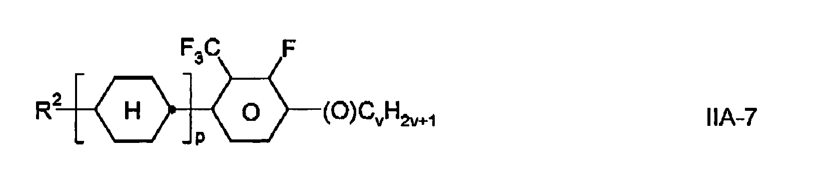 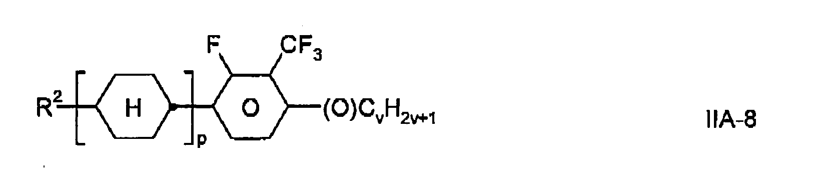 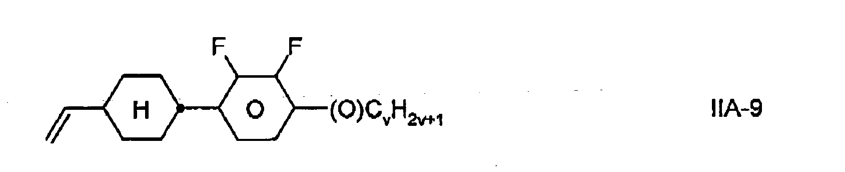 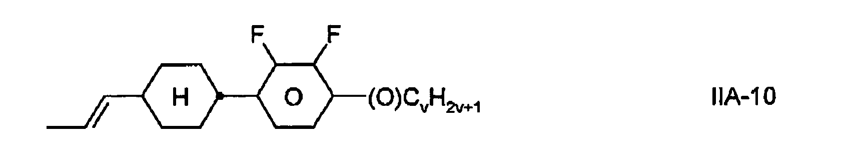 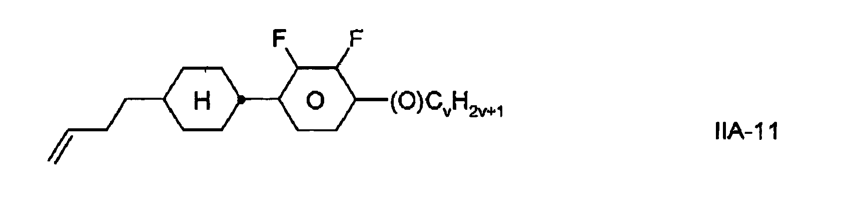 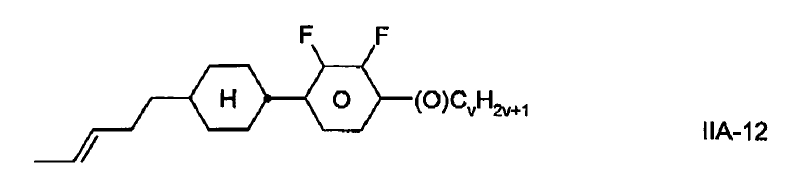 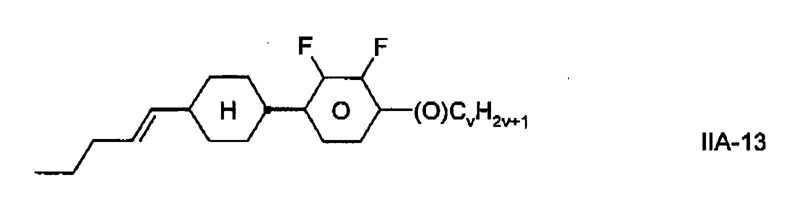 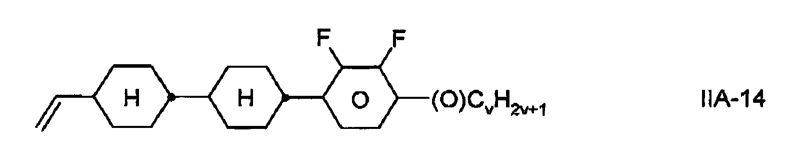 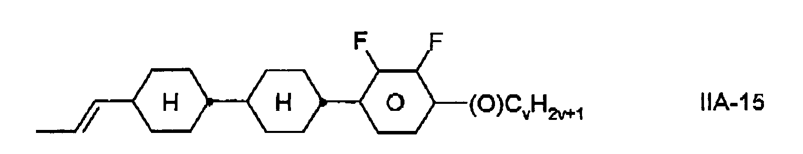 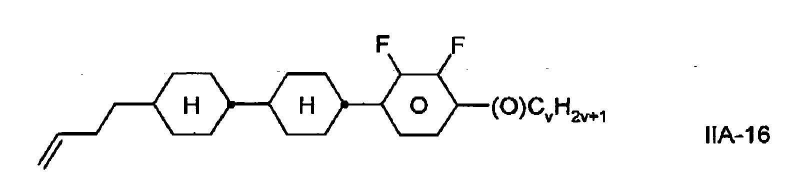 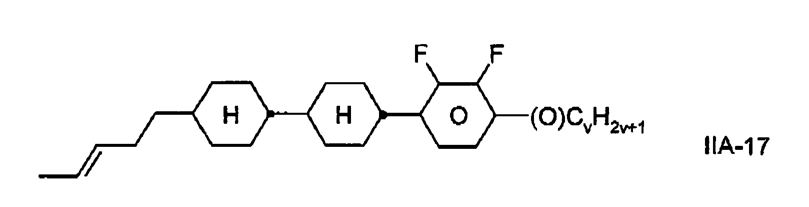 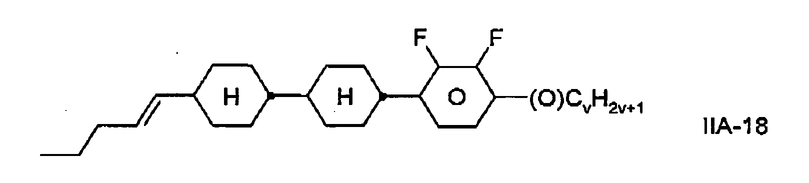 worin R² und v die in Anspruch 1 angegebenen Bedeutungen haben, enthält.

10. Flüssigkristallines Medium nach einem oder mehreren der Ansprüche 1 bis 9, **dadurch gekennzeichnet, dass** es eine oder mehrere Verbindungen der Formeln IIB-1 bis IIB-7, 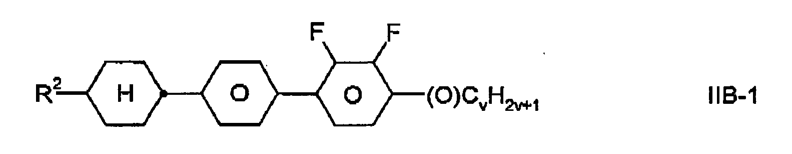 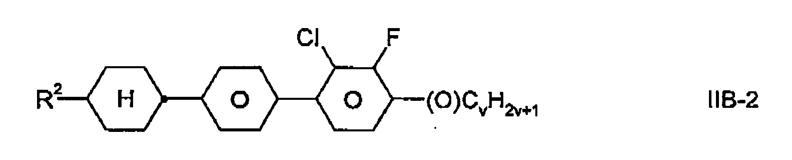 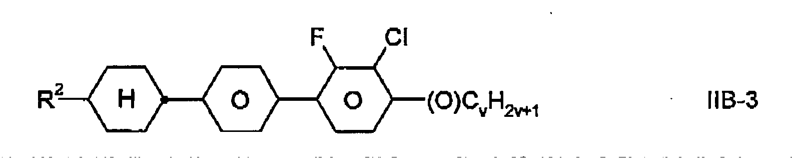 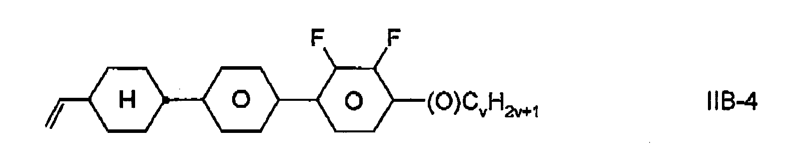 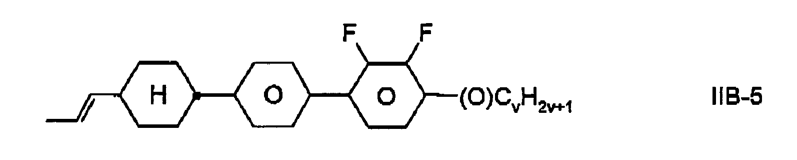 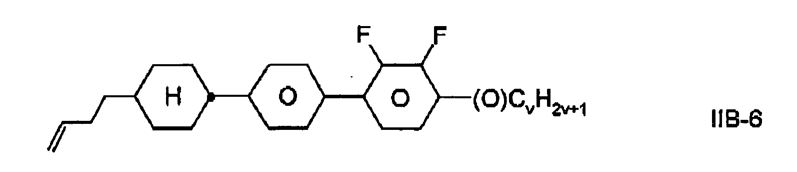 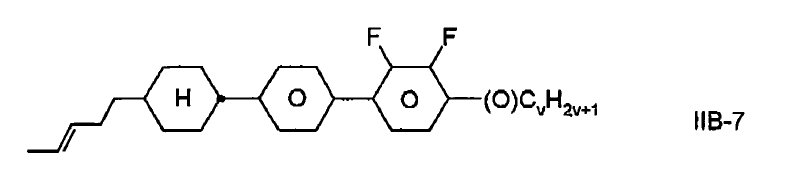 worin R² und v die in Anspruch 1 angegebenen Bedeutungen haben, enthält.

11. Flüssigkristallines Medium nach einem oder mehreren der Ansprüche 1 bis 10, **dadurch gekennzeichnet, dass** L¹ und L² in den Verbindungen der Formeln IIA und/oder IIB jeweils Fluor bedeutet.

12. Flüssigkristallines Medium nach einem oder mehreren der Ansprüche 1 bis 11, **dadurch gekennzeichnet, dass** es eine oder mehrere Verbindungen ausgewählt aus den Formeln IIIa bis IIIq, 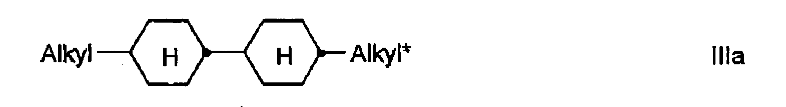 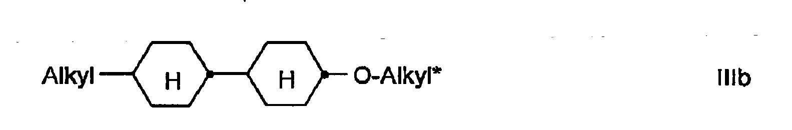 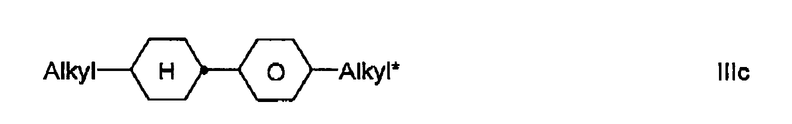 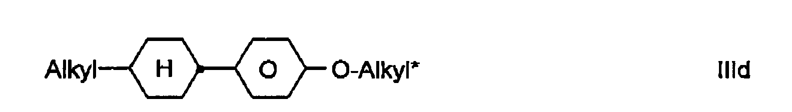 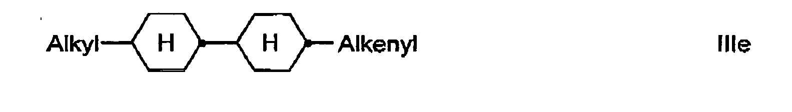 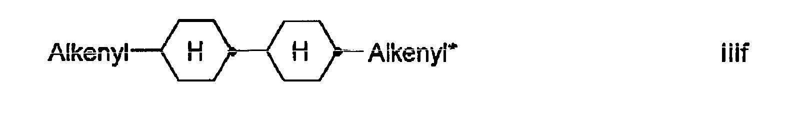 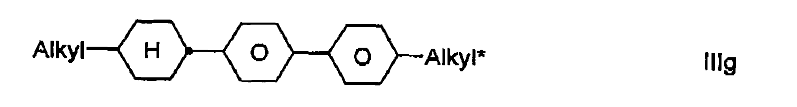 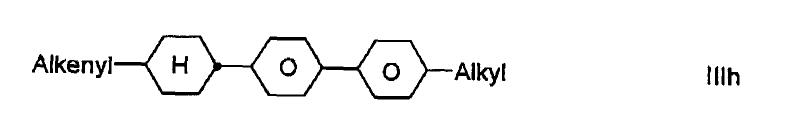 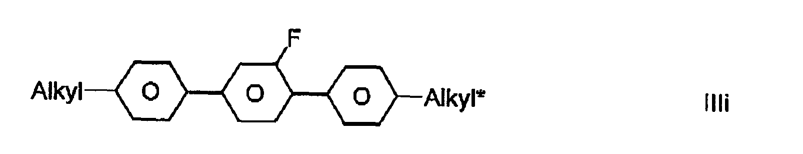 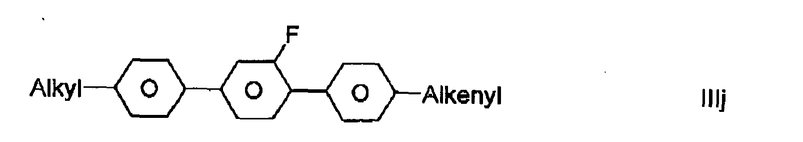 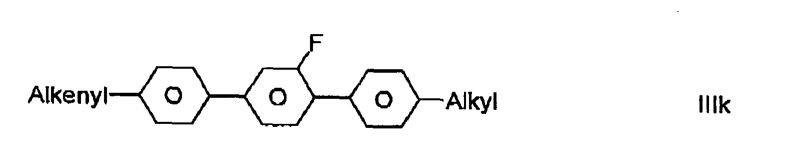 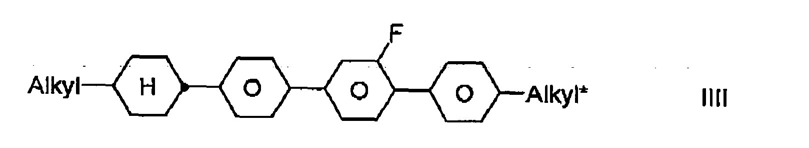 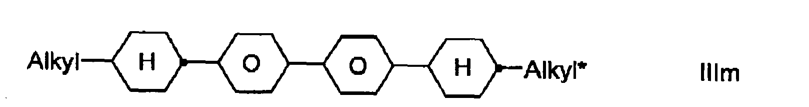 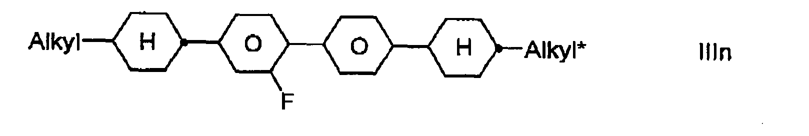 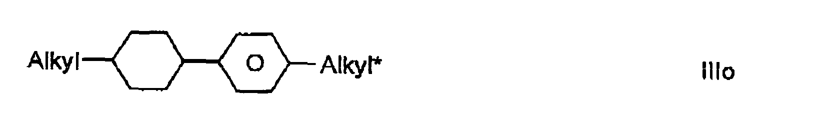 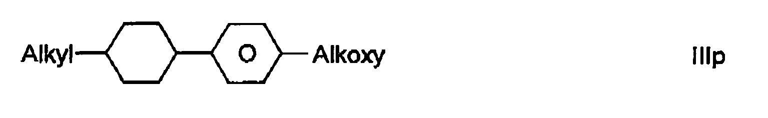 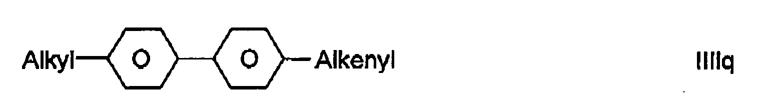 worin
Alkyl und Alkyl* jeweils unabhängig voneinander einen geradkettigen Alkylrest mit 1-6 C-Atomen, und
Alkoxy einen geradkettigen Alkoxyrest mit 1-6 C-Atomen
Alkenyl und Alkenyl* jeweils unabhängig voneinander einen geradkettigen Alkenylrest mit 2-6 C-Atomen
bedeuten,
enthält.

13. Flüssigkristallines Medium nach einem oder mehreren der Ansprüche 1 bis 12, **dadurch gekennzeichnet, dass** es zusätzlich eine oder mehrere Verbindungen der Formeln, 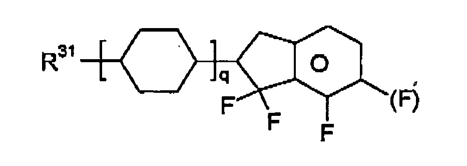 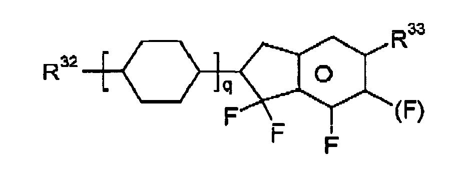 worin
R³¹⁻³² die für R¹¹ in Anspruch 1 angegebenen Bedeutungen haben,
R³³ CH₃, C₂H₅ oder n-C₃H₇, und
q 1 oder 2
bedeuten,
enthält.

14. Flüssigkristallines Medium nach einem oder mehreren der Ansprüche 1 bis 13, **dadurch gekennzeichnet, dass** es zusätzlich eine oder mehrere Verbindungen der Formeln O1 und/oder 02, 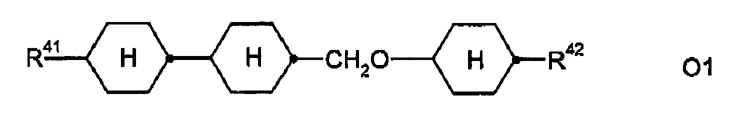 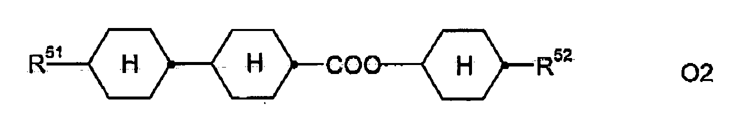 worin R⁴¹, R⁴², R⁵¹ und R⁵² die für R¹¹ in Anspruch 1 angegebenen Bedeutungen haben,
enthält.

15. Flüssigkristallines Medium nach einem oder mehreren der Ansprüche 1 bis 14, **dadurch gekennzeichnet, dass** es
2-20 Gew.% einer oder mehrerer Verbindungen der Formel I und
20-80 Gew.% einer oder mehrerer Verbindungen der Formeln IIA und/oder IIB
enthält bzw. daraus besteht.

16. Verfahren zur Herstellung eines flüssigkristallinen Mediums nach einem oder mehreren der Ansprüche 1 bis 15, **dadurch gekennzeichnet, dass** man eine oder mehrere Verbindungen der Formel I mit einer oder mehreren weiteren mesogenen Verbindungen mischt.

17. Verwendung eines flüssigkristallinen Mediums nach einem oder mehreren der Ansprüche 1 bis 15 in einer elektrooptischen Anzeige.

18. Elektrooptische Anzeige mit einer Aktivmatrix-Addressierung basierend auf dem ECB-, FFS- oder dem IPS-Effekt, **dadurch gekennzeichnet, dass** sie als Dielektrikum ein flüssigkristallines Medium nach einem oder mehreren der Ansprüche 1 bis 15 enthält.

## Claims

1. Liquid-crystalline medium based on a mixture of polar compounds having negative dielectric anisotropy, **characterised in that** it comprises at least one compound of the formula I, 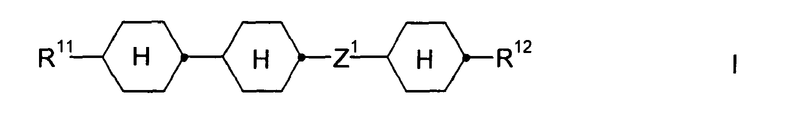 in which
R¹¹ and R¹² each, independently of one another, denote an alkyl or alkenyl radical having up to 15 C atoms which is unsub- stituted, monosubstituted by CN or CF₃ or at least monosubstituted by halogen, where, in addition, one or more CH₂ groups in these radicals may be replaced by -O-, -S-, 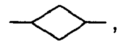 -C≡C-, -OC-O- or -O-CO- in such a way that O atoms are not linked directly to one another, with the proviso that at least one of the radicals R¹¹ and R¹² denotes alkenyl having 2 to 6 C atoms, and
Z¹ denotes -CH=CH- or a single bond,
and
one or more compounds of the formulae IIA and/or IIB, 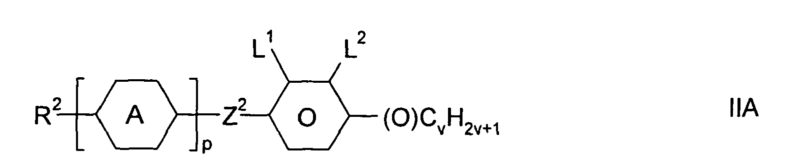 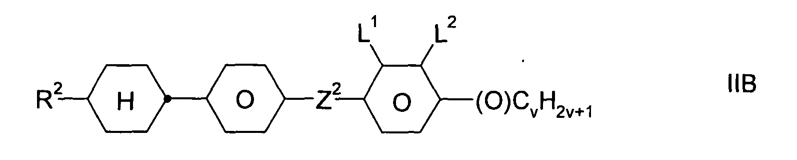 in which 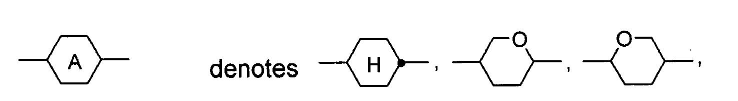 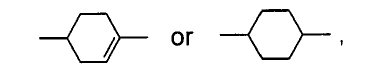
R² denotes an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 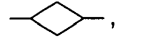 -C≡C-, -OC-O- or -O-CO- in such a way that O atoms are not linked directly to one another,
Z² denotes a single bond, -CH=CH- or -CH₂CH₂-,
p denotes 1 or 2, and
L¹ and L² each, independently of one another, denote F, Cl, OCF₃, CF₃, CH₃, CH₂F, CHF₂,
v denotes 1 to 6.

2. Liquid-crystalline medium according to Claim 1, **characterised in that** it additionally comprises one or more compounds of the formulae B-1 and/or B-2, 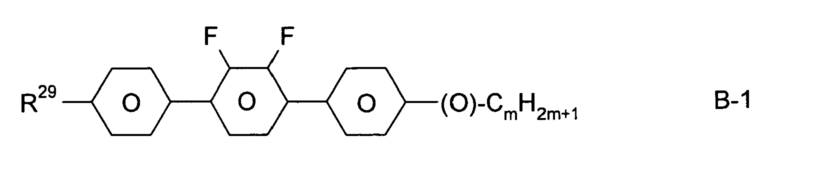 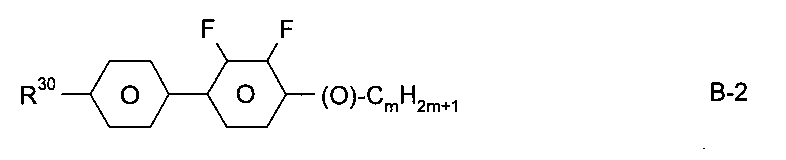 in which
R²⁹⁻³⁰ and have the meanings indicated for R¹¹ in Claim 1,
m denotes 1-6.

3. Liquid-crystalline medium according to Claim 1 or 2, **characterised in that** it additionally comprises one or more compounds of the formula III, 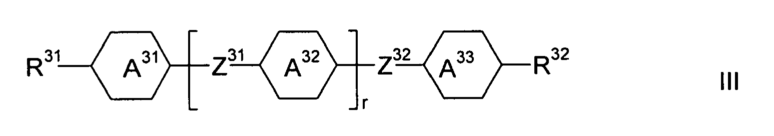 in which
R³¹ and R³² each, independently of one another, denote an alkyl or alkenyl radical having up to 15 C atoms which is unsub- stituted, monosubstituted by CN or CF₃ or at least monosubstituted by halogen, where, in addition, one or more CH₂ groups in these radicals may be replaced by -O-, -S-, 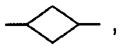 -C≡C-, -OC-O- or -O-CO- in such a way that O atoms are not linked directly to one another, 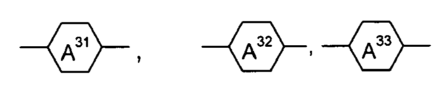 each, independently of one
another, denote 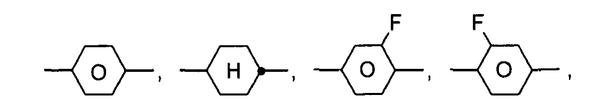 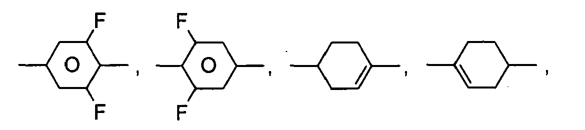 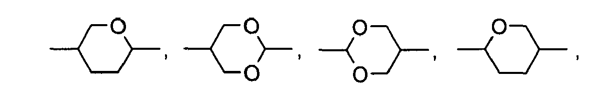 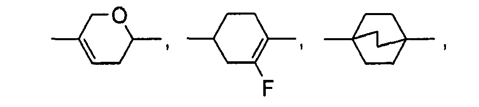
r denotes 0, 1 or 2,
Z³¹ and Z³² each, independently of one another, denote a single bond, -CH₂CH₂-, -C≡C-, -CH=CH-, -CF₂O-, -OCF₂-, -CF=CF-, -CF=CH-, -CH=CF-, -CH₂CF₂-, -CF₂CH₂-, -COO-, -OCO-, -CH₂O-, -OCH₂-, -(CH₂)₄-,
where the compounds of the formula III are not identical to the compounds of the formula I.

4. Liquid-crystalline medium according to one or more of Claims 1 to 3, **characterised in that** it comprises one, two, three, four or more compounds of the formula I.

5. Liquid-crystalline medium according to one or more of Claims 1 to 4, **characterised in that** the proportion of compounds of the formula I in the mixture as a whole is at least 2% by weight.

6. Liquid-crystalline medium according to one or more of Claims 1 to 5, **characterised in that** the proportion of compounds of the formulae IIA and/or IIB in the mixture as a whole is at least 20% by weight.

7. Liquid-crystalline medium according to one or more of Claims 1 to 6, **characterised in that** the proportion of compounds of the formula III in the mixture as a whole is at least 3% by weight.

8. Liquid-crystalline medium according to one or more of Claims 1 to 7, **characterised in that** it comprises at least one compound selected from the group of the compounds of the formulae I1a to I1g and I2a to I2h,

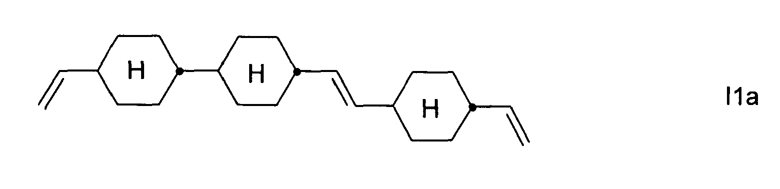

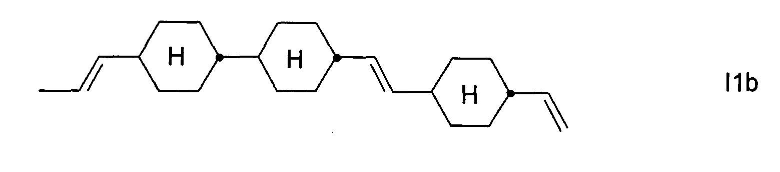

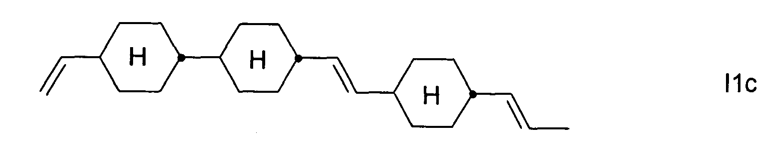

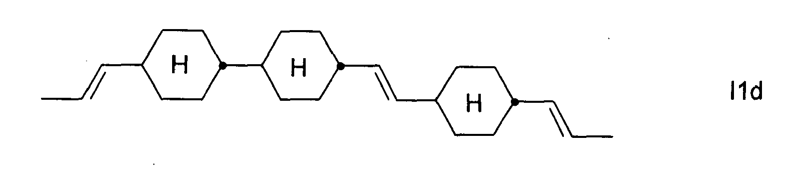

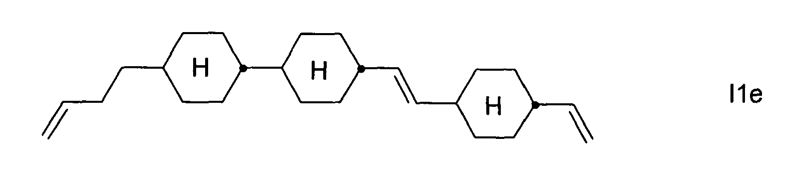

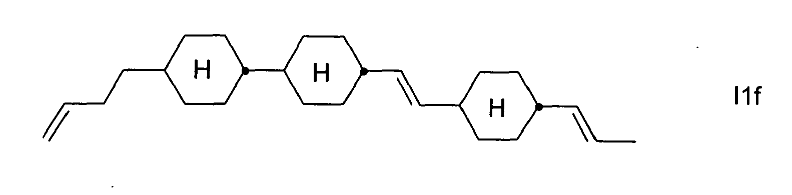

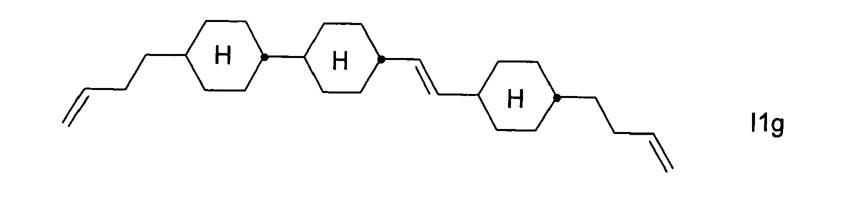

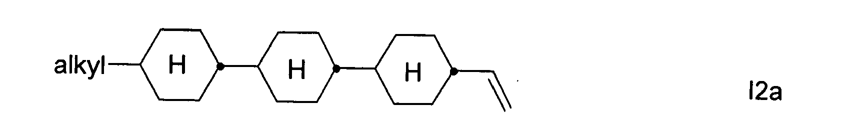

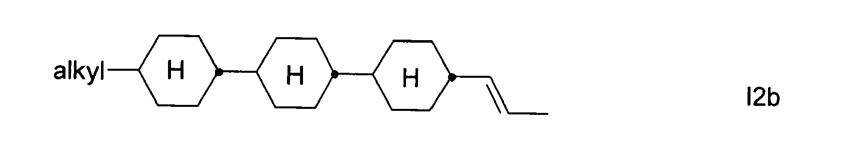

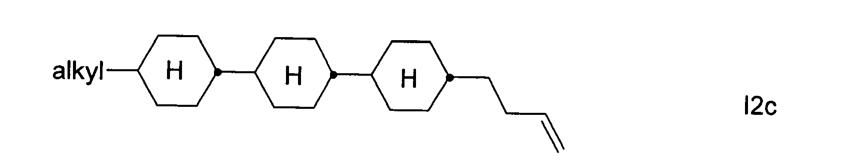

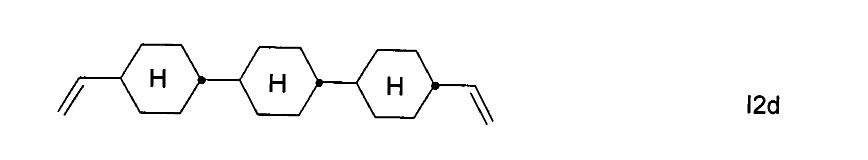

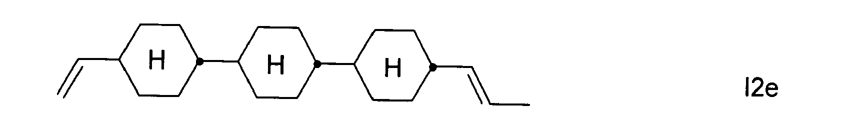

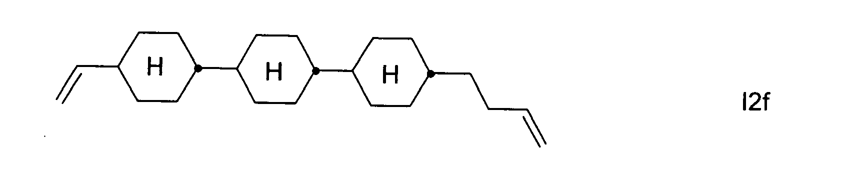

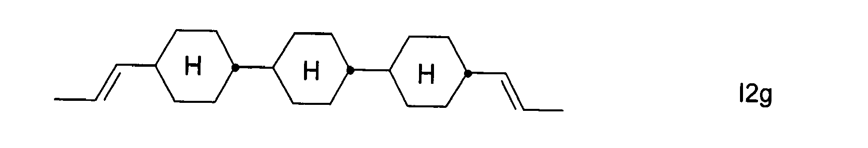

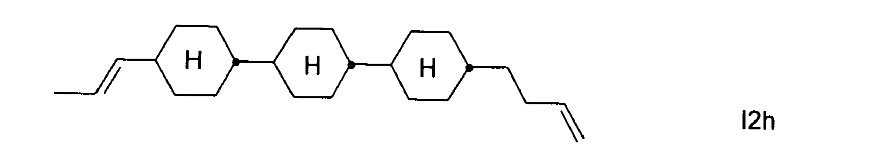

9. Liquid-crystalline medium according to one or more of Claims 1 to 8, **characterised in that** it comprises one or more compounds of the formulae IIA-1 to IIA-18, 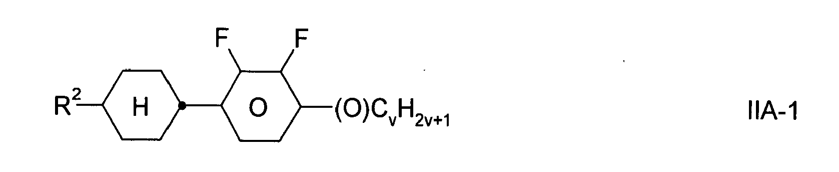 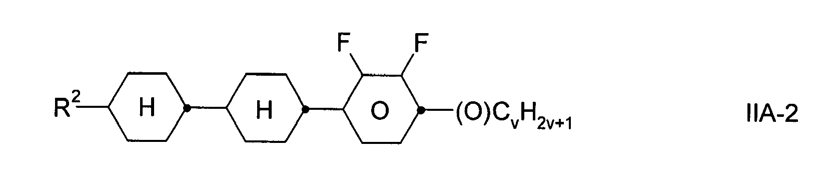 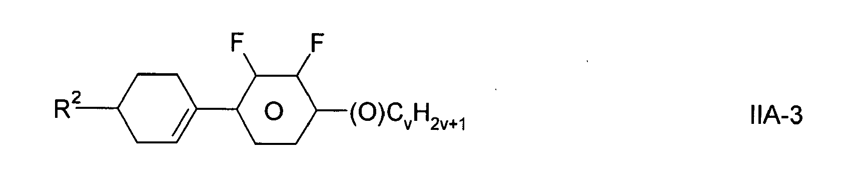 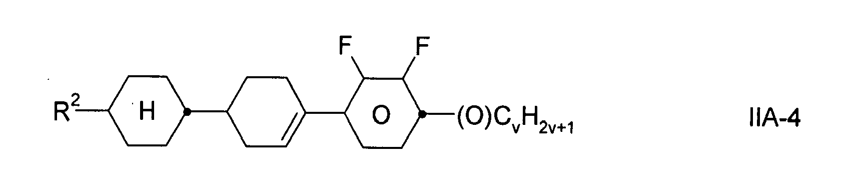 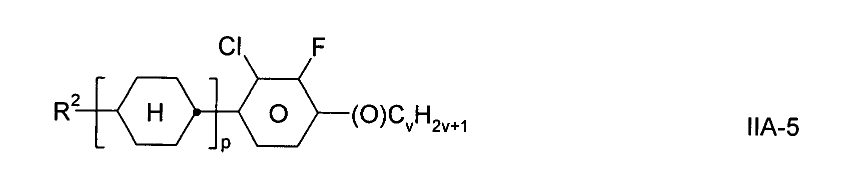 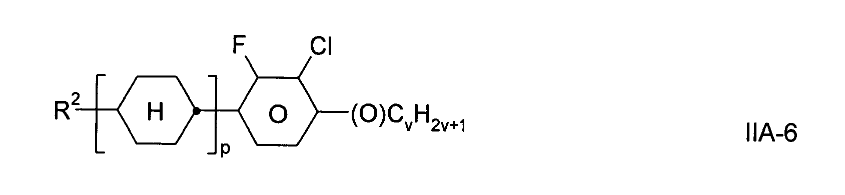 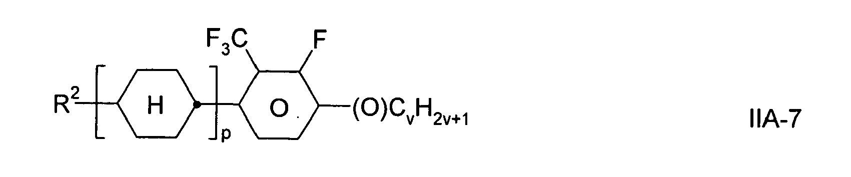 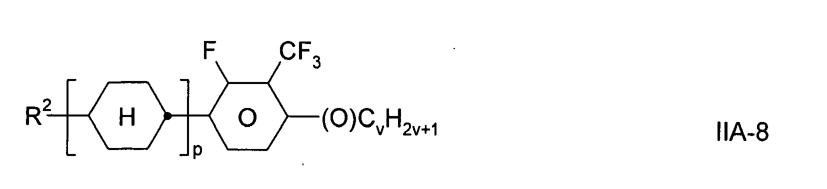 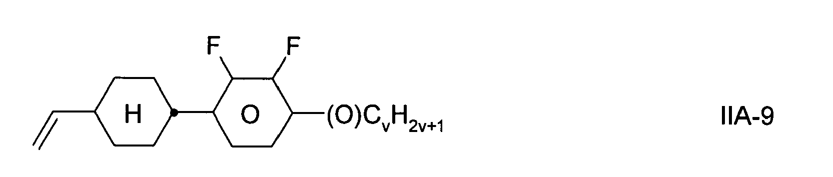 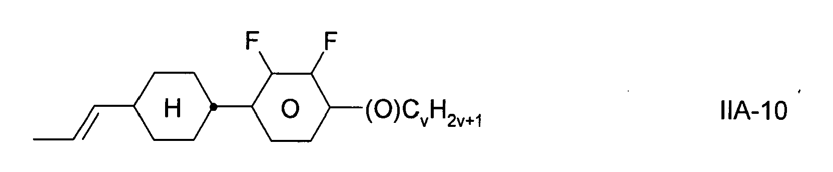 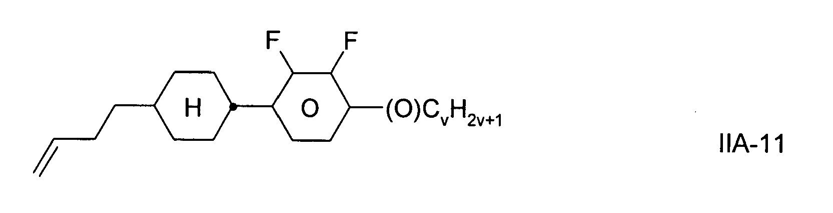 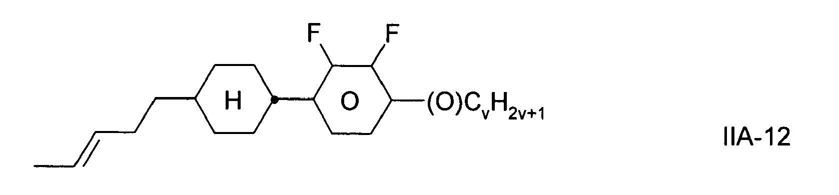 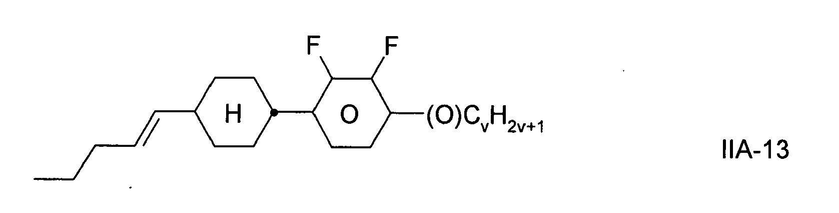 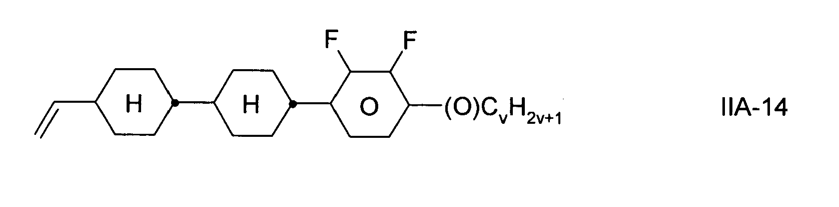 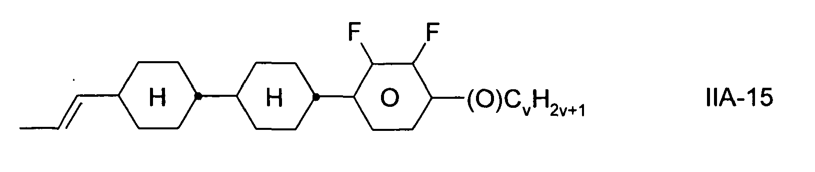 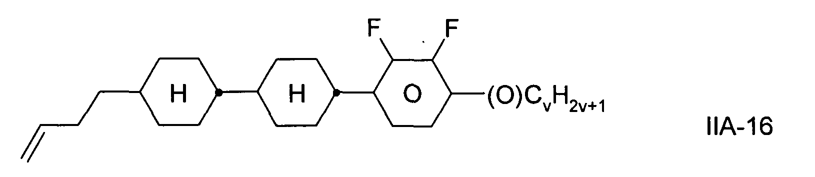 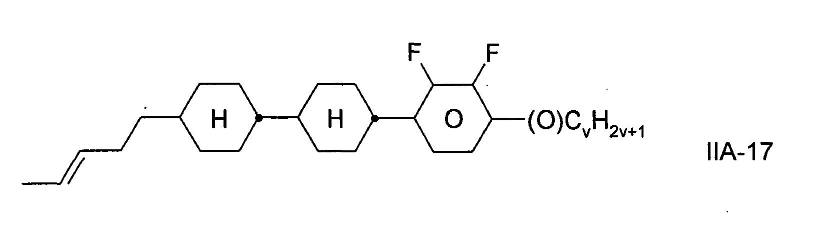 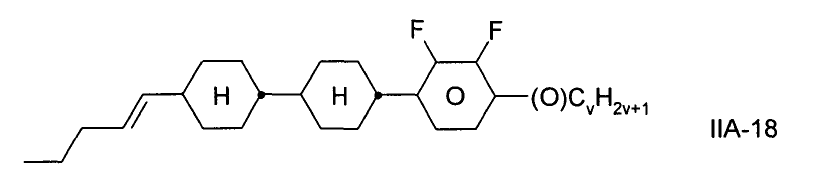 in which R² and v have the meanings indicated in Claim 1.

10. Liquid-crystalline medium according to one or more of Claims 1 to 9, **characterised in that** it comprises one or more compounds of the formulae IIB-1 to IIB-7, 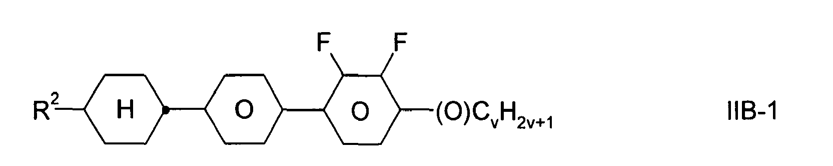 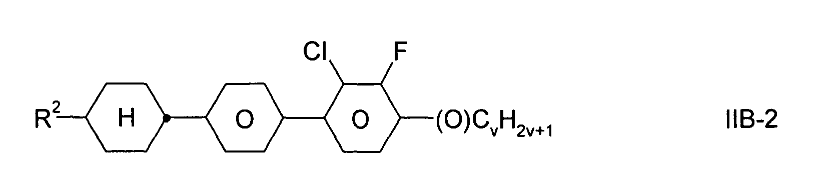 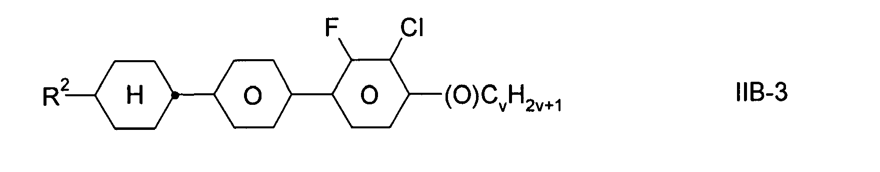 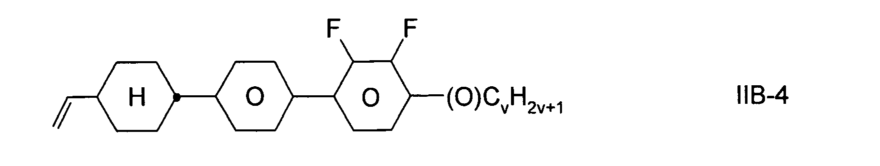 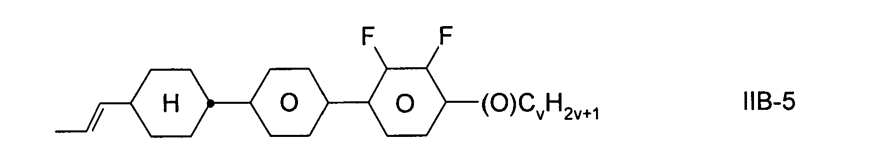 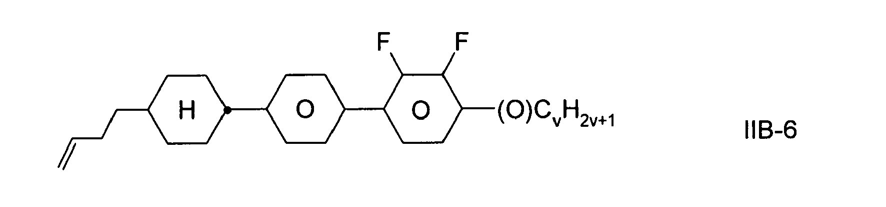 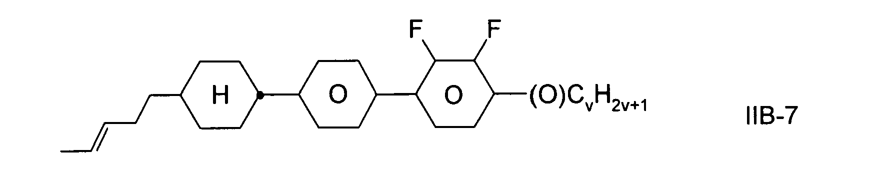 in which R² and v have the meanings indicated in Claim 1.

11. Liquid-crystalline medium according to one or more of Claims 1 to 10, **characterised in that** L¹ and L² in the compounds of the formulae IIA and/or IIB each denote fluorine.

12. Liquid-crystalline medium according to one or more of Claims 1 to 11, **characterised in that** it comprises one or more compounds selected from the formulae IIIa to IIIq, 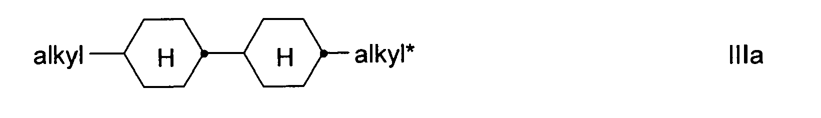 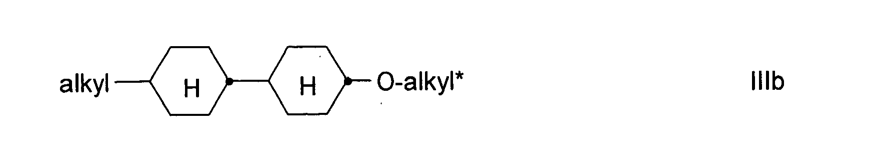 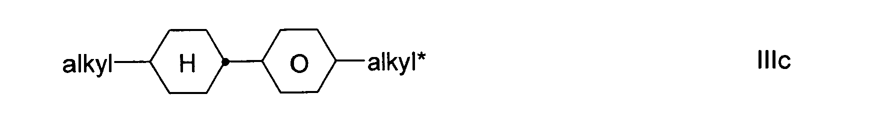 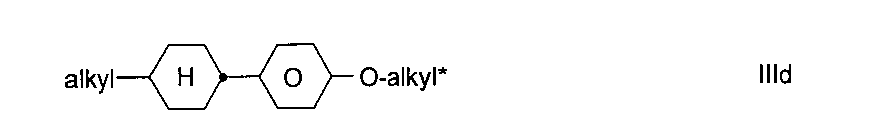 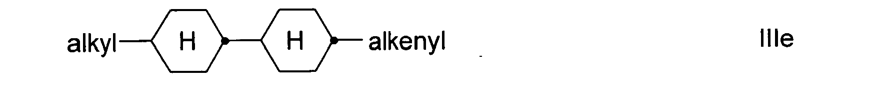 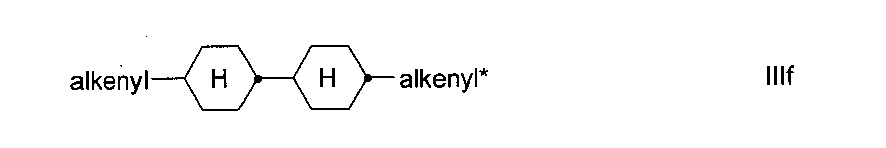 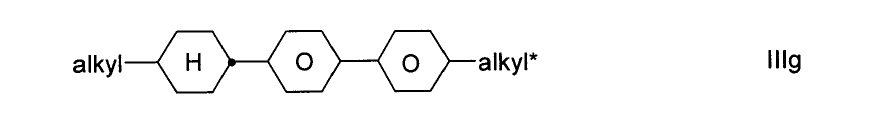 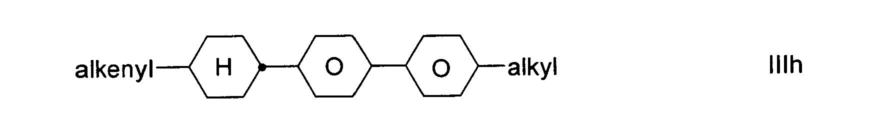 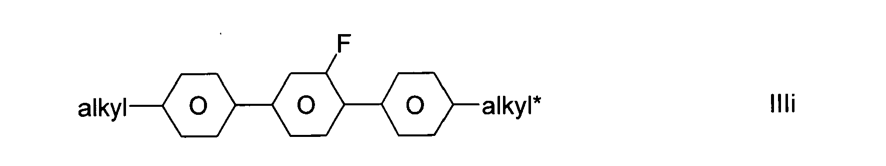 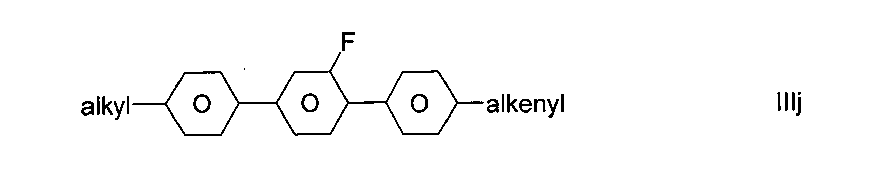 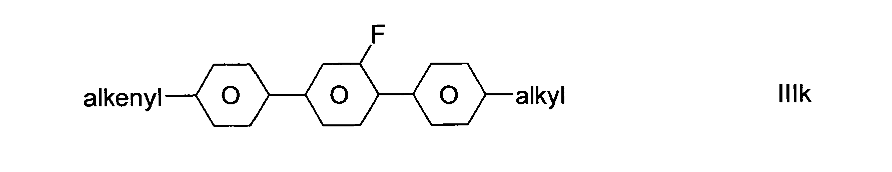 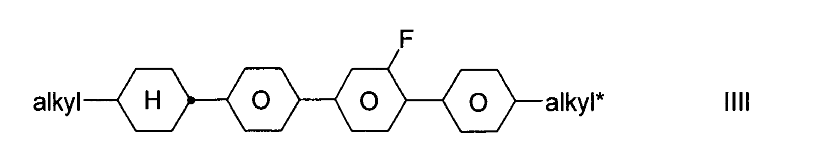 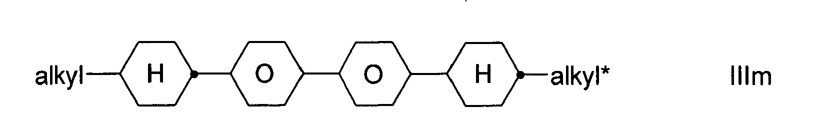 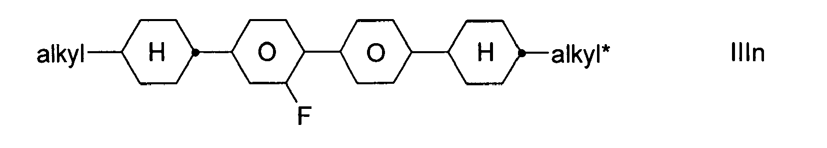 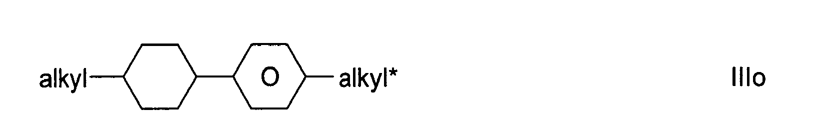 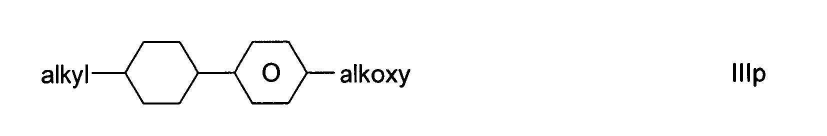 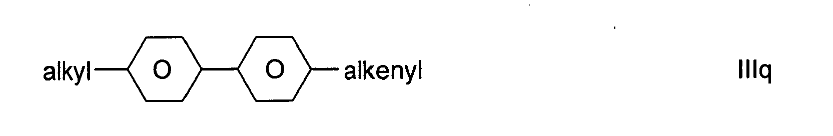 in which
alkyl and alkyl* each, independently of one another, denote a straight- chain alkyl radical having 1-6 C atoms,
alkoxy denotes a straight-chain alkoxy radical having 1-6 C atoms, and
alkenyl and alkenyl* each, independently of one another, denote a straight- chain alkenyl radical having 2-6 C atoms.

13. Liquid-crystalline medium according to one or more of Claims 1 to 12, **characterised in that** it additionally comprises one or more compounds of the formulae 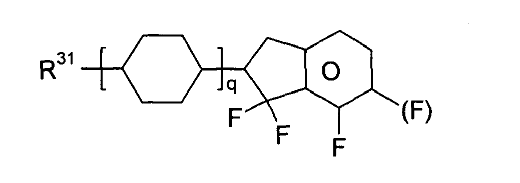 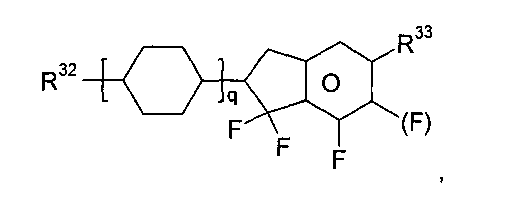 in which
R³¹⁻³² have the meanings indicated for R¹¹ in Claim 1,
R³³ denotes CH₃, C₂H₅ or n-C₃H₇, and
q denotes 1 or 2.

14. Liquid-crystalline medium according to one or more of Claims 1 to 13, **characterised in that** it additionally comprises one or more compounds of the formulae 01 and/or 02, 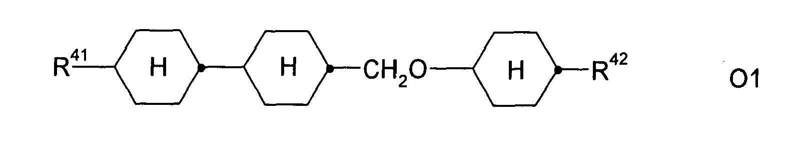 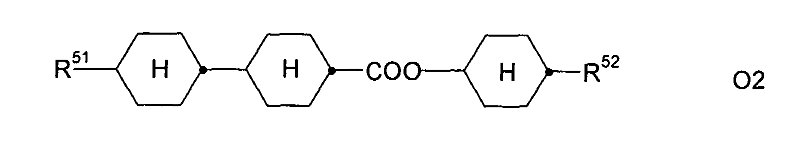 in which R⁴¹, R⁴², R⁵¹ and R⁵² have the meanings indicated for R¹¹ in Claim 1.

15. Liquid-crystalline medium according to one or more of Claims 1 to 14, **characterised in that** it comprises or consists of
2-20% by weight of one or more compounds of the formula I and
20-80% by weight of one or more compounds of the formulae IIA and/or IIB.

16. Process for the preparation of a liquid-crystalline medium according to one or more of Claims 1 to 15, **characterised in that** one or more compounds of the formula I are mixed with one or more further meso-genic compounds.

17. Use of a liquid-crystalline medium according to one or more of Claims 1 to 15 in an electro-optical display.

18. Electro-optical display having active-matrix addressing based on the ECB, FFS or IPS effect, **characterised in that** it contains, as dielectric, a liquid-crystalline medium according to one or more of Claims 1 to 15.

## Revendications

1. Milieu cristallin liquide basé sur un mélange de composés polaires présentant une anisotropie diélectrique négative, **caractérisé en ce qu'**il comprend au moins un composé de la formule I, 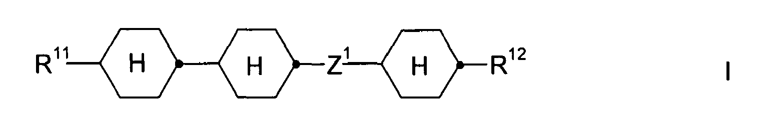 dans laquelle
R¹¹ et R¹² représentent, chacun indépendamment de l'autre, un radical alkyle ou alkényle comportant jusqu'à 15 atomes de C, lequel est non substitué, monosubstitué par CN ou CF₃ ou au moins monosubstitué par halogène, où, en outre, un ou plusieurs groupes CH₂ dans ces radi- caux peuvent être remplacés par -O-, -S-, 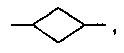 -C≡C-, -OC-O- ou -O-CO- de telle sorte que des atomes de O ne soient pas liés directement les uns aux autres, étant entendu qu'au moins l'un des radicaux R¹¹ et R¹² représente alkényle comportant de 2 à 6 atomes de C, et
Z¹ représente -CH=CH- ou une liaison simple,
et
un ou plusieurs composés des formules IIA et/ou IIB, 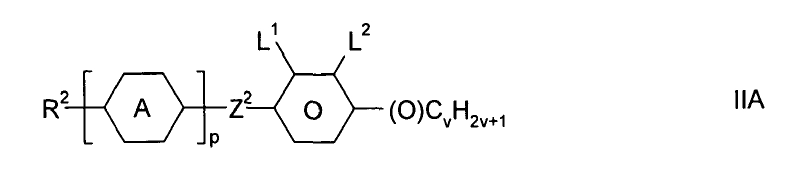 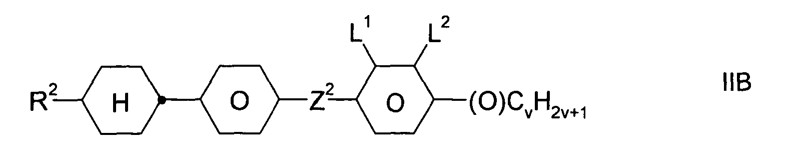 dans lesquelles 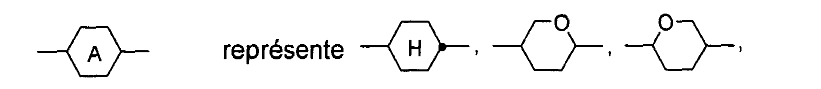 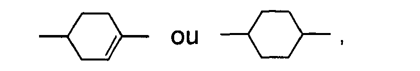
R² représente un radical alkyle ou alkényle comportant jusqu'à 15 atomes de C, lequel est non substitué, monosubstitué par CN ou CF₃ ou au moins mono- substitué par halogène, où, en outre, un ou plusieurs groupes CH₂ dans ces radicaux peuvent être rempla- cés par -O-, -S-, 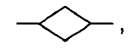 -C≡C-, -OC-O- ou -O-CO-
de telle sorte que des atomes de O ne soient pas liés directement les uns aux autres,
Z² représente une liaison simple, -CH=CH- ou -CH₂CH₂-,
p représente 1 ou 2, et
L¹ et L² représentent, chacun indépendamment de l'autre, F, CI, OCF₃, CF₃, CH₃, CH₂F, CHF₂,
v représente 1 à 6.

2. Milieu cristallin liquide selon la revendication 1, **caractérisé en ce qu'**il comprend de façon additionnelle un ou plusieurs composés des formules B-1 et/ou B-2, 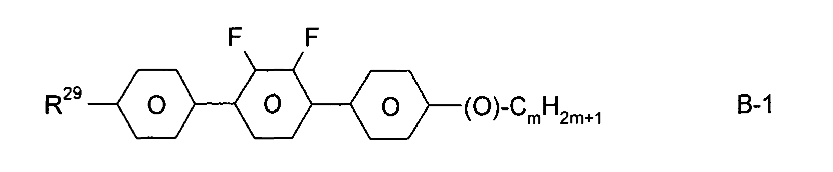 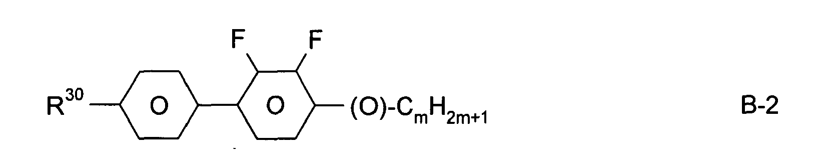 dans lesquelles
R²⁹⁻³⁰ et présentent les significations indiquées pour R¹¹ dans la revendication 1,
m représente 1-6.

3. Milieu cristallin liquide selon la revendication 1 ou 2, **caractérisé en ce qu'**il comprend de façon additionnelle un ou plusieurs composés de la formule III, 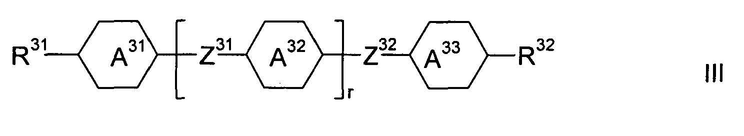 dans laquelle
R³¹ et R³² représentent, chacun indépendamment de l'autre, un radical alkyle ou alkényle comportant jusqu'à 15 atomes de C, lequel est non substitué, monosubstitué par CN ou CF₃ ou au moins monosubstitué par halogène, où, en outre, un ou plusieurs groupes CH₂ dans ces radi- caux peuvent être remplacés par -O-, -S-, 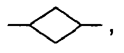 -C≡C-, -OC-O- ou -O-CO- de telle sorte que des atomes de O ne soient pas liés directement les uns aux autres, 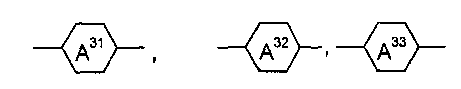 représentent, chacun indépendamment des autres, 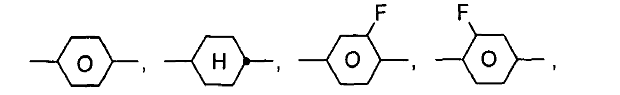 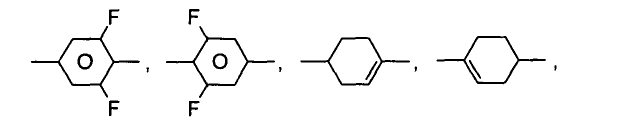 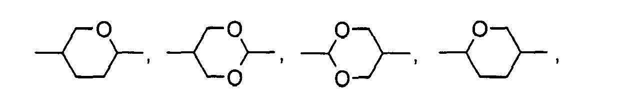 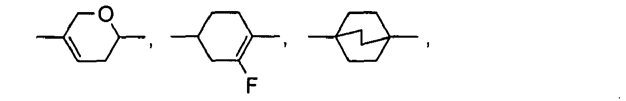
r représente 0, 1 ou 2,
Z³¹ et Z³² représentent, chacun indépendamment de l'autre, une liaison simple, -CH₂CH₂-, -C≡C-, -CH=CH-, -CF₂O-, -OCF₂-, -CF=CF-, -CF=CH-, -CH=CF-, -CH₂CF₂-, -CF₂CH₂-, -COO-, -OCO-, -CH₂O-, -OCH₂-, -(CH₂)₄-,
où les composés de la formule III ne sont pas identiques aux composés de la formule I.

4. Milieu cristallin liquide selon une ou plusieurs des revendications 1 à 3, **caractérisé en ce qu'**il comprend un, deux, trois, quatre composés ou plus de la formule I.

5. Milieu cristallin liquide selon une ou plusieurs des revendications 1 à 4, **caractérisé en ce que** la proportion de composés de la formule I dans le mélange pris dans sa globalité est d'au moins 2% en poids.

6. Milieu cristallin liquide selon une ou plusieurs des revendications 1 à 5, **caractérisé en que** la proportion de composés des formules IIA et/ou IIB dans le mélange pris dans sa globalité est d'au moins 20% en poids.

7. Milieu cristallin liquide selon une ou plusieurs des revendications 1 à 6, **caractérisé en ce que** la proportion de composés de la formule III dans le mélange pris dans sa globalité est d'au moins 3% en poids.

8. Milieu cristallin liquide selon une ou plusieurs des revendications 1 à 7, **caractérisé en ce qu'**il comprend au moins un composé choisi parmi le groupe des composés des formules I1a à I1g et I2a à I2h,

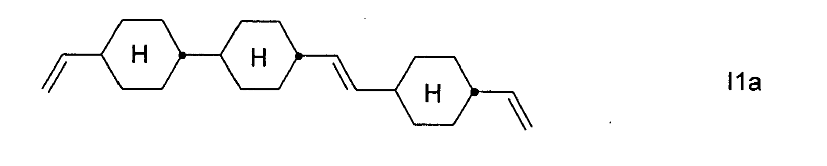

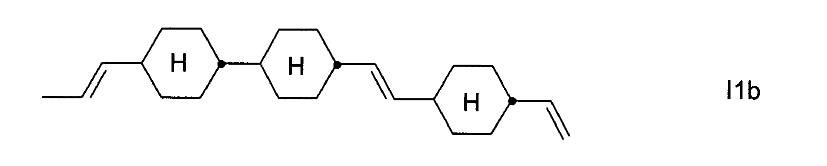

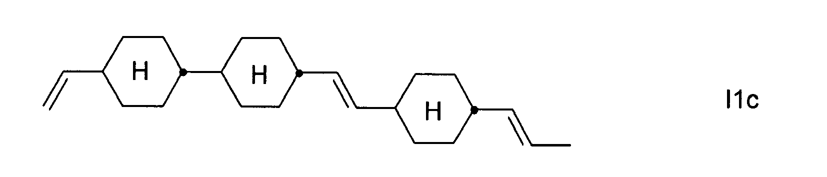

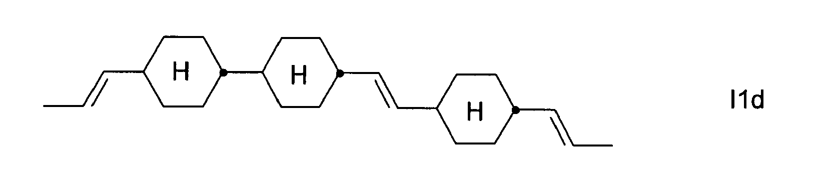

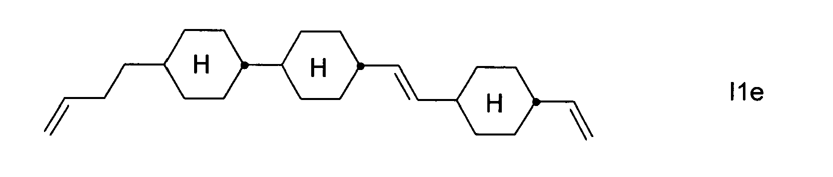

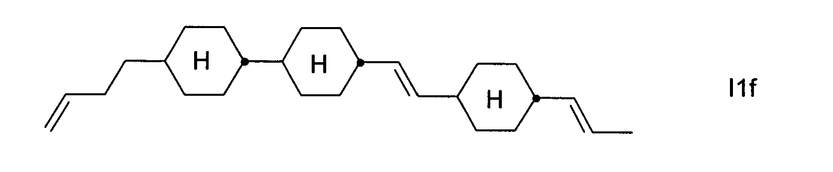

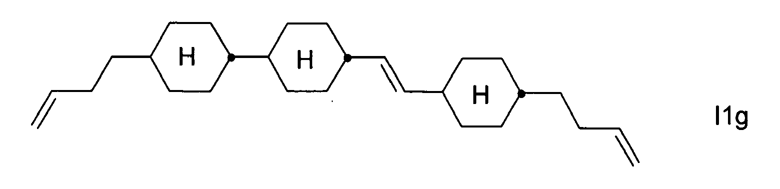

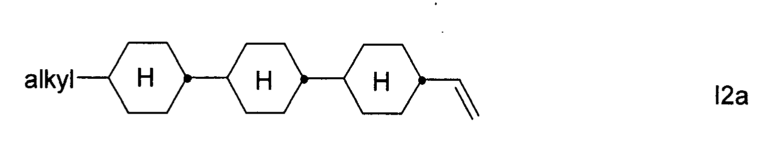

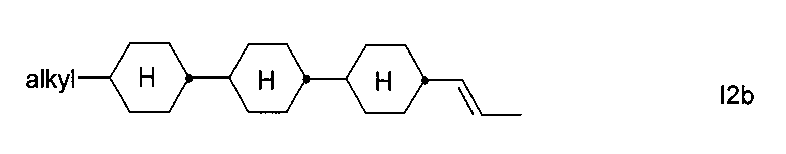

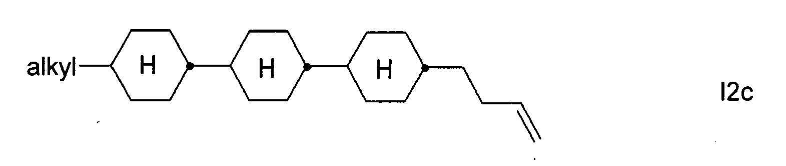

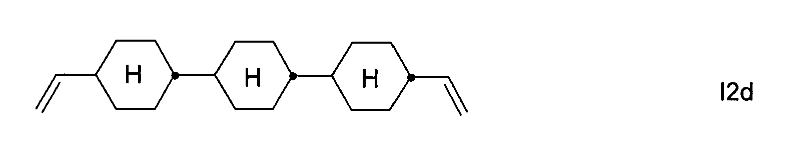

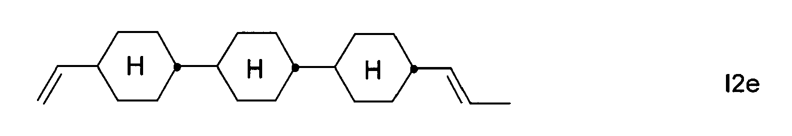

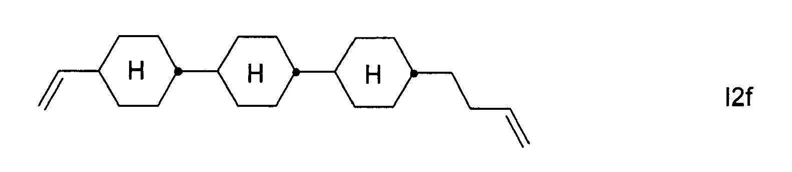

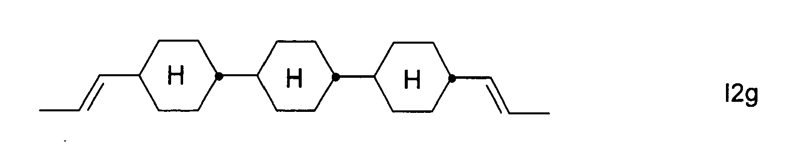

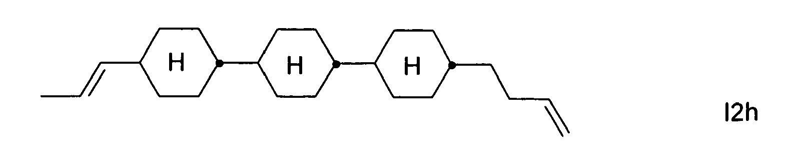

9. Milieu cristallin liquide selon une ou plusieurs des revendications 1 à 8, **caractérisé en ce qu'**il comprend un ou plusieurs composés des formules IIA-1 à IIA-18, 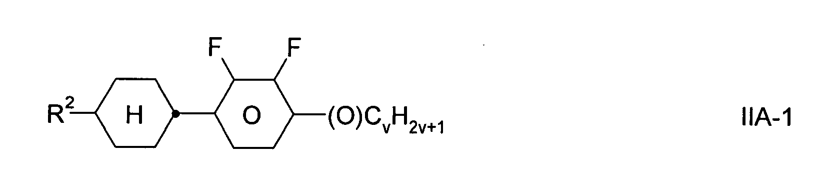 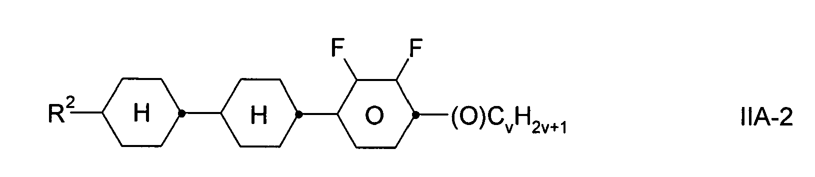 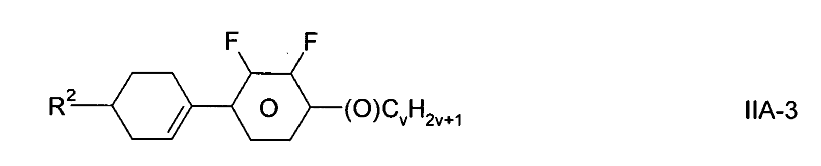 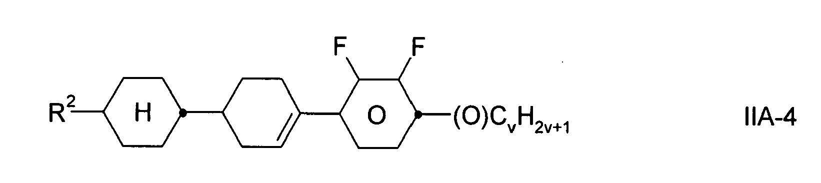 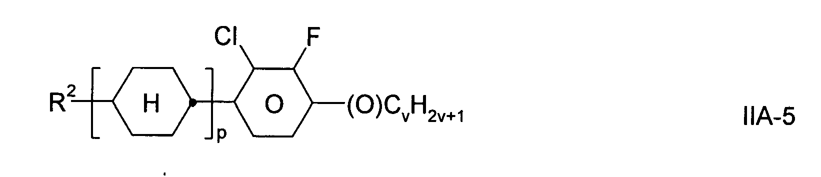 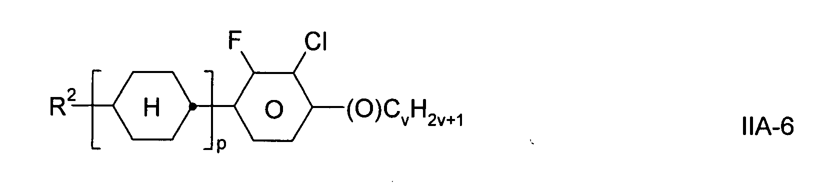 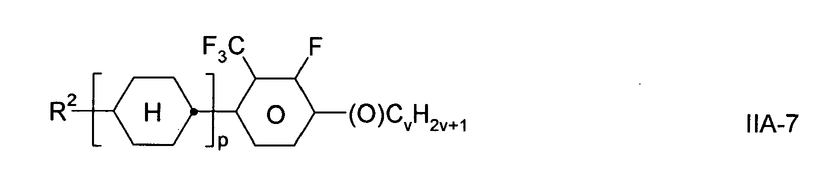 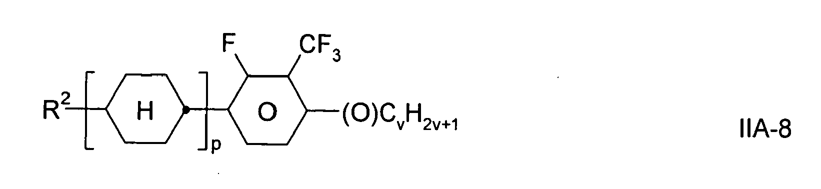 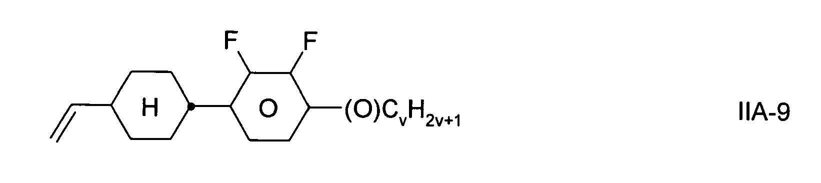 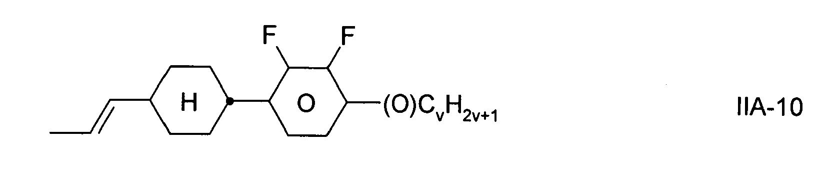 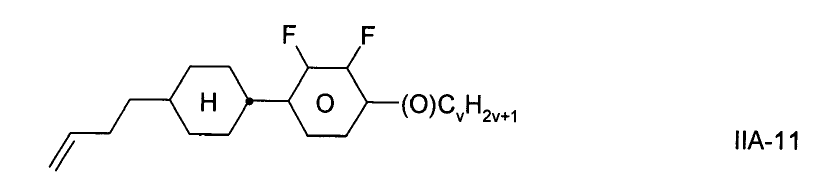 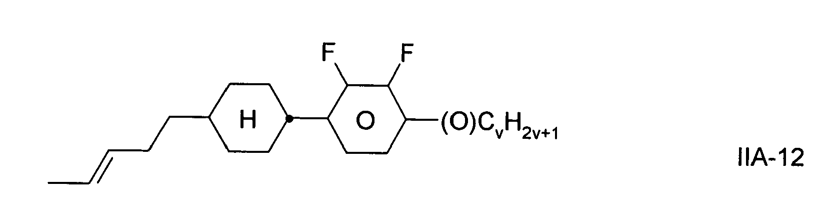 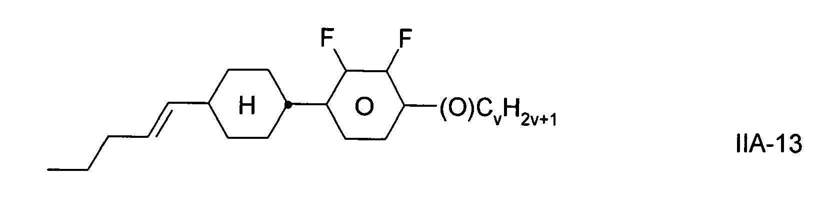 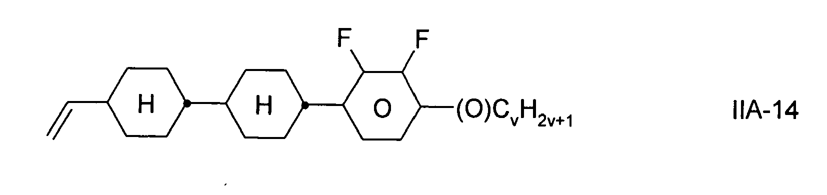 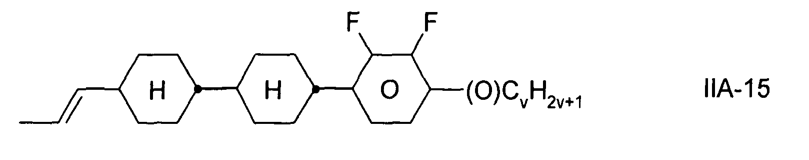 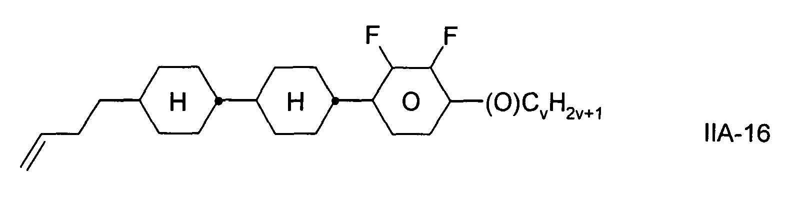 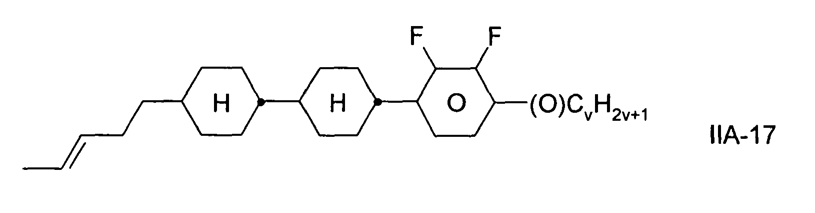 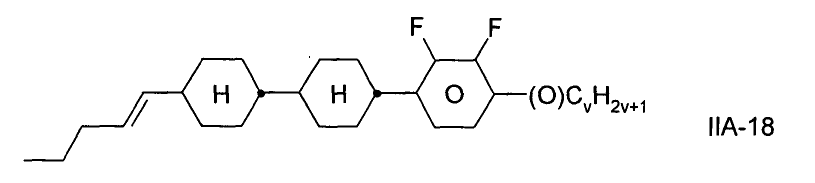 dans lesquelles R² et v présentent les significations indiquées dans la revendication 1.

10. Milieu cristallin liquide selon une ou plusieurs des revendications 1 à 9, **caractérisé en ce qu'**il comprend un ou plusieurs composés des formules IIB-1 à IIB-7, 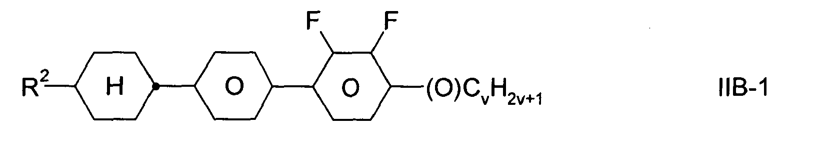 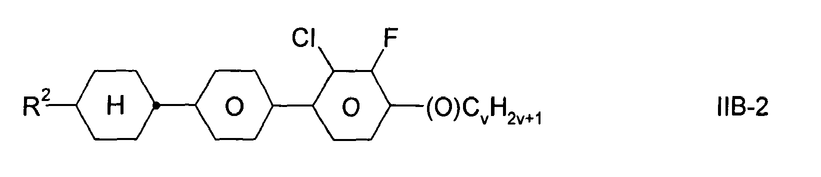 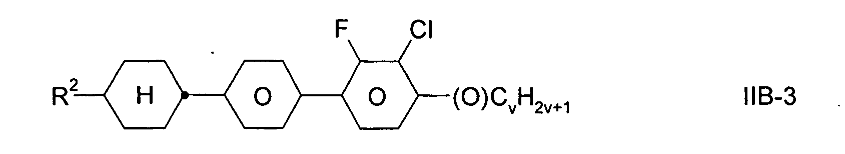 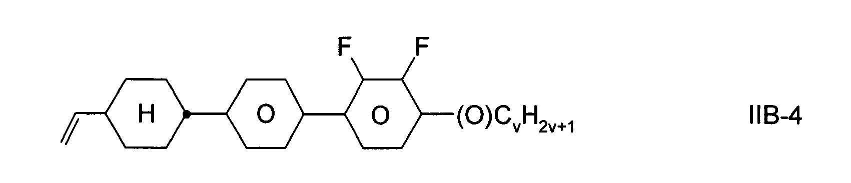 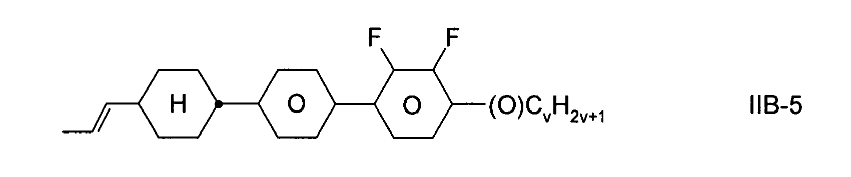 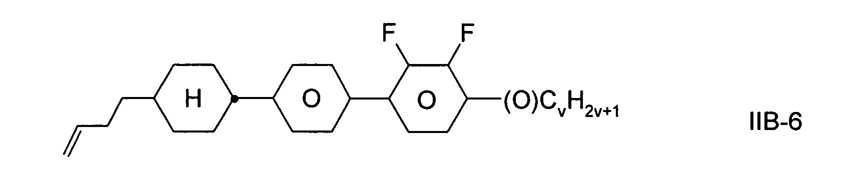 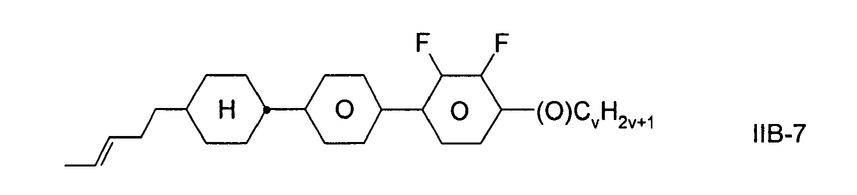 dans lesquelles R² et v présentent les significations indiquées dans la revendication 1.

11. Milieu cristallin liquide selon une ou plusieurs des revendications 1 à 10, **caractérisé en ce que** L¹ et L² dans les composés des formules IIA et/ou IIB représentent chacun fluor.

12. Milieu cristallin liquide selon une ou plusieurs des revendications 1 à 11, **caractérisé en ce qu'**il comprend un ou plusieurs composés choisis parmi les formules IIIa à IIIq, 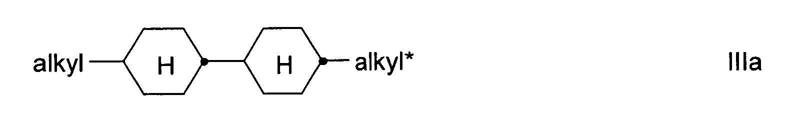 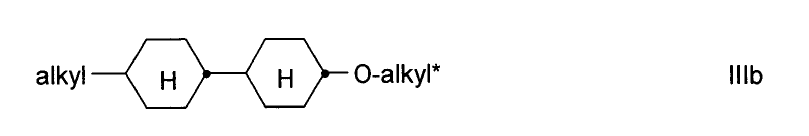 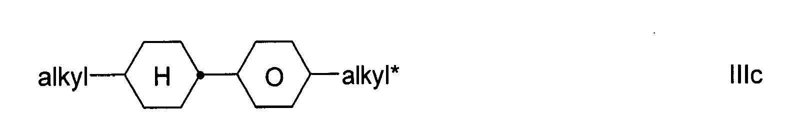 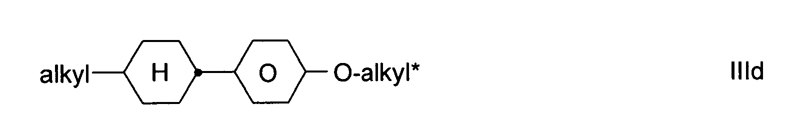 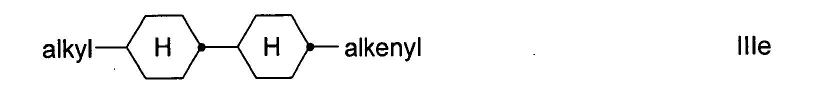 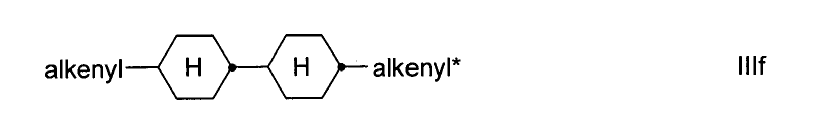 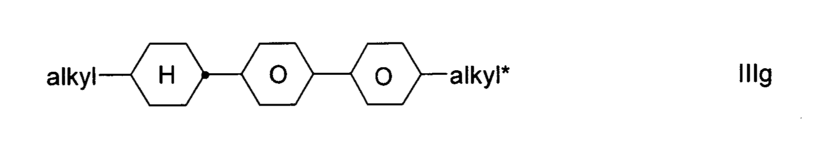 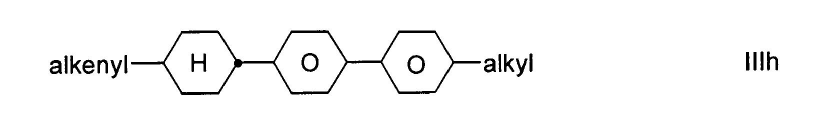 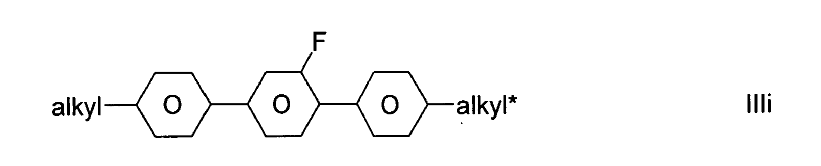 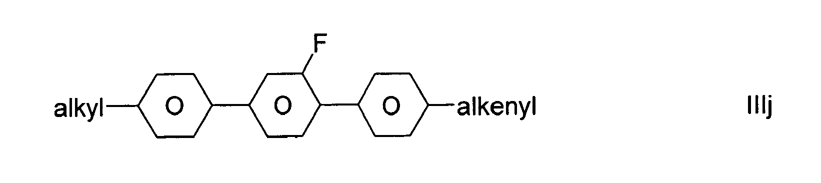 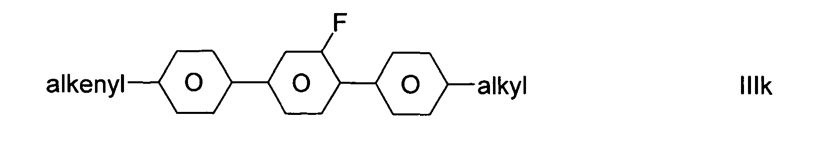 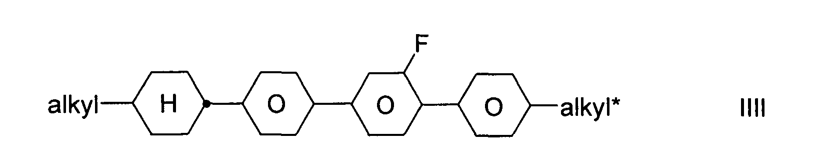 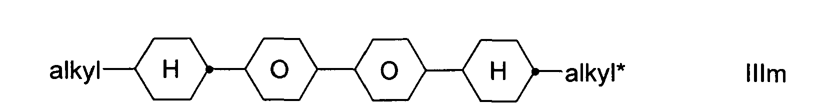 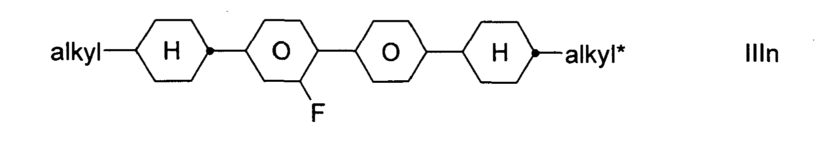 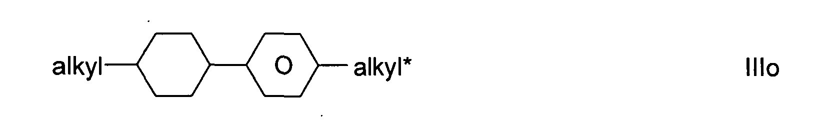 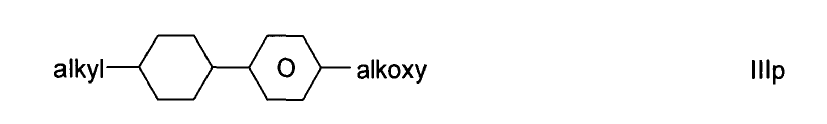 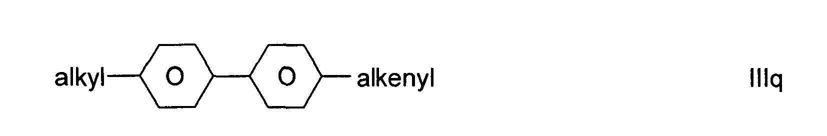 dans lesquelles
alkyl et alkyl* représentent, chacun indépendamment de l'autre, un radical alkyle en chaîne droite comportant 1-6 atomes de C,
alkoxy représente un radical alcoxy en chaîne droite compor- tant 1-6 atomes de C, et
alkenyl et alkenyl* représentent, chacun indépendamment de l'autre, un radical alkényle en chaîne droite comportant 2-6 atomes de C.

13. Milieu cristallin liquide selon une ou plusieurs des revendications 1 à 12, **caractérisé en ce qu'**il comprend de façon additionnelle un ou plusieurs composés des formules 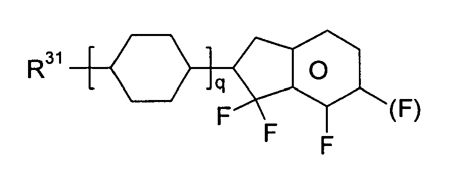 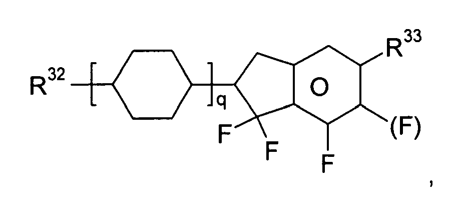 dans lesquelles
R³¹⁻³² présentent les significations indiquées pour R¹¹ dans la revendication 1,
R³³ représente CH₃, C₂H₅ ou n-C₃H₇, et
q représente 1 ou 2.

14. Milieu cristallin liquide selon une ou plusieurs des revendications 1 à 13, **caractérisé en ce qu'**il comprend de façon additionnelle un ou plusieurs composés des formules O1 et/ou O2, 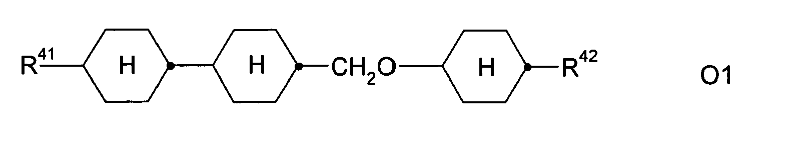 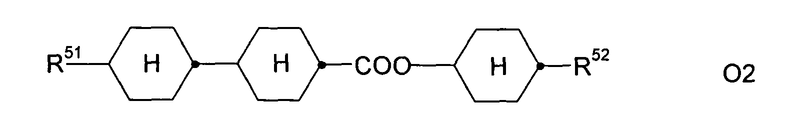 dans lesquelles R⁴¹, R⁴², R⁵¹ et R⁵² présentent les significations indiquées pour R¹¹ dans la revendication 1.

15. Milieu cristallin liquide selon une ou plusieurs des revendications 1 à 14, **caractérisé en ce qu'**il comprend ou est constitué par
2-20% en poids d'un ou de plusieurs composés de la formule I et
20-80% en poids d'un ou de plusieurs composés des formules IIA et/ou IIB.

16. Procédé pour la préparation d'un milieu cristallin liquide selon une ou plusieurs des revendications 1 à 15, **caractérisé en ce qu'**un ou plusieurs composés de la formule I sont mélangés avec un ou plusieurs autres composés mésogènes.

17. Utilisation d'un milieu cristallin liquide selon une ou plusieurs des revendications 1 à 15 dans un affichage électro-optique.

18. Affichage électro-optique présentant un adressage par matrice active basé sur l'effet ECB, FFS ou IPS, **caractérisé en ce qu'**il contient, en tant que diélectrique, un milieu cristallin liquide selon une ou plusieurs des revendications 1 à 15.
